(19) Europäisches Patentamt
European Patent Office
Office européen des brevets

(11) EP 2 128 865 B1

(12) **EUROPEAN PATENT SPECIFICATION**

(45) Date of publication and mention of the grant of the patent:
**29.02.2012 Bulletin 2012/09**

(21) Application number: **09161660.7**

(22) Date of filing: **02.06.2009**

(51) Int Cl.:
***G11B 7/245*** *(2006.01)*

(54) **Optical recording composition, holographic recording medium, and method of recording and reproducing information**

Optische Aufzeichnungszusammensetzung, holografisches Aufzeichnungsmedium sowie Verfahren zur Aufzeichnung und Wiedergabe von Informationen

Composition d'enregistrement optique, support d'enregistrement holographie, et procédé d'enregistrement et reproduction d'informations

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **30.05.2008 JP 2008142875**
**18.09.2008 JP 2008238837**

(43) Date of publication of application:
**02.12.2009 Bulletin 2009/49**

(73) Proprietor: **FUJIFILM Corporation**
**Minato-ku**
**Tokyo 106-0031 (JP)**

(72) Inventors:
- **Yamada, Satoru**
  **Shizuoka 421-0396 (JP)**
- **Watanabe, Toru**
  **Kanagawa 258-8577 (JP)**

(74) Representative: **HOFFMANN EITLE**
**Patent- und Rechtsanwälte**
**Arabellastraße 4**
**81925 München (DE)**

(56) References cited:
**WO-A1-96/19471**
**WO-A1-03/023519**
**JP-A- 2005 084 262**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 128 865 B1

## Description

BACKGROUND OF THE INVENTION

FIELD OF THE INVENTION

The present invention relates to an optical recording composition comprising a cyclic allyl sulfide compound, more particularly, a cyclic allyl sulfide compound that has substantial absorption in the wavelength region of a recording light and is suited as a recording compound in a volume holographic recording medium having a relatively thick recording layer.
The present invention further relates to a holographic recording medium comprising a recording layer comprising the cyclic allyl sulfide compound and a method of recording and reproducing information using the above medium.

DISCUSSION OF THE BACKGROUND

Holographic optical recording media based on the principle of the holograph have been developed. Recording of information on holographic optical recording media is carried out by superposing an informing light containing image information and a reference light in a recording layer comprised of a photosensitive composition to write an interference fringe thus formed in the recording layer. During the reproduction of information, a reference light is directed at a prescribed angle into the recording layer in which the information has been recorded, causing optical diffraction of the reference light by the interference fringe which has been formed, reproducing the informing light.
In recent years, volume holography, and, more particularly, digital volume holography, have been developed to practical levels for ultrahigh-density optical recording and have been garnering attention. Volume holography is a method of writing interference fringes three-dimensionally by also actively utilizing the direction of thickness of an optical recording medium. It is advantageous in that increasing the thickness permits greater diffraction efficiency and multiplexed recording increases the recording capacity. Digital volume holography is a computer-oriented holographic recording method in which the image data being recorded are limited to a binary digital pattern while employing a recording medium and recording system similar to those of volume holography. In digital volume holography, for example, image information such as an analog drawing is first digitized and then expanded into two-dimensional digital pattern information, which is recorded as image information. During reproduction, the digital pattern information is read and decoded to restore the original image information, which is displayed. Thus, even when the signal-to-noise (S/N) ratio deteriorates somewhat during reproduction, by conducting differential detection or conducting error correction by encoding the two-dimensional data, it is possible to reproduce the original data in an extremely faithful manner (see Japanese Unexamined Patent Publication (KOKAI) Heisei No. 11-311936 or English language family member US 2002/0114027 A1).
For example, Published Japanese Translation of a PCT International Application (TOKUHYO) No. 2005-502918 or English language family member US 2003/0087104 A1 disclose the use of a urethane matrix and a phenyl acrylate derivative in a holographic optical recording medium of the photopolymer type. However, with common photopolymers, the polymerization of monomers is accompanied by volumetric shrinkage. Volumetric shrinkage causes a reduction in recording capacity. U.S. Patent No- 4,959,284 proposes the formation of a recording layer using radical ring-opening polymerization to enhance storage capacity. However, even this does not afford adequate storage capacity. The volumetric shrinkage is problematic in that it distorts the recording interference fringe, producing errors during data input and output and compromising recording and reproducing precision.
As set forth above, the holographic recording media that have been proposed thus far still do not afford a recording capacity that is adequate in practical terms. Further increase in capacity and a reduction in volumetric shrinkage are desired.

SUMMARY OF THE INVENTION

An aspect of the present invention provides for an optical recording composition comprising an optical recording compound suited to high-sensitivity digital volume holography with large storage capacity, and for a holographic recording medium permitting ultrahigh-density optical recording using the above optical recording compound.
As the result of extensive research, the present inventors discovered that the use of the cyclic allyl sulfide compound denoted by general formula (I) below, having a high molar absorbance coefficient in the wavelength region of a recording light, could provide a homographic recording medium that underwent little volumetric shrinkage and permitted high-sensitivity recording. The present invention was devised on that basis.
An aspect of the present invention relates to an optical recording composition comprising at least one optical recording compound, wherein the optical recording compound is denoted by general formula (I) and exhibits a molar absorbance coefficient of equal to or greater than 5,000 mole 1 $cm^{-1}$ at at least one wavelength within an absorption

spectrum ranging from 200 to 1,000 nm:

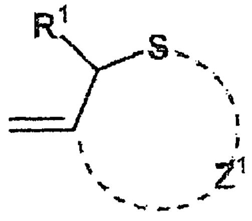

General formula (I)

wherein, in general formula (I), $R^1$ denotes a hydrogen atom or an alkyl group, and $Z^1$ denotes an atom group, the atom group forming a ring structure with a sulfur atom and a carbon atom which are adjacent to the atom group, and a carbon atom bonded to the sulfur atom.

The wavelength at which the optical recording compound exhibits a molar absorbance coefficient of equal to or greater than 5,000 mole·1·$cm^{-1}$ may be a maximum absorption wavelength of the optical recording compound.

The optical recording compound may exhibit a molar absorbance coefficient of equal to or smaller than 100 mole·1·$cm^{-1}$ at at least one wavelength within an absorption spectrum ranging from 350 to 750 nm.

The wavelength at which the optical recording compound exhibits a molar absorbance coefficient of equal to or greater than 5,000 mole·1·$cm^{-1}$ may be present within an absorption spectrum ranging from 200 to 500 nm.

General formula (I) may be general formula (II):

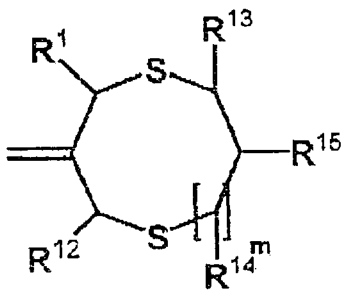

General formula (II)

wherein, in general formula (II), $R^1$ is defined in the same manner as in general formula (I), $R^{12}$ denotes a hydrogen atom or an alkyl group, each of $R^{13}$, $R^{14}$ and $R^{15}$ independently denotes a hydrogen atom, alkyl group, aryl group, heterocyclic group, alkoxy group, aryloxy group, alkylthio group, arylthio group, alkoxycarbonyl group, aryloxycarbonyl group, acyloxy group, acylamino group, sulfonylamino group, amino group, acyl group or halogen group, and m denotes 0 or 1.

It may be one embodiment for general formula (II) that each of $R^1$ and $R^{12}$ independently denotes a hydrogen atom or methyl group, and each of $R^{13}$, $R^{14}$ and $R^{15}$ independently denotes a hydrogen atom, alkyl group, aryl group, alkoxy group, aryloxy group, alkoxycarbonyl group, aryloxycarbonyl group, acyloxy group, acylamino group, amino group or acyl group.

It may be one embodiment for general formula (II) that both of $R^1$ and $R^{12}$ denote a hydrogen atom, each of $R^{13}$, Rand $R^{15}$ independently denotes a hydrogen atom, alkyl group, aryl group, alkoxy group, aryloxy group or acyloxy group, and m denotes 1.

General formula (I) may be general formula (III):

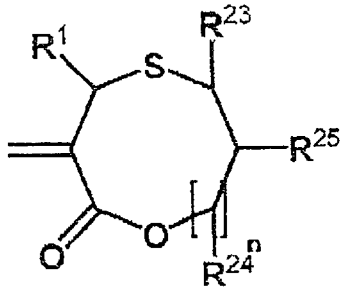

General formula (III)

wherein, in general formula (III), $R^1$ is defined in the same manner as in general formula (I), each of $R^{23}$, $R^{24}$ and $R^{25}$ independently denotes a hydrogen atom, alkyl group, aryl group, heterocyclic group, alkoxy group, aryloxy group, alkylthio group, arylthio group, alkoxycarbonyl group, aryloxycarbonyl group, acyloxy group, acylamino group, sulfonylamino group, amino group, acyl group or halogen group, and n denotes 0 or 1.

It may be one embodiment for general formula (III) that $R^1$ denotes a hydrogen atom or methyl group, and each of $R^{23}$, $R^{24}$ and $R^{25}$ independently denotes a hydrogen atom, alkyl group, aryl group, group, aryloxy group, alkoxycarbonyl group, aryloxycarbonyl group, aryloxy group, acylamino group, amino group or acyl group.

It may be one embodiment for general formula (III) that $R^1$ denotes a hydrogen atom or methyl group, each of $R^{23}$, $R^{24}$ and $R^{25}$ independently denotes a hydrogen atom, alkyl group, aryl group, alkoxy group, aryloxy group, or acyloxy group, and n denotes 0.

The optical recording compound may comprise at least one partial structure denoted by general formula (C-1), (C-2), (C-3), (C-4), (C-5), or (C-6):

(C-1)

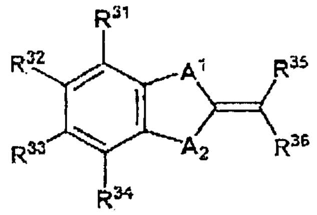

(C-2)

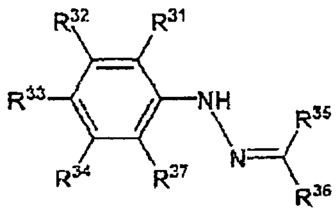

(C-3)

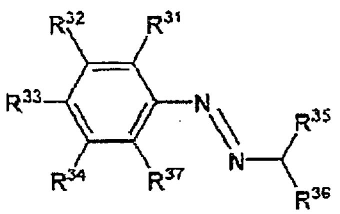

(C-4)

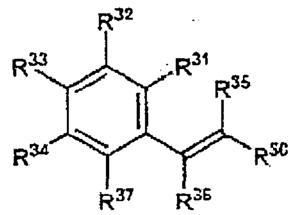

(C-5)

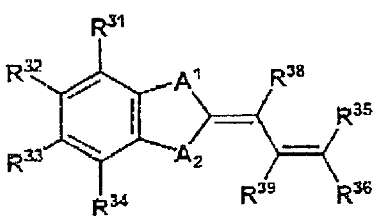

(C-6)

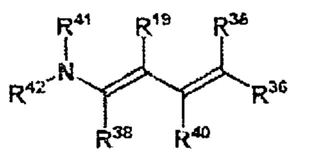

wherein, in the above formulas, each of $R^{31}$, $R^{32}$, $R^{33}$, $R^{34}$, and $R^{37}$ independently denotes a hydrogen atom, alkyl group, aryl group, heterocyclic group, alkoxy group, aryloxy group, alkoxy carbonyl group, aryloxycarbonyl group, acyl group, sulfonyl group, carbamoyl group, sulfamoyl group, amino group, acyloxy group, acylamino, group, hydroxyl group, carboxylic acid group, sulfonic acid group, halogen atom or linking group; each of $A^1$ and $A^2$ independently denotes

$-CR^{43}R^{44}-$, -O-, $NR^{45}$-, -S-, or -C(=O)-; each of $R^{43}$, $R^{44}$, and $R^{45}$ independently denotes a hydrogen atom, alkyl group, aryl group, or linking group; each of $R^{35}$ and $R^{36}$ independently denotes an electron-withdrawing group or linking group, and $R^{35}$ and $R^{36}$ may bond together to form a cyclic structure; each of $R^{38}$, $R^{39}$, and $R^{40}$ independently denotes a hydrogen atom, alkyl group, or linking group; each of $R^{41}$ and $R^{42}$ independently denotes a hydrogen atom, alkyl group, aryl group, heterocyclic group, acyl group, sulfonyl group, or linking group; and each of partial structures (C-1) to (C-6) comprises one or more linking groups.

The optical recording composition may be a holographic recording composition.

The optical recording composition may further comprise at least one thermosetting compound.

The thermosetting compound may comprise at least one polyfunctional isocyanate and at least one polyfunctional alcohol.

The optical recording composition may further comprise at least one photo-induced radical polymerization initiator.

The photo-induced radical polymerization initiator may be a compound denoted by general formula (IV):

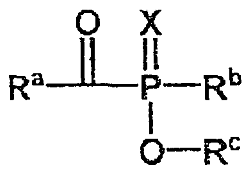

General Formula (IV)

wherein, in general formula (IV), each of $R^a$, $R^b$ and $R^c$ independently denotes an alkyl group, aryl group or heterocyclic group, and X denotes an oxygen atom or sulfur atom.

A further aspect of the present invention relates to a holographic recording medium comprising a recording layer comprising at least one optical recording compound mentioned above.

The recording layer may further comprise at least one thermosetting compound.

The thermosetting compound may comprise at least one polyfunctional isocyanate and at least one polyfunctional alcohol.

The recording layer may further comprise at least one photo-induced radical polymerization initiator.

The photo-induced radical polymerization initiator may be the above compound denoted by general formula (IV).

The recording layer may be formed with the above optical recording composition.

A still further aspect of' the present invention relates to a method of recording and reproducing information comprising:

irradiating the above holographic recording medium with an informing light and a reference light to form an interference image in the recording layer comprised in the holographic recording medium; and
irradiating the holographic recording medium in which the interference image has been formed with a reproduction light.

The method of recording and reproducing information may employ a light with a wavelength nm satisfying the following equation (1) as the reproduction light:

$$(\lambda_3 - 100) \le \lambda_1 < \lambda_3 \cdots (1)$$

wherein $\lambda_1$ is a wavelength present within an absorption spectrum ranging from 200 to 1,000 mn, at which the optical recording compound comprised in the recording layer of the holographic recording medium exhibits a molar absorbance coefficient of equal to or greater than 5,000 $mole \cdot 1 \cdot cm^{-1}$.

The present invention can provide a holographic recording medium that undergoes little volumetric shrinkage and permit high-sensitivity recording and reproduction. The holographic recording medium of the present invention permits ultrahigh-density recording and is particularly suited as a recording medium for digital volume holography permitting the use of inexpensive lasers and capable of reducing the time required for writing.

Other exemplary embodiments and advantages of the present invention may be ascertained by reviewing the present disclosure and the accompanying drawings.

BRIEF DESCRIPTION OF THE DRAWINGS

The present invention will be described in the following text by the exemplary, non-limiting embodiments shown in the figures, wherein:

Fig. 1 is a schematic cross-sectional view of an example of a holographic recording medium according to a first implementation embodiment;
Fig. 2 is a schematic cross-sectional view of an example of a holographic recording medium according to a second implementation embodiment;
Fig. 3 is a drawing descriptive of an example of an optical system permitting recording and reproducing of information on a holographic recording medium;
Fig. 4 is a block diagram showing an example of the overall configuration of a recording and reproducing device suited to use in recording and reproducing information, on the holographic recording medium of the present invention; and
Fig. 5 shows a conceptual diagram of an FPR model.

Explanations of symbols in the drawings are as follows:

| | |
|---|---|
| 1 | Lower substrate |
| 2 | Reflective film |
| 3 | Servo pit pattern |
| 4 | Recording layer |
| 5 | Upper substrate |
| 6 | Filter layer |
| 7 | Second gap layer |
| 8 | First gap layer |
| 12 | Objective lens |
| 13 | Dichroic mirror |
| 14 | Detector . |
| 15 | 1/4 wavelength plate |
| 16 | Polarizing plate |
| 17 | Half minor |
| 20 | Holographic recording medium |
| 21 | Holographic recording medium |
| 22 | Holographic recording medium |
| 31 | Pick-sup |
| 81 | Spindle |
| 82 | Spindle motor |
| 83 | Spindle servo circuit |
| 84 | Driving device |
| 85 | Detection circuit |
| 86 | Focus servo circuit |
| 87 | Tracking servo circuit |
| 88 | Slide servo circuit |
| 89 | Signal processing circuit |
| 90 | Controller |
| 91 | Operation element |
| 100 | Optical recording and reproducing device |
| A | Entry and exit surface |
| FE | Focus error signal |
| TE | Tracking error signal |
| RF | Reproduction signal |

DETAILED DESCRIPTIONS OF THE EMBODIMENTS

The following preferred specific embodiments are, therefore, to be construed as merely illustrative, and non-limiting to the remainder of the disclosure in any way whatsoever. In this regard, no attempt is made to show structural details of the present invention in more detail than is necessary for fundamental understanding of the present invention;

the description taken with the drawings making apparent to those skilled in the art how several forms of the present invention may be embodied in practice.

OPTICAL RECORDING COMPOSITION

The optical recording composition of the present invention comprises at least one optical recording compound in the form of a cyclic allyl sulfide compound denoted by general formula (I) below and exhibiting a molar absorbance coefficient of equal to or greater than 5,000 mole·1·cm$^{-1}$ at at least one wavelength within an absorption spectrum ranging from 200 to 1,000 nm. The cyclic allyl sulfide compound can be employed as a recording material in various recording systems in which information is recorded by irradiation with light, such as resist materials, printing materials, micro-optical modeling materials, photosensitive materials for optical surface relief, and holographic materials for three-dimensional display. Among these, it is desirably employed as an optical recording compound such as a holographic recording compound, and is particularly suitable as a volume holographic recording compound. As set forth above, holographic recording is a method of recording information by superposing an informing light containing information and a reference light in a recording layer to write an interference fringe thus formed in the recording layer. Volume holographic recording is a method of recording information in holographic recording in which a three-dimensional interference image is written in the recording layer. In the present invention, the phrase "holographic recording compound" refers to a compound that permits the recording of an interference fringe as refractive index modulation, either directly or indirectly, by irradiating light to record information. The optical recording compound denoted by general formula (I) can undergo a polymerization reaction, either directly or through the action of a photopolymerization initiator, when irradiated with light, thereby permitting the recording of interference fringes as refractive index modulation.
The above optical recording compound will be described in greater detail below.

The optical recording compound exhibits a molar absorbance coefficient of equal to or greater than 5,000 mole·1·cm$^{-1}$ at at least one wavelength (referred to as "$\lambda_1$", hereinafter) within an absorption spectrum ranging from 200 to 1,000 nm. The compound denoted by general formula (I) can undergo little volumetric shrinkage due to its structure. Among such compounds, those having the above wavelength $\lambda_1$ permits further increase in recording capacity. The molar absorbance coefficient at $\lambda_1$ is preferably equal to or greater than 10,000 mole·1·cm$^{-1}$. The upper limit thereof is not specifically limited, and may be about 200,000 mole·1·cm$^{-1}$. From the perspective of shifting the recording light toward a shorter wavelength to increase recording capacity, the wavelength, $\lambda_1$ is preferably present within an absorption spectrum ranging from 200 to 500 nm.

The maximum absorption of the optical recording composition may be at a wavelength of other than $\lambda_1$, but, from the perspective of increase in recording capacity, is preferably at $\lambda_1$. The molar absorbance coefficient at the maximum absorption wavelength is preferably equal to or greater than 10,000 mole·1·cm$^{-1}$ more preferably equal to or greater than 30,000 mole·l·cm$^{-1}$, and further preferably, equal to or greater than 100,000 mole·l·cm$^{-1}$. The upper limit of the molar absorbance coefficient at the maximum absorption is not specifically limited, and can be about 200,000 mole·l·cm$^{-1}$, for example.

Wavelength $\lambda_1$ is preferably shorter than the wavelength of the light (reproduction light) used to reproduce information that has been recorded on a recording medium having a recording layer comprising the above optical recording compound. Specifically, when the wavelength of the reproduction light is denoted as $\lambda_3$, the following relation is preferably satisfied:

$$(\lambda_3 - 100) \leq \lambda_1 < \lambda_3.$$

Further, with the wavelength $_3$ of the reproduction light, the maximum absorption wavelength of the optical recording compound preferably satisfies:

$$(\lambda_3 - 70) \leq \text{maximum absorption wavelength} \leq (\lambda_3 - 20)$$

Wavelength $\lambda_3$ of the light (reproduction light) used to reproduce information recorded in a recording layer comprising the above optical recording compound preferably falls within a range of 350 to 750 nm, more preferably within a range of 400 to 550 nm. A laser beam having a wavelength of 405 nm or 532 mn is particularly preferable as the reproduction light. From the perspectives of high sensitivity and a high degree of multiplexed recording, the optical recording compound preferably does not have absorption at the wavelength of the reproduction light. In this context, the phrase "does not have absorption" means that the molar absorbance coefficient of the optical recording compound is equal to or less than 100 mole·l·cm$^{-1}$, is preferably equal to or less than 50 mole·l·cm$^{-1}$, and most preferably, is 0

mole·l·cm$^{-1}$,

That is, it is preferable for the optical recording compound to have a wavelength (wavelength $\lambda_2$ nm) at which the molar absorbance coefficient is equal to or less than 100 mole·l·cm$^{-1}$, preferably equal to or less than 50 mole·l·cm$^{-1}$, and more preferably, 0 mole·l·cm$^{-1}$, over an absorption spectrum ranging from 350 to 750 nm (preferably a range of 400 to 550 nm, more preferably 405 or 532 nm).

The present invention can achieve high sensitivity and a high degree of multiplexed recording by employing an optical recording compound in the form of a compound having such optimal absorption characteristics, among the compounds denoted by general formula (I).

In the present invention, the term "molar absorbance coefficient" means, for example, the molar absorbance coefficient in the form of a value measured with a spectrophotometer for the ultraviolet and visible regions for a solution obtained by dissolving the optical recording compound in a solvent that will dissolve monomers, such as methylene chloride, chloroform, methanol, or acetonitrile. Preferably, the molar absorbance coefficient is determined in the present invention using a solution of the optical recording compound in methylene chloride. In the present invention, the molar absorbance coefficient is suitably measured at a temperature of 25°C.

The above optical recording compounds will be described in greater detail below.

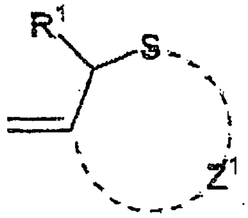

General formula (I)

In general formula (1), $Z^1$ denotes an atom group, the atom group forming a ring structure with a sulfur atom and a carbon atom which are adjacent to the atom group, and a carbon atom bonded to the sulfur atom. Methylene carbons are examples of a component element of the ring structure formed by $Z^1$. Examples in addition to methylene carbon are carbonyl groups, thiocarbonyl groups, oxygen atoms, sulfur atoms, and other divalent organic linking groups. The above ring structure may be comprised of a combination of such component elements. The number of members in the ring is desirably 6 to 9, preferably 6 to 8, and more preferably, 7 to 8. The number of methylene carbons in the ring structure is desirably 3 to 7, preferably 4 to 6, and more preferably, 4 to 5.

In general formula (I), $R^1$ denotes a hydrogen atom or alkyl group. The alkyl group denoted by $R_1$ can be linear or branched, and can be substituted or unsubstituted. The number of carbon atoms it comprises is desirably 1 to 20, preferably 1 to 10, and more preferably, 1 to 3. In the present invention, the term "number of carbon atoms" of a group means the number of carbon atoms excluding substituents for a group having substituents.

Examples of the alkyl group denoted by $R^1$ are: methyl, ethyl, normal propyl, isopropyl, normal butyl, isobutyl, tertiary butyl, pentyl, cyclopentyl, hexyl, cyclohexyl, heptyl, octyl, tertiary octyl, 2-ethylhexyl, decyl, dodecyl, octadecyl, 2,3-dibromopropyl, adamantyl, benzyl, and 4-bromobenzyl groups. These groups may be further substituted.

When the group denoted by $R^1$ in general formula (I) comprises one or more substituents, examples of the substituents are halogen atoms and alkyl, alkenyl, alkoxy, aryloxy, alkylthio, alkoxycarbonyl, aryloxycarbonyl, amino, acyl, alkylaminocarbonyl, arylaminocarbonyl, sulfonamide, cyano, carboxy, hydroxy, and sulfonic acid groups. Of these, halogen atoms and alkoxy and alkylthio groups are preferred. When a cyclic allyl sulfide compound denoted by general formula (I) is substituted as a substituent, a polyfunctional compound is denoted.

In general formula (I), it is desirable for $R^1$ to denote a hydrogen atom or an alkyl group; for the number of members in the ring structure formed by $Z^1$ with adjacent carbon atom and sulfur atom, and a carbon atom bonded to the sulfur atom to be 6 to 9; and for the atom group denoted by $Z^1$ to comprise a carbonyl group, oxygen atom, or sulfur atom, or some combination thereof, in addition to methylene carbon. It is preferable for $R^1$ to denote a hydrogen atom or an alkyl group; for the number of members in the ring structure formed by $Z^1$ with adjacent carbon atom and sulfur atom, and a carbon atom bonded to the sulfur atom to be 6 to 8; and for the atom group denoted by $Z_1$ to comprise a combination of a carbonyl, group and an oxygen atom, or a sulfur atom, in addition to methylene carbon. It is even more preferable for $R^1$ to denote a hydrogen atom or an alkyl group; for the number of members in the ring structure formed by $Z^1$ with adjacent carbon atom and sulfur atom, and a carbon atom bonded to the sulfur atoms to be 7 or 8; and for the atom group denoted by $Z^1$ to comprise a sulfur atom in addition to methylene carbon.

The compound denoted by general formula (I) is desirably a compound denoted by general formula (II) or (III), and preferably a compound denoted by general formula (II) from the perspective of recording characteristics.

Compounds denoted by general formulas (II) and (III) will be described below.

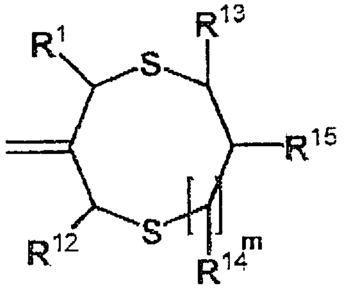

General formula (II)

In general formula (II), $R^1$ is defined in the same manner as in general formula (I), $R^{12}$ denotes a hydrogen atom or alkyl group, each of $R^{13}$, $R^{14}$ and $R^{15}$ independently denotes a hydrogen atom, alkyl group, aryl group, heterocyclic group, alkoxy goup, aryloxy group, alkylthio group, arylthio group, alkoxycarbonyl group, aryloxycarbonyl group, acyloxy group, acylamino group, sulfonylamino group, amino, group, acyl group or halogen group, and m denotes 0 or 1.

In general formula (II), the details of the alkyl groups denoted by $R^1$, $R^{12}$, $R^{13}$, $R^{14}$, and $R^{15}$ are identical to those set forth in the description of the alkyl group in general formula (I) above.

In general formula (II), the aryl groups denoted by $R^{13}$, $R^{14}$, and $R^{15}$ can be substituted or unsubstituted. They desirably comprise 6 to 30 carbon atoms, preferably 6 to 20 carbon atoms. Specific examples of the aryl group are phenyl groups, naphthyl groups, and anthranyl groups. These may be further substituted.

In general formula (II), the heterocyclic groups denoted by $R^{13}$, $R^{14}$, and $R^{15}$ desirably comprise 4 to 14 carbon, atoms, preferably 4 to 10 carbon atoms, and more preferably, 5 carbon atoms. Specific examples of the heterocyclic groups denoted by $R^{13}$, $R^{14}$, and $R^{15}$ are pyridine rings, piperazine rings, thiophene rings, pyrrole rings, imidazole rings, oxazole rings, and thiazole rings. These may be further substituted. Of the above hetero rings, pyridine rings are preferred.

In general formula (II), the alkoxy groups denoted by $R^{13}$, $R^{14}$, and $R^{15}$ can be linear or branched, and substituted or unsubstituted. They desirably comprise 1 to 30 carbon atoms, preferably 1 to 20 carbon atoms. Examples of such alkoxy groups are: methoxy groups, methoxy groups, normal propyloxy groups, isopropyloxy groups, normal butyloxy groups, isobutyloxy groups, tertiary butyloxy groups, pentyloxy groups, cyclopentyloxy groups, hexyloxy groups, cyclohexyloxy groups, heptyloxy groups, octyloxy groups, tertiary octyloxy groups, 2-ethylhexyloxy groups, decyloxy groups, dodecyloxy groups, octadecyloxy groups, 2,3-dibromopropyloxy groups, adamantyloxy groups, benzyloxy groups, and 4-bromobenzyloxy groups.

In general formula (II), the aryloxy groups denoted by $R^{13}$, $R^{14}$, and $R^{15}$ can be substituted or unsubstituted. They desirably comprise 6 to 30 carbon atoms, preferably 6 to 20 carbon atoms- Specific examples are phenyloxy groups, naphthyloxy groups, and anthranyloxy groups.

In general formula (II), the alkylthio groups denoted by $R^{13}$, $R^{14}$, and $R^{15}$ can be linear or branched, and substituted or unsubstituted. They desirably comprise 1 to 30 carbon atoms, preferably 1 to 20 carbon atoms. Examples of such alkylthio groups are: methylthio groups, ethylthio groups, normal propylthio groups, isopropylthio groups, normal butylthio groups, isobutylthio groups, tertiary butylthio groups, pentylthio groups, cyclopentylthio groups, hexylthio groups, cyclohexylthio groups, heptylthio groups, octylthio groups, tertiary octylthio groups, 2-ethylhexylthio groups, decylthio groups, dodecylthio group, octadecylthio groups, 2,3-dibromopropylthio groups, adamantylthio groups, benzylthio groups, and 4-bromobenzylthio groups.

In general formula (II), the arylthio, groups denoted by $R^{13}$, $R^{14}$, and $R^{15}$ can be substituted or unsubstituted. They desirably comprise 6 to 30 carbon atoms, preferably 6 to 20 carbon atoms. Specific examples are: phenylthio groups, naphthylthio groups, and anthranylthio groups.

In general formula (II), the alkoxycarbonyl groups denoted by $R^{13}$, $R^{14}$, and $R^{15}$ can be substituted or unsubstituted. They desirably comprise 1 to 30 carbon atoms, preferably 1 to 20 carbon atoms. Examples of such alkoxycarbonyl groups are: methyloxycarbonyl groups, ethyloxycarbonyl groups, normal propyloxycarbonyl groups, isopropyloxycarbonyl groups, normal butyloxycarbonyl groups, isobutyloxycarbonyl groups, tertiary butyloxycarbonyl groups, pentyloxycarbonyl groups, cyclopentyloxycarbonyl groups, hexyloxycarbonyl groups, cyclohexyloxycarbonyl groups, heptyloxycarbonyl groups, octyloxycarbonyl groups, tertiary octyloxycarbonyl groups, 2-ethylhexyloxycarbonyl groups, decyloxycarbonyl groups, and dodecyloxycarbonyl groups.

In general, formula (II), the aryloxycarbonyl groups denoted by $R^{13}$, $R^{14}$, and $R^{15}$ can be substituted or unsubstituted. They desirably comprise 7 to 30 carbon atoms, preferably 7 to 20 carbon atoms. Specific examples are: phenyloxycarbonyl groups, naphthyloxycarbonyl groups, and anthranyloxycarbonyl groups.

In general formula (II), the acyloxy groups denoted by $R^{13}$, $R^{14}$, and $R^{15}$ can be substituted or unsubstituted.

They desirably comprises 1 to 30 carbon atoms, preferably 1 to 20 carbon atoms. Examples of such acyloxy groups are: methylcarbonyloxy groups, ethylcarbonyloxy groups, normal propylcarbonyloxy groups, isopropylcarbonyloxy groups, normal butylcarbonyloxy groups, isobutylcarbonyloxy groups, tertiary butylcarbonyloxy groups, pentylcarbonyloxy groups, cyclopentylcarbonyloxy groups, hexylcarbonyloxy groups, cyclohexylcarbonyloxy groups, heptylcarbonyloxy groups, octylcarbonyloxy groups, tertiary octylcarbonyloxy groups, 2-ethylhexylcarbonyloxy groups, decylcarbonyloxy groups, dodecylcarbonyloxy groups, and benzoyloxy groups.

In general formula (II), the acylamino groups denoted by $R^{13}$, $R^{14}$, and $R^{15}$ can be substituted or unsubstituted. They desirably comprise 1 to 30 carbon atoms, preferably 1 to 20 carbon atoms. Examples of such acylamino groups are: methylcarbonylamino groups, ethylcarbonylamino groups, and phenylcarbonylamino groups.

In general formula (II), the sulfonylamino groups denoted by $R^{13}$, $R^{14}$, and $R^{15}$ can be substituted or unsubstituted. They desirably comprise 1 to 30 carbon atoms, preferably 1 to 20 carbon atoms. Examples of such sulfonylamino groups are: methylsulfonylamino groups, ethylsulfonylamino groups, and phenylsulfonylamino groups.

In general formula (II), the amino groups denoted by $R^{13}$, $R^{14}$, and $R^{15}$ can be monosubstituted amino groups or disubstituted amino groups, with disubstituted amino groups being desirable. They can be substituted or unsubstituted. They desirably comprise 1 to 30 carbon atoms, preferably 1 to 20 carbon atoms. Examples of such amino groups are dimethylamino groups and diphenylamino groups.

In general formula (II), the acyl groups denoted by $R^{13}$, $R^{14}$, and $R^{15}$ can be substituted or unsubstituted. They desirably comprise 1 to 30 carbon atoms, preferably 1 to 20 carbon atoms. Examples of such acyl groups are acetyl groups and benzoyl groups.

In general formula (II), examples of halogen groups denoted by $R^{13}$, $R^{14}$, and $R^{15}$ are chloro groups, bromo groups, and iodo groups, with bromo groups being desirable.

In general formula (II), when the groups denoted by $R^1$, $R^{12}$, $R^{13}$, $R^{14}$, and $R^{15}$ comprise one or more substituents, examples of the substituents are: halogen atoms, alkyl groups, alkenyl groups, alkoxy groups, aryloxy groups, alkylthio groups, alkoxycarbonyl groups, aryloxycarbonyl groups, amino groups, acyl groups, alkylaminocarbonyl groups, arylaminocarbonyl groups, sulfonamide groups, cyano groups, carboxy groups, hydroxyl groups, and sulfonic acid groups. Of these, halogen atoms, alkoxy groups, and alkylthio groups are preferred. When a cyclic allyl sulfide compound of general formula (II) is substituted as a substituent, a poly-functional compound is denoted.

In general formula (II), m denotes the integer 0 or 1; m is desirably 1.

Examples of desirable compounds denoted by general formula (II) are compounds in which each of $R^1$ and $R^{12}$ independently denotes a hydrogen atom or a methyl group, and each of $R^{13}$, $R^{14}$ and $R^{15}$ independently denotes a hydrogen atom, alkyl group, aryl group, alkoxy group, aryloxy group, alkoxycarbonyl group, aryloxycarbonyl group, acyloxy group, acylamino group, amino group, or acyl group. Examples of preferred compounds denoted by general formula (II) are compounds in which each of $R^1$and $R^{12}$ independently denotes a hydrogen atom or a methyl group, each of $R^{15}$ and $R^{14}$ independently denotes a hydrogen atom, alkyl group, acryl group, alkoxy group, aryloxy group, alkoxycarbonyl group, aryloxycarbonyl group, acyloxy group, acylamino group, amino group, or acyl group; $R^{15}$ denotes a hydrogen atom, alkyl group, aryl group, or acyloxy group; and m denotes 0 or 1. Examples of compounds denoted by general formula (II) of greater preference are compounds in which each of $R^1$ and $R^{12}$ independently denotes a hydrogen atom or a methyl group; each of $R^{13}$ and $R^{14}$ independently denotes a hydrogen atom or a methyl group; $R^{15}$ denotes an alkyl group or acyloxy group; and m denotes 0 of 1. Examples of compounds denoted be general formula (II) of still greater preference are compounds in which $R^1$ and $R^{12}$ both denote hydrogen atoms; each of $R^{13}$, $R^{14}$, and $R^{15}$ independently denotes a hydrogen atom, alkyl group, aryl, group, alkoxy group, aryloxy group, or acyloxy group; and m denotes 1. And the compound of greatest preference is a compound in which $R^1$ and $R^{12}$ both denote hydrogen atoms; $R^{13}$ and $R^{14}$ both denote hydrogen atoms; $R^{15}$ denotes an acyloxy group; and m denotes 1.

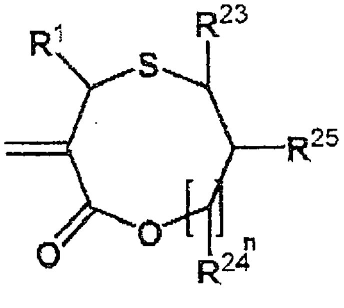

General formula (III)

In general formula (III), $R^1$ is defined as in general formula (I), each of $R^{33}$, $R^{24}$ and $R^{25}$ independently denotes a hydrogen atom, alkyl group, aryl group, heterocyclic group, alkoxy group, axyloxy group, alkylthio group, arylthio group,

alkoxycarbonyl group, aryloxycarbonyl group, acyloxy group, acylamino group, sulfonylamino group, amino group, acyl group or halogen group, and n denotes 0 or 1.

In general formula (III), the details of the alkyl groups denoted by $R^1$, $R^{23}$, $R^{24}$, and $R^{25}$ are identical to those set forth for the alkyl groups in general formula (I).

In general formula (III), the aryl groups denoted by $R^{23}$, $R^{24}$, and $R^{25}$ can be substituted or unsubstituted. They desirably comprise 6 to 30 carbon atoms, preferably 6 to 20 carbon atoms. Specific examples of these aryl groups are phenyl groups, naphthyl groups, and anthranyl groups. These may be further substituted.

In general formula (III), the heterocyclic groups denoted by $R^{23}$, $R^{24}$, and $R^{25}$ desirably comprise 4 to 14 carbon atoms, preferably 4 to 10 carbon atoms, and more preferably, 5 carbon atoms. Specific examples of the heterocyclic groups denoted by $R^{23}$, $R^{24}$, and $R^{25}$ are: pyridine rings, piperazine rings, thiophene rings, pyrrole rings, imidazole rings, oxazole rings, and thiazole rings. These may be further substituted. Of the above hetero rings, pyridine rings are particularly desirable.

In general formulas (III), the alkoxy groups denoted by $R^{23}$, $R^{24}$, and $R^{25}$ can be linear or branched, and substituted or unsubstituted. They desirably comprise 1 to 30 carbon atoms, preferably 1 to 20 carbon atoms. Examples of such alkoxy groups are: methoxy groups, ethoxy groups, normal propyloxy groups, isopropyloxy groups, normal butyloxy groups, isobutyloxy groups, tertiary butyl oxy groups, pentyloxy groups, cyclopentyloxy groups, hexyloxy groups, cyclohexyloxy groups, heptyloxy groups, octyloxy groups, tertiary octyloxy groups, 2-ethylhexyloxy groups, decyloxy groups, dodecyloxy groups, octadecyloxy groups, 2,3-dibromopropyloxy groups, adamantyloxy groups, benzyloxy groups, and 4-bromobenzyloxy groups.

In general formula (III), the aryloxy groups denoted by $R^{23}$, $R^{24}$, and $R^2{}_5$ can be substituted or unsubstituted. They desirably comprise 6 to 30 carbon atoms, preferably 6 to 20 carbon atoms. Specific examples are phenyloxy groups, naphthyloxy groups, and anthranyloxy groups.

In general formula (III), the alkylthio groups denoted by $R^{23}$, $R^{24}$, and $R^{25}$ can be linear or branched, and substituted or unsubstituted. They desirably comprise 1 to 30 carbon atoms, preferably 1 to 20 carbon atoms. Examples of such alkylthio groups are: methylthio groups, ethylthio groups, normal propylthio groups, isopropylthio groups, normal butylthio groups, isobutylthio groups, tertiary butylthio groups. pentylthio groups, cyclopentylthio groups, hexylthio groups, cyclohexylthio groups, heptylthio groups, octylthio groups, tertiary octylthio groups, 2-ethylhexylthio groups, decylthio groups, dodecylthio groups, octadecylthio groups, 2,3-dibromopropylthio groups, adamantylthio groups, benzylthio groups, and 4-bromobenzylthio groups.

In general formula (III), the arylthio groups denoted by $R^{23}$, $R^{24}$, and $R^{25}$ can be substituted or unsubstituted. They desirably comprises 6 to 30 carbon atoms, preferably 6 to 20 carbon atoms. Specific examples are: phenylthio groups, naphthylthio groups, and anthranylthio groups.

In general formula (III), the alkoxycarbonyl groups denoted by $R^{23}$, $R^{24}$, and $R^{25}$ can be substituted or unsubstituted. They desirably comprise 1 to 30 carbon atoms, preferably 1 to 20 carbon atoms. Examples or such alkoxycarbonyl groups are: methyloxycarbonyl groups, ethyloxycarbonyl groups, normal propyloxy-carbonyl groups, isopropyloxycarbonyl groups, normal butyloxycarbonyl groups, isobutyloxycarbonyl groups, tertiary butyloxycarbonyl groups, pentyloxycarbonyl groups, cyclopentyloxycarbonyl groups, hexyloxycarbonyl groups, cvclohexyloxycarbonyl groups, heptyloxycarbonyl groups, octyloxycarbonyl groups, tertiary octyloxycarbonyl groups, 2-ethylhexyloxycarbonyl groups, decyloxycarbonyl groups, and dodecyloxycarbonyl groups.

In general formula (III), the aryloxycarbonyl groups denoted by $R^{23}$, $R^{24}$, and $R^{25}$ can be substituted or unsubstituted. They desirably comprise 7 to 30 carbon atoms, preferably 7 to 20 carbon atoms. Specific examples are phenyloxycarbonyl groups, naphthyloxycarbonyl groups, and anthranyloxycarbonyl groups.

In general formula (III), the acyloxy groups denoted by $R^{23}$, $R^{24}$, and $R^{25}$ can be substituted or unsubstituted. They desirably comprise 1 to 30 carbon atoms, preferably 1 to 20 carbon atoms. Examples of such acyloxy groups are: methylcarbonyloxy groups, ethylcarbonyloxy groups, normal propylcarbocyloxy groups, isopropylcarbonyloxy groups, normal butylcarbonyloxy groups, isobutylcarbonyloxy groups, tertiary butylcarbonyloxy groups, pentylcarbonyloxy groups, cylopentylcarbonyloxy groups, hexylcarbonyloxy groups, cyclohexylcarbonyloxy groups, heptylcarbonyloxy groups, octylcarbonyloxy groups, tertiary octylcarbonyloxy groups, 2-ethylhexylcarbonyloxy groups, decylcarbonyloxy groups, dodecylcarbonyloxy groups, and benzoyloxy groups.

In general formula (III), the acylamino groups denoted by $R^{23}$, $R^{24}$, and $R^{25}$ can be substituted or unsubstituted. They desirably comprise 1 to 30 carbon atoms, preferably 1 to 20 carbon atoms. Examples of such acylamino groups are methylcarbonylamino groups, ethylcarbonylamino groups, and phenylcarbonylamino groups.

In general formula (III), the sulfonylamino groups denoted by $R^{23}$, $R^{24}$, and $R^{25}$ can be substituted or unsubstituted. They desirably comprise 1 to 30 carbon atoms, preferably 1 to 20 carbon atoms. Examples of such sulfonylamino groups are methylsulfonylamino groups, ethylsulfonylamino groups, and phenylsulfonylamino groups.

In general formula (III), the amino groups denoted by $R^{23}$, $R^{24}$, and $R^{25}$ can be monosubstituted amino groups or disubstituted amino groups, with disubstituted amino groups being desirable. They can be substituted or unsubstituted. They desirably comprise 1 to 30 carbon atoms, preferably 1 to 20 carbon atoms. Examples of such amino groups are

dimethylamino groups and diphenylamino groups.

In general formula (III), the acyl groups denoted by $R^{23}$, $R^{24}$, and $R^{25}$ can be substituted or unsubstituted. They desirably comprise 1 to 30 carbon atoms, preferably 1 to 20 carbon atoms. Examples of such acyl groups are acetyl groups and benzoyl groups.

In general formula (III), examples of the halogen groups denoted by $R^{23}$, $R^{24}$, and $R^{25}$ are chloro groups, bromo groups, and iodo groups, with bromo groups being desirable.

In general formula (III), when the groups denoted by $R^1$, $R^{23}$, $R^{24}$, and $R^{25}$ comprise one or more substituents, examples of the substituents are: halogen atoms, alkyl groups, alkenyl groups, alkoxy groups, aryloxy groups, alkylthio groups, alkoxycarbonyl groups, aryloxycarbonyl groups, amino groups, acyl groups, alkylaminocarbonyl groups, arylaminocarbonyl groups, sulfonamide groups, cyano groups, carboxy groups, hydroxyl groups, and sulfonic acid groups. Of these, halogen atoms, alkoxy group, and alkylthio groups are preferred. When a cyclic allyl sulfide compound of general formula (III) is substituted as a substituent, a. polyfunctional compound is denoted.

In general formula (III), n denotes the integer 0 or 1; n desirably denotes 0.

Example of desirable compounds denoted by general formula (III) are compounds in which $R^1$ denotes a hydrogen atom or a methyl group, each of $R^{23}$, $R^{24}$, and $R^{25}$ independently denotes a hydrogen atom, alkyl group, aryl group, alkoxy group, aryloxy group, alkoxycarbonyl group, aryloxycarbonyl group, acyloxy group, acylamino group, amino group, or acyl group. Examples of preferred compounds denoted by general formula (III) are compounds in which $R^1$ denotes a hydrogen atom or methyl group; each of $R^{23}$ and $R^{24}$ independently denotes a hydrogen atom, alkyl group, aryl group, alkoxy group, aryloxy group, alkoxycarbonyl group, aryloxycarbonyl group, acyloxy group, acylamino group, amino group, or acyl group; $R^{25}$ denotes a hydrogen atoms, alkyl group, aryl group, or acyloxy group, and n denotes 0 or 1. Examples of compounds denoted by general formula (III) of greater preference are compounds in which $R^1$ denotes a hydrogen atom or methyl group; each of $R^{23}$ and $R^{24}$ independently denotes a hydrogen atom or methyl group; $R^{25}$ denotes an alkyl group or acyloxy group; and n denotes 0 or 1. Examples of compounds denoted by general formula (III) of still greater preference are compounds in which $R^1$ denotes a methyl group; each of $R^{23}$, $R^{24}$, and $R^{25}$ independently denotes a hydrogen atom, alkyl group, aryl group, alkoxy group, aryloxy group, or acyloxy group; and n denotes 0, And the compound of greatest preference is a compound in which $R^1$ denotes a methyl group; $R^{23}$ and $R^{24}$ denote hydrogen atoms; $R^{25}$ denotes an acyloxy- group; and n denotes 0.

The optical recording compound need only be a compound denoted by general formula (I), (II), or (III) that possesses the above-described absorption characteristics. To achieve the above-described absorption characteristics, it desirably comprises at least one of the partial structures denotes by general formulas (C-1), (C-2), (C-3), (C-4), (C-5), and (C-6)- Although the number of these partial structures that is comprised by the optical recording compound is at least one per molecule, this is not a limitation, so long as the above absorption characteristics are achieved. An optical recording compound having the above-described absorption characteristics is not limited to those comprising the partial structures denoted by general formulas (C-1) to (C-6). The fact that it comprises a partial structure means that a partial structure denoted by general formula (C-1), (C-2), (C-3), (C-4), (C-5), or (C-6) is contained as part of a single molecule in a compound denoted by general formula (I), (II), or (III). Specifically, a structure denoted by general formula (G-1), (C-2), (C-3), (C-4), (C-5), or (C-6) is linked as a substituent in $R^1$ or $Z^1$ in general formula (I); as a substituent in $R^1$, $R^{12}$, $R^{13}$, $R^{14}$, or $R^{15}$ in general formula (II); or as a substituent in $R^1$, $R^{23}$, $R^{24}$, or $R^{25}$ in general formula (III). In general formula (II), it is desirably linked as a substituent in $R^{13}$, $R^{14}$, or $R^{15}$, and preferably linked as a substituent in $R^{15}$. If general formula (III), it is desirably linked as a substituent in $R^{23}$, $R^{24}$, or $R^{25}$, and preferably linked as a substituent in $R^{25}$.

(C-1) 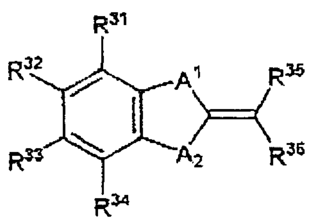

(C-2) 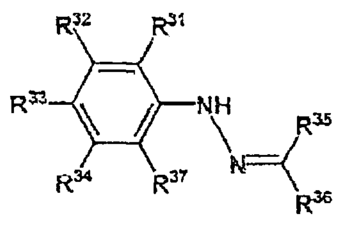

(C-3) 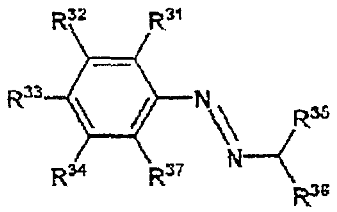

(C-4) 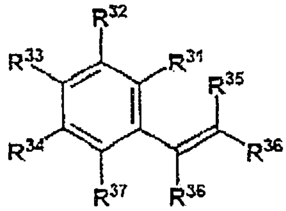

(C-5) 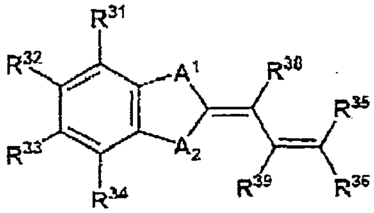

(C-6) 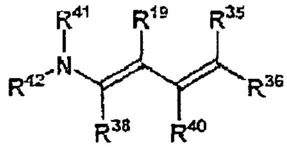

In the above formulas, each of $R^{31}$, $R^{32}$, $R^{33}$, $R^{34}$, and $R^{37}$ independently denotes a hydrogen atom, alkyl group, aryl group, heterocyclic group, alkoxy group, aryloxy goup, alkoxycarbonyl group, aryloxycarbonyl group, acyl group, sulfonyl group, carbamoyl group, sulfamoyl group, amino group, aryloxy groups acylamino group, hydroxyl group, carboxylic acid group, sulfonic acid group, halogen atom or linking group; each of $A^1$ and $A^2$ independently denotes $-CR^{43}R^{44}$, -O-, $-NR^{45}-$, -S-, or C(=O)-; each of $R^{43}$, $R^{44}$, and $R^{45}$ independently denotes a hydrogen atom, alkyl group, aryl group, or linking group; each of $R^{35}$ and $R^{36}$ independently denotes an electron-withdrawing group or linking group, and $R^{25}$ and $R^{36}$ may bond together to form a cyclic structure; each of $R^{38}$, $R^{39}$, and $R^{40}$ independently denotes a hydrogen atom, alkyl group, or linking group; each of $R^{41}$ and $R^{42}$ independently denotes a hydrogen atom, alkyl group, aryl group, heterocyclic group, acyl group, sulfonyl group, or linking group; and each of partial structures (C-1) to (C-6) comprises one or more linking groups.

When the structure denoted by general formula (C-1), (C-2), (C-3), (C-4), (C-5), or (C-6) is linked to the compound denoted by general formula. (I), (II), or (III), the linking group may be a group selected from an alkylene group, phenylene group, -O-, -S-, -CO-, and $=NR^{46}-$, or may be comprised of a combination of two or more such groups. Of these, an alkylene group, -O-, -S-, -CO-, or a combination of two or more of these is desirable; an alkylene group, -O-, -CO-, or a combination of two or more of these is preferred; an alkylene group, -O-, or a combination thereof is of greater preference; and an ethyleneoxide chain having a structural component in the form of $-(OCH_2CH_2)-$ is of greatest preference.

The partial structures denoted by general formulas (C-1), (C-2), (C-3), (C-4), (C-5), and (C-6) will be described below.

The details of alkyl groups denoted by $R^{31}$, $R^{32}$, $R^{33}$, $R^{34}$, $R^{37}$, $R^{38}$, $R^{39}$, $R^{40}$, $R^{41}$, $R^{42}$, $R^{43}$, $R^{44}$, and $R^{45}$ in general formulas (C-1) to (C-6) are as described for the alkyl group in general formula (I).

The details of aryl groups denoted by $R^{31}$, $R^{32}$, $R^{33}$, $R^{34}$, $R^{37}$, $R^{41}$, $R^{42}$, $R^{43}$ $R^{44}$, and $R^{55}$ in general formulas (C-1) to (C-6) are as described for the aryl group in general formula (I).

The details of heterocyclic groups denoted by $R^{31}$, $R^{32}$, $R^{33}$, $R^{34}$, $R^{37}$, $R^{41}$, and $R^{42}$ in general formulas (C-1) to (C-6) are as described for the heterocyclic group in general formula (I).

The details of alkoxy groups denoted by $R^{31}$, $R^{32}$, $R^{33}$. $R^{34}$, and $R^{37}$ in general formulas (C-1) to (C-6) are as described for the alkoxy group in general formula (I).

The details of aryloxy groups denoted by $R^{31}$, $R^{32}$, $R^{33}$, $R^{34}$, and $R^{37}$ in general formulas (C-1) to (C-6) are as described for the aryloxy group in general formulas (I).

The details of alkoxycarbonyl groups denoted by $R^{31}$, $R^{32}$, $R^{33}$, $R^{34}$, and $R^{37}$ in general formulas (C-1) to (C-6) are as described for the alkoxycarbonyl group in general formula (I).

The details of aryloxycarbonyl groups denoted by $R^{31}$, $R^{32}$, $R^{33}$, $R^{34}$, and $R^{37}$ in general formulas (C-1) to (C-6) are as described for the aryloxycarbonyl group in general formula (I).

Acyl groups denoted by $R^{31}$, $R^{32}$, $R^{33}$, $R^{34}$, $R^{37}$, $R^{41}$, and $R^{42}$ in general formulas (C-1) to (C-6) desirably have 1 to 10 carbon, atoms, preferably have 1 to 6 carbon atoms, and more preferably, have 4 carbon atoms. Specific examples are methylcarbonyl groups, ethylcarbonyl groups, n-propylcarbonyl groups, isopropylcarbonyl groups, n-butylcarbonyl groups, isobutylcarbonyl group, tert-butylcarbonyl groups, pentylcarbonyl groups, cyclopentylcarbonyl groups, hexylcarbonyl groups, cyclohexylcarbonyl groups, heptylcarbonyl groups octylcarbonyl groups, tert-octylcarbonyl groups, 2-ethylhexylcarbonyl groups, decylcarbonyl groups, dodecylcarbonyl groups, and benzoyl groups.

Sulfonyl groups denoted by $R^{31}$, $R^{32}$, $R^{33}$, $R^{34}$, $R^{37}$, $R^{41}$, and $R^{42}$ in general formulas (C-1) to (C-6) desirably

have 1 to 10 carbon atoms, preferably have 1 to 6 carbon atoms, and more preferably, have 1 to 4 carbon atoms. Specific examples are methylsulfonyl groups, ethylsulfonyl groups, n-propylsulfonyl groups, isopropylsulfonyl groups, n-butylsulfonyl. groups, isobutysulfonyl groups, tert-butylsulfonyl groups, pentylsulfonyl groups, cyclopentylsulfonyl groups, hexylsulfonyl groups, cyclohexylsulfonyl groups, heptylsulfonyl groups, octylsulfonyl groups, tert-octylsulfonyl groups, 2-ethylhexylsulfonyl groups, decylsulfonyl groups, and dodecylsulfonyl groups.

Carbamoyl groups denoted by $R^{31}$, $R^{32}$, $R^{33}$, $R^{34}$, and $R^{37}$ in general formulas (C-1) to (C-6) desirably have 1 to 12 carbon atoms, and preferably have 1 to 6 carbon atoms. Examples of such carbamoyl groups are: methylcarbamoyl groups, ethylcarbamoyl groups, n-propylcarbamoyl groups, isopropylcarbamoyl groups, n-butylcarbamoyl groups, isobutylcarbamoyl groups, tert-butylcarbamoyl groups, and phenylcarbamoyl groups. These carbamoyl groups may be substituted or unsubstituted.

Sulfamoyl groups denoted by $R^{31}$, $R^{32}$, $R^{33}$, $R^{34}$, and $R^{37}$ in general formulas (C-1) to (C-6) desirably have 1 to 12 carbon atoms, and preferably have 1 to 6 carbon atoms. Examples of such sulfamoyl groups are methylsulfamoyl groups, ethylsulfamoyl groups, n-propylsulfamoyl groups, isopropylsulfamoyl groups, n-butylsulfamoyl groups, isobutylsulfamoyl groups, tert-butylsulfamoyl groups, and phenylsulfamoyl groups. These sulfamoyl groups may be substituted or unsubstituted.

Details of amino groups denoted by $R^{31}$, $R^{32}$, $R^{33}$, $R^{34}$, and $R^{37}$ in general formulas (C-1) to (C-6) are as described for the amino group in general formula (I).

Details of acyloxy groups denoted by $R^{31}$, $R^{32}$, $R^{33}$, $R^{34}$, and $R^{37}$ in general formulas (C-1) to (C-6) are as described for the acyloxy group in general formula (I).

Details of acylamino groups denoted by $R^{31}$, $R^{32}$, $R^{33}$, $R^{34}$, and $R^{37}$ in general formulas (C-1) to (C-6) are as described for the acylamino group in general formula (I).

Details of halogen atoms denoted by $R^{31}$, $R^{32}$, $R^{33}$, $R^{34}$, and $R^{37}$ in general formulas (C-1) to (C-6) are as described for the halogen atoms in general formula (I).

In general formulas (C-1) to (C-6), each of $A^1$ and $A^2$ independently denotes $-CR^{43}R^{44}-$, -O-, $-NR^{45}-$, -S-, or -C(=O)-. $A^1$ and $A^2$ desirably denote $-CR^{43}R^{44}-$, -O-. $-NR^{45}-$, or -S-, preferably denote -O-, $-NR^{45}-$, or -S-, and more preferably, denote $-NR^{45}-$or -S-.

Examples of specific combinations of $A^1$ and $A^2$, wherein either $A^1$ or $A^2$ may be the first element indicated in the combinations, are: ($CR^{43}R^{44}-$, $-NR^{45}-$), (-S-, -S-), ($NR^{45}-$, -S-), (-O-, $-NR^{45}-$), ($-NR^{45}-$, $-NR^{45}-$), and (-C(=O)-, $-NR^{45}-$). Desirable combinations are: (-S-, -S-), ($-NR^{45}-$, -S-), (-O-, $-NR^{45}-$), and ($-NR^{45}-$, $-NR^{45}-$). Preferred combinations are: ($-NR^{45}-$, -S-) and (-O-, $-NR^{45}-$). And the combination of greatest preference is ($-NR^{45}-$, -S-).

Examples of the electron-withdrawing groups denoted by $R^{35}$ and $R^{36}$ in general formulas (C-1) to (C-6) are substituents having a positive Hammet substituent constant $\sigma_p$, desirably having a $\sigma_p$ value of equal to or greater than. 0.2 and equal to or less than 1.0. Specific examples of electron-withdrawing groups having a $\sigma_p$ value of equal to or greater than 0.2 are: acyl groups, formyl groups, acyloxy groups, acylthio groups, carbamoyl groups, oxycarbonyl groups, cyano groups, nitro groups, dialkylphosphono groups, diarylphosphono groups, dialkylphosphinyl groups, diarylphosphinyl groups, phosphoryl groups, alkylsulfinyl groups, arylsulfinyl groups, alkylsulfonyl groups, arylsulfonyl groups, sulfonyloxy groups, acylthio groups, sulfamoyl groups, thiocyanate groups, thiocarbonyl groups, imino groups, nitrogen atom-substituted imino groups, carboxy groups (and their salts), alkyl groups substituted with two or more halogen atoms, alkoxy groups substituted with 2 or more halogen atoms, aryloxy groups substituted with 2 or more halogen atoms, acylamino groups, alkylamino groups substituted with 2 or more halogen atoms, alkylthio groups substituted with 2 or more halogen atoms, aryl groups substituted with other electron-withdrawing groups having a $\sigma_p$ value of equal to or greater than 0.2, heterocyclic groups, halogen atoms, azo groups, and selenocyanate groups. The Hammet $\sigma_p$ value is described in detail in Hansch, C.; Leo, A.; Taft, R. W. Chem. Rev. 1991, 91, 165-195. Of these, cyano groups, oxycarbonyl groups, acyl groups, and sulfonyl groups are desirable.

The substituents denoted by $R^{35}$ and $R^{36}$ may be in various combinations. Combinations 1 to 9 below are desirable combinations. In combinations 2, 3, and 4, the substituent denoted by $R^{35}$ may be identical to or different from that denoted by $R^{36}$.

| | | | |
|---|---|---|---|
| (Combination 1) $R^{35}$: | cyano group, | $R^{36}$: | cyano group |
| (Combination 2) $R^{35}$: | acyl group, | $R^{36}$: | acyl group |
| (Combination 3) $R^{35}$: | oxycarbonyl group, | $R^{36}$: | oxycarbonyl group |
| (Combination 4) $R^{35}$: | sulfonyl group, | $R^{36}$: | sulfonyl group |
| (Combination 5) $R^{35}$: | cyano group, | $R^{36}$: | oxycarbonyl group |
| (combination 6) $R^{35}$: | cyano group, | $R^{36}$: | acyl group |
| (Combination 7) $R^{35}$: | oxycarbonyl group, | $R^{36}$: | acyl group |
| (Combination 8) $R^{35}$: | acyl group, | $R^{36}$: | sulfonyl group |

(continued)

(Combination 9) $R^{35}$: oxycarbonyl group, $R^{36}$; sulfonyl group

Of the above combinations, combinations 1, 3, 4, 5, and 9 are desirable and combination 5 is preferred. In general formulas (C-1) to (C-6), $R^{35}$ and $R^{36}$ may bond together to form a cyclic structure. When they bond, they may bond together through a carbon chain or may comprise atoms such as N, O, and S.

Since general formulas (C-1), (C-2), (C-3), (C-4), (C-5), and (C-6) may be partial structures of a compound denoted by general formula (I), (II), or (III), at least one linking group is contained in the partial structure. That is, any one of the groups denoted by $R^{31}$, $R^{32}$, $R^{33}$, $R^{34}$, $R^{37}$, $R^{38}$, $R^{39}$, $R^{40}$, $R^{41}$, $R^{42}$, $R^{43}$, $R^{44}$, and $R^{45}$ is present as a linking group, and (C-1), (C-2), (C-3), (C-4), (C-5), or (C-6) may be bonded through this linking group in the compound denoted by general formula (I), (II), or (III). It suffices for one linking group to be contained for each partial structure. The details of the linking groups are as set forth above.

Specific examples of the above optical recording compound are given below. However, the present invention is not limited to these specific examples.

M-1

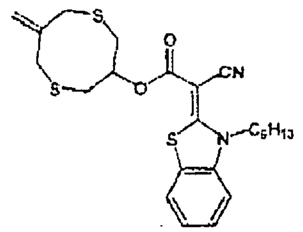

M-2

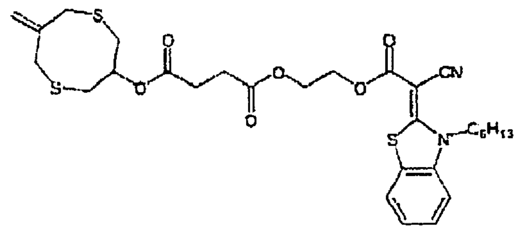

M-3

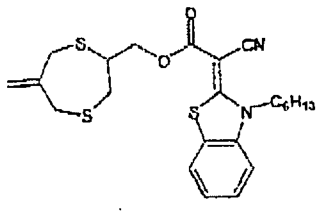

M-4

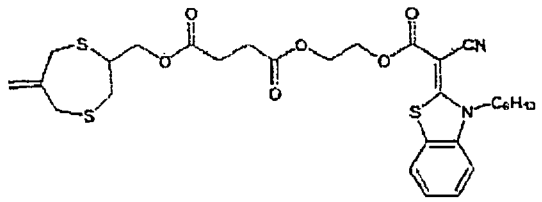

M-5

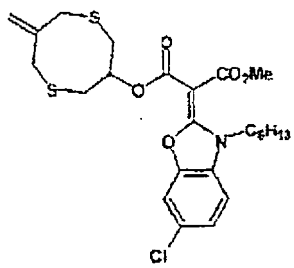

M-6

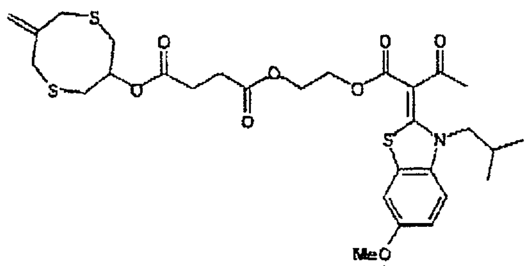

M-7

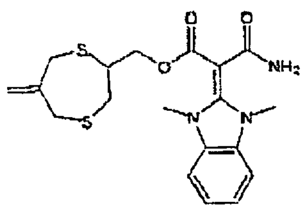

M-8

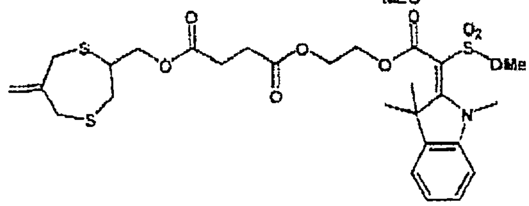

M-9
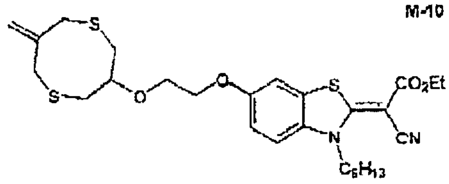
M-10
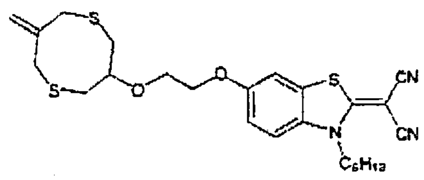

M-11
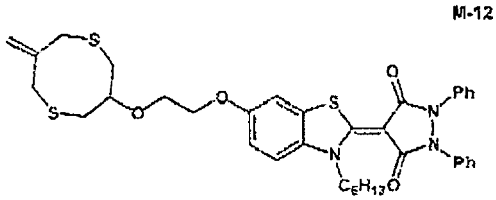
M-12
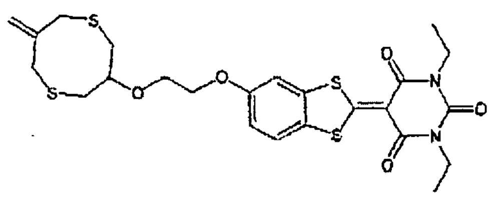

M-13
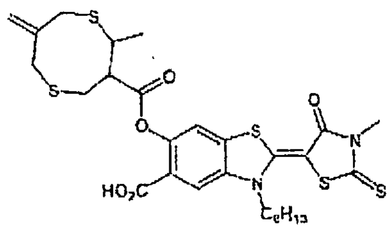
M-14
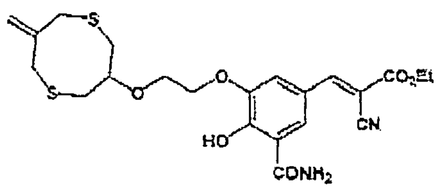

M-15
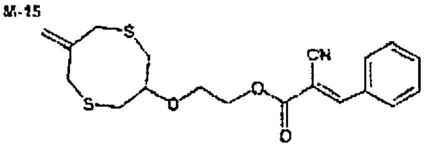
M-16
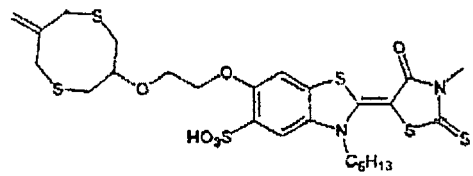

M-17
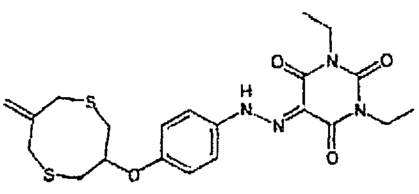
M-18
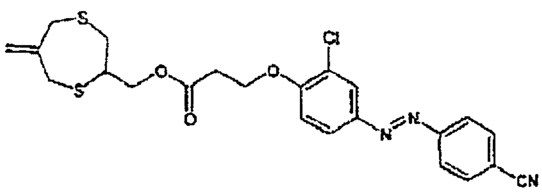

M-19

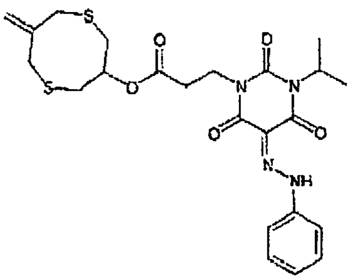

M-20

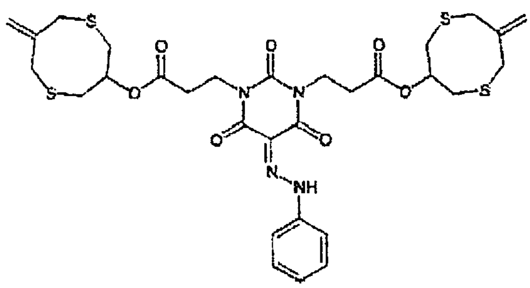

M-21

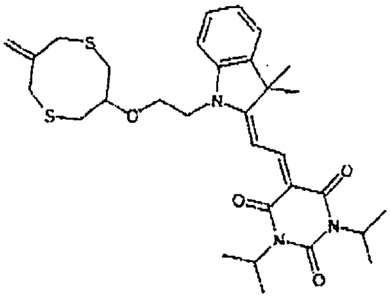

M-22

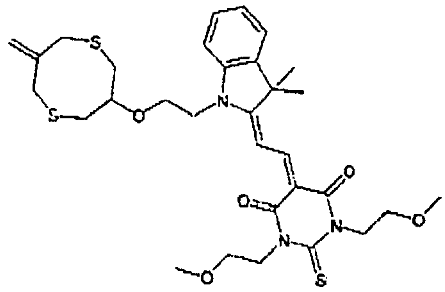

M-23

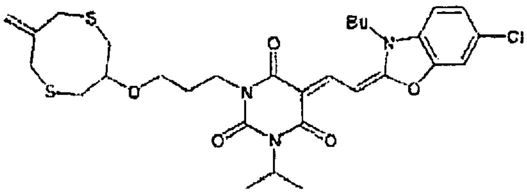

M-24

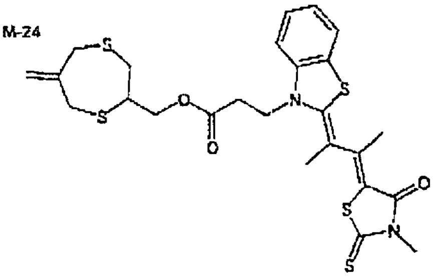

M-25

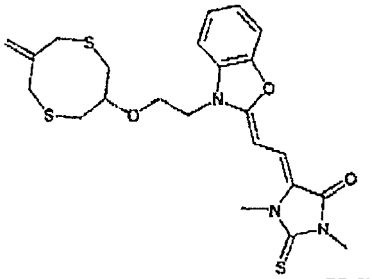

M-26

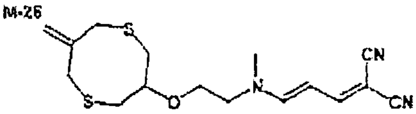

M-27

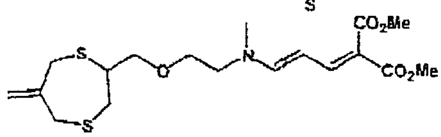

M-28

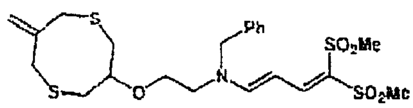

M-29

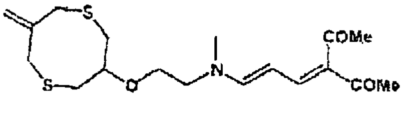

M-30

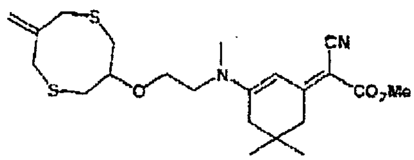

M-31

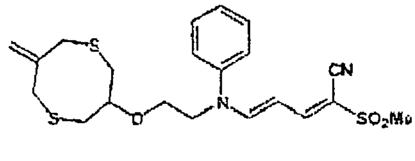

M-32

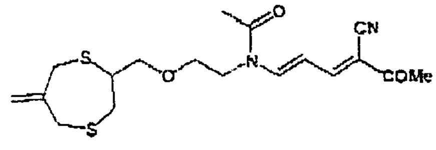

M-33

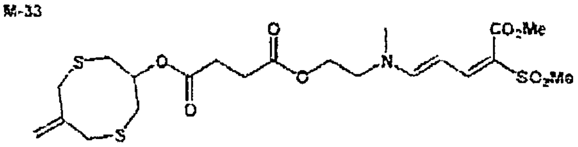

M-34

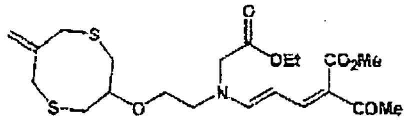

M-35

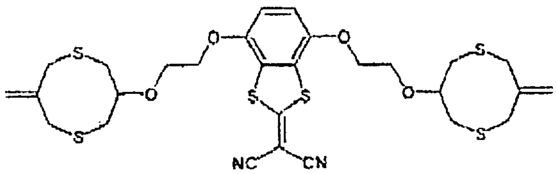

M-36

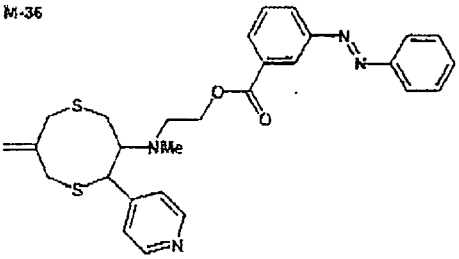

M-37

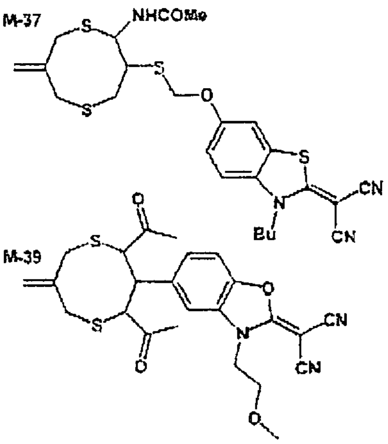

M-38

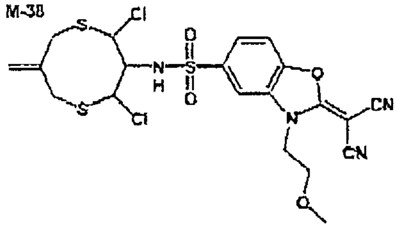

M-39

M-40

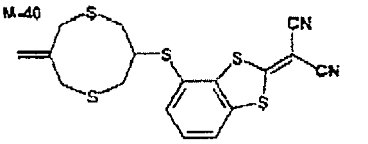

M-41

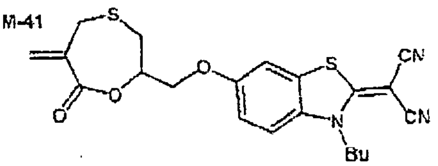

M-42

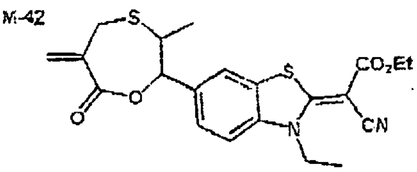

M-43

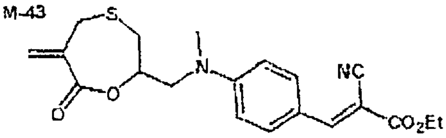

M-44

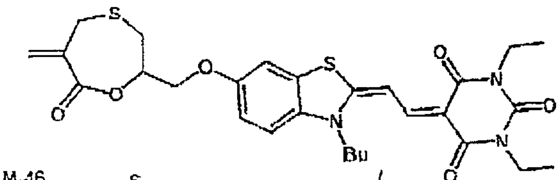

M-45

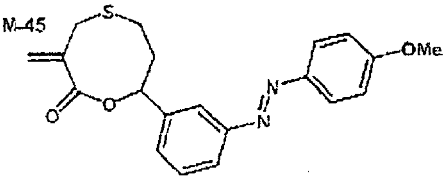

M-46

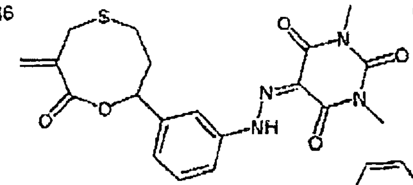

M-47

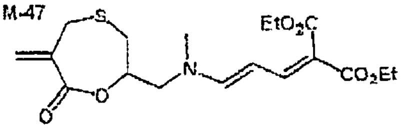

M-48

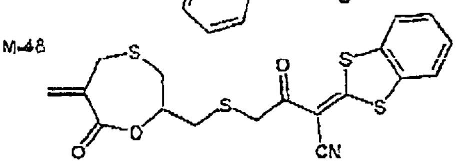

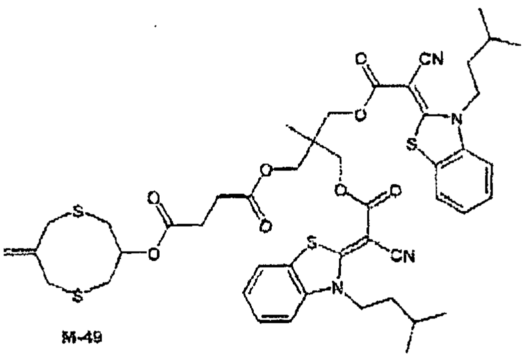

M-49

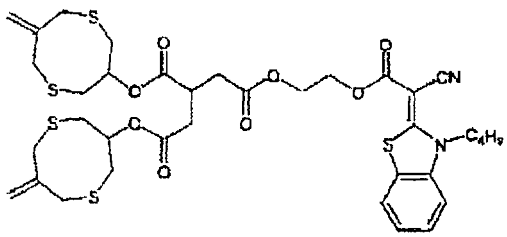

M-50

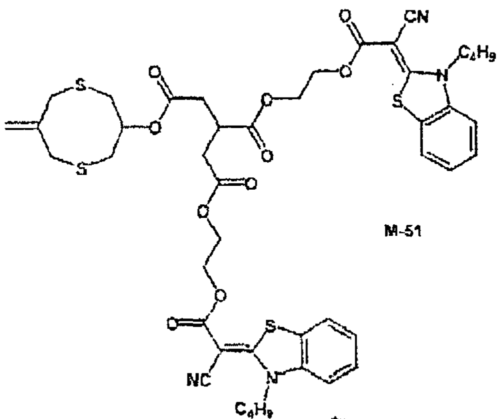

M-51

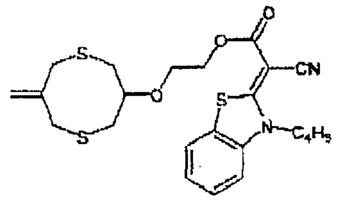

M-52

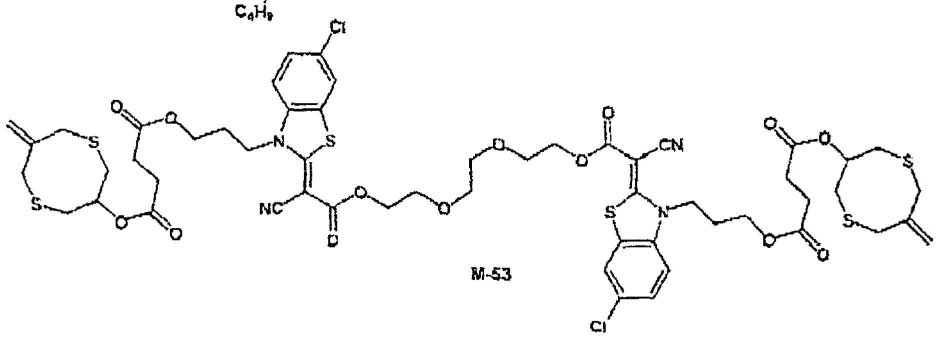

M-53

The optical recording compound described above can be synthesized by known methods. Examples of methods of synthesizing the above-described compounds are given in: Macromolecules, 1994, 27, 7935; Macromolecules, 1996, 29, 6983; Macromolecules, 2000, 33, 6722; and J. Polym. Sci.: Part A Polym. Chem. 2001, 39, 202. For details regarding the synthesis methods, reference can be made to Examples set forth further below.

The optical recording composition of the present invention comprises at least one optical recording compound described above. The optical recording compound may be employed singly or in combination of two or more. The content of the optical recording compound in the optical recording, composition of the present invention is not specifically limited, and can be suitably selected based on the objective. A content of 1 to 50 weight percent is desirable, 1 to 30 weight percent is preferable; and 3 to 10 weight percent is of greater preference. When the content is equal to or less than 50 weight percent, stability of the interference image can be readily ensured. A content of equal to or more than 1 weight percent can yield properties that are desirable from the perspective of diffraction efficiency.

The optical recording composition of the present invention can comprises a recording compound in the form of just the above-described cyclic allyl sulfide compound, or can comprise another polymerizable monomer along with the cyclic allyl sulfide compound. When a polymerizable monomer is employed in combination with the cyclic allyl sulfide compounds, the polymerizable monomer being combined desirably constitutes equal to or less than 50 weight percent of the total recording compound.

Examples of monomers that can be employed in combination with the cyclic allyl sulfide compound denoted by general formula (I) are: acryloyl morpholine, phenoxyethyl acrylate, isobornyl acrylate, 2-hydroxypropyl acrylate, 2-ethylhexyl acrylate, 1,6-hexanediole diacrylate, tripropylene glycol acrylate, neopentyl glycol PO-modified diacrylate, 1,9-nonanediole diacrylate, hydroxypivalic acid neopentyl glycol diacrylate, EO-modified bisphenol A diacrylate, polyethylene glycol diacrylate, pentaerythritol triacrylate, pentaerythritol tetraacrylate, pentaerythritol hexaacrylate, EO-modified glycerol triacrylate, trimethylol propane triacrylate, EO-modified trimethylolpropane triacrylate, 2-naphtho-1-oxyethyl acrylate, 2-carbazoyl-9-ylethyl acrylate, (trimethylsilyloxy)dimethylsilylpropyl acrylate, vinyl-1-naphthoate, 2,4,6-tribromophenyl acrylate, pentabromoacrylate, phenylthioethyl acrylate, tetrahydrofurfuryl acrylate, bisphenoxyethanolfluorene diacrylate, styrene, p-chlorostyrene, N-vinylcarbazole, and N-vinylpropane. Of these, phenoxyethyl acrylate, 2,4,6-tribromophenyl acrylate, pentabromoacrylate, and bisphenoxyethanolfluorene diacrylate are desirable, and 2,4,6-tribromophenylacrylate and bisphenoxyethanolfluorene diacrylate are preferred.

<u>Photopolymerization initiator</u>

In the optical recording composition of the present invention the above-described optical recording compound can function as a recording monomer. In the present invention, the phrase "recording monomer" refers to a monomer

that can undergo a polymerization reaction, either directly or through the action of a photopolymerization initiator, by irradiating, light for information recording, thereby permitting the recording of information, preferably refers to a monomer that permits the recording of an interference fringe as refractive index modulation through the above polymerization reaction. The optical recording composition of the present invention can comprise a photopolymerization initiator in addition to the above-described optical recording compound. The photopolymerization initiator is not specifically limited other than that it be sensitive to the recording bearn. A photo-induced radical polymerization initiator is desirable from the perspective of efficiency of the polymerization reaction.

Examples of photo-induced radical polymerization initiators are: 2,2'-bis(o-chlorophenyl)-4,4',5,5'-tetraphenyl-1,1'-biimidazole, 2,4,6-tris(trichloromethyl)-1,3,5-triazine, 2,4-bis(trichloromethyl)-6-(p-methoxyphenylvinyl)-1,3,5-triazine, diphenyliodonium tetrafluoroborate, diphenyliodonium hexafluorophosphate, 4,4'-di-t-butyldiphenyl-iodonium tetrafluoroborate, 4-diethylaminophenylbenzenediazonium hexafluorophosphate, benzoin, 2-hydroxy-2-methyl-1-phenylpropane-2-one, benzophenone, thioxanthone, 2,4,6-trimethylbenzoyldiphenylacylphosphineoxide, triphenylbutylborate tetraethylammonium, and bis(η5-2,4-cyclopentanediene-1-yl)bis[2,6-difluoro-3-(1H-pyrrole-1-yl)phenyltitanium]. The photopolymerization initiators may be employed singly or in combinations of two or more in the optical recording composition of the present invention. A sensitizing dye, described further below, may also be employed in combination based on the wavelength of the light being irradiated.

The compounds denoted by general formula (IV) below are suitable as photo-induced radical polymerization initiators.

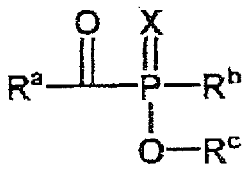

General Formula (IV)

In general formula (IV), each of $R^a$, $R^b$ and $R^c$ independently denotes an alkyl group, aryl group or heterocyclic group, and X denotes an oxygen atom or sulfur atom.

The compound denoted by general formula (IV) will be described in detail below.

The alkyl groups denoted by $R^a$, $R^b$, and $R^c$ can be linear or branched, and substituted or unsubstituted. They desirably have 1 to 30 carbon atoms, preferably 1 to 20 carbon atoms.

Examples of the alkyl groups denoted by $R^a$, $R^b$, and $R^c$ are: methyl groups, ethyl groups, normal propyl groups, isopropyl groups, normal butyl groups, isobutyl groups, tertiary butyl groups, pentyl groups, cyclopentyl groups, hexyl groups, cyclohexyl groups, heptyl groups, octyl groups, tertiary octyl groups, 2-ethylhexyl groups, decyl groups, dodecyl groups, octadecyl groups, 2,3-dibromopropyl groups, adamantyl groups, benzyl groups, and 4-bromobenzyl groups. These may be further substituted. Of these, tertiary butyl groups are greatly preferred from the perspective of stability in the presence of nucleophilic compounds, such as water and alcohol.

The aryl groups denoted by $R^a$, $R^b$, and $R^c$ in general formula (IV) can be substituted or unsubstituted. They desirably comprise 6 to 30 carbon atoms, preferably 6 to 20 carbon atoms. Specific examples of these aryl groups are: phenyl groups, naphthyl groups, and anthranyl groups. These may be further substituted. Of these, $R^a$ desirably denotes an aryl group in which an alkyl group, aryl group, alkoxy group, or halogen group is present at position 2, and preferably denotes an aryl group in which an alkyl group, aryl group, alkoxy group, or halogen group is present at positions 2 and 6. For example, $R^a$ desirably denotes a 2-methylphenyl group, 2,4,6-trimethylphenyl group, 2,6-dichlorophenyl group, 2,6-dimethoxyphenyl group, or 2,6-trifluoromethylphenyl group, and preferably denotes a 2,4,6-trimethylphenyl group, 2,6-dichlorophenyl group, or 2,6-dimethoxyphenyl group. The presence of the above substituents at position 2, or at positions 2 and 6, is desirable to enhance stability in the presence of nucleophilic compounds, such as water and alcohols, as described in Jacobi, M., Henne, A. Polymers Paint Colour Journal 1985, 175, 636, for example. Details of desirable examples of alkyl groups and aryl groups employed as the above substituents are identical to those set forth for the alkyl groups denoted by $R^a$, $R^b$, and $R^c$ above.

The heterocyclic groups denoted by $R^a$, $R^b$, and $R^c$ in general formula (IV) are desirably four to eight-membered rings, preferably four to six-membered rings, and more preferably, five or six-membered rings. Specific examples are: pyridine rings, piperazine rings, thiophene rings, pyrrole rings, imidazole rings, oxazole rings, and thiazole rings. They may be further substituted. Of these hetero rings, pyridine rings are particularly desirable.

When the groups denoted by $R^a$, $R^b$, and $R^c$ in general formula (IV) comprise one or more substituents, examples of the substituents are: halogen groups, alkyl groups, alkenyl groups, alkoxy groups, aryloxy groups, alkylthio groups, alkoxycarbonyl groups, aryloxycarbonyl groups, amino groups, acyl groups, alkylaminocarbonyl groups, arylaminocarbonyl groups, sulfonamide groups, cyano groups, carboxy groups, hydroxy groups, and sulfonic acid groups. Of these,

halogen groups, alkoxy groups, and alkylthio groups are particularly desirable. When $R^a$ denotes an aryl group as set forth above, the above substituents are desirably present at position 2, or positions 2 and 6, on the aryl group.

In general formula (IV), X denotes an oxygen atom or a sulfur atom, desirably an oxygen atom.

Examples of desirable compounds denoted by general formula (IV) are compounds in which $R^a$ denotes an aryl group with an alkyl group, aryl group, alkoxy group, or halogen group present at position 2, $R^b$ denotes an aryl group, $R^c$ denotes an alkyl group, and denotes an oxygen atom or a sulfur atom. Examples of preferred compounds are compounds in which $R^a$ denotes an aryl group with an alkyl goup, aryl group, alkoxy group, or halogen group present at position 2 and 6, $R^b$ denotes an aryl group, $R^c$ denotes an alkyl group, and X denotes an oxygen atom. Examples of compounds of greater preference are compounds in which $R^a$ denotes a 2,6-dimethoxybenzoyl group or 2,6-dichlorobenzoyl group, $R^b$ denotes a phenyl group, $R^c$ denotes an ethyl group or isopropyl group, and X denotes an oxygen atom.

Specific examples of the phosphorus compound denoted by general formula (IV) are given below. However, the present invention is not limited to these specific examples.

I-1
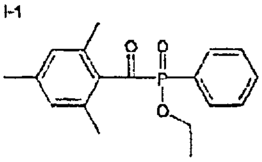
I-2
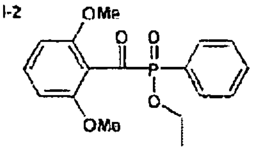
I-3
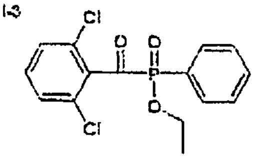

I-4
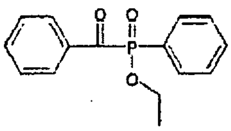
I-5
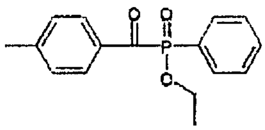
I-6
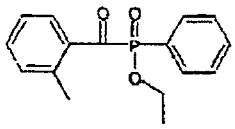

I-7
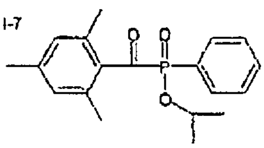
I-8
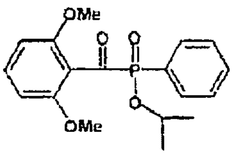
I-9
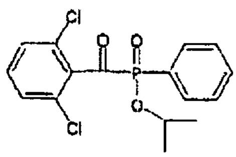

I-10
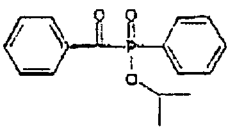
I-11
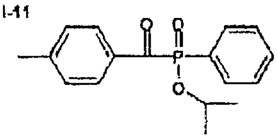
I-12
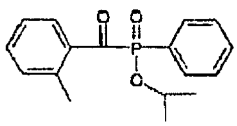

I-13
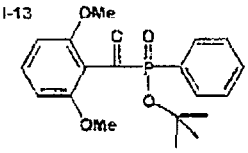
I-14
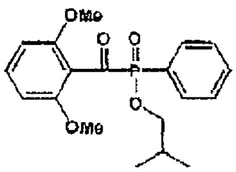
I-15
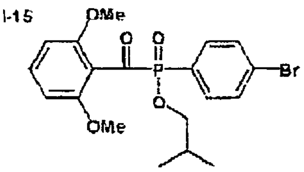

I-16

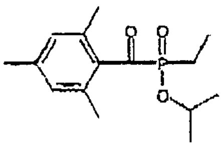

I-17

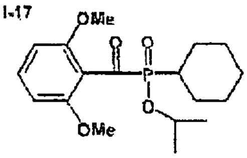

I-18

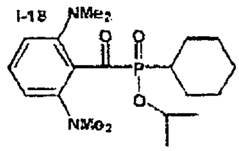

I-19

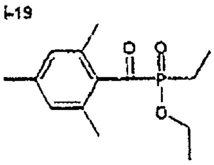

I-20

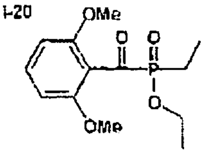

I-21

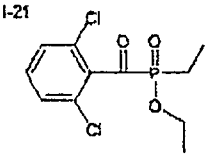

I-22

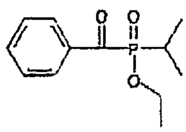

I-23

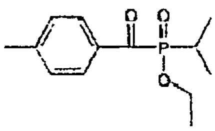

I-24

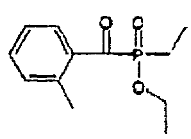

I-25

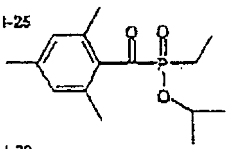

I-26

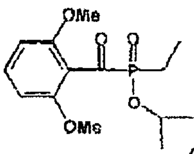

I-27

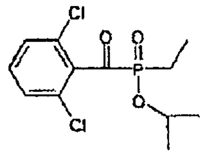

I-28

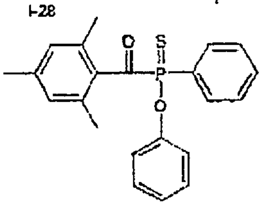

I-29

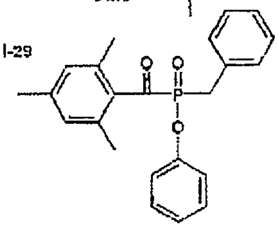

I-30

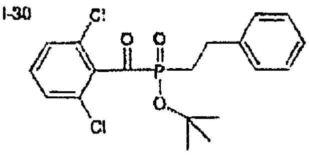

I-31

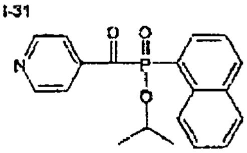

I-32

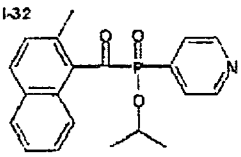

I-33

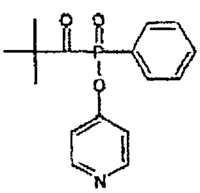

A method of synthesizing the above-described compound denoted by general formula (IV) is described in detail in, for example, DE2830927A1.

The content of the photopolymerization initiator in the optical recording composition of the present invention is desirably 0.01 to 5 weight percent, preferably 1 to 3 weight percent. When the above content is equal to or greater than 0.01 weight percent, interference images of good sensitivity can be ensured. At equal, to or lower than 5 weight percent, a recording layer that is adequately transparent to the recording beam and exhibits good recording sensitivity can be formed.

Matrix

The recording layer of an optical recording medium normally comprises a polymer to hold the photopolymerization initiator and monomers related to the recording and storage, known as a matrix. The matrix can be employed for achieving enhanced coating properties, coating strength, and hologram recording characteristics. The optical recording composition of the present invention can comprise curing compounds in the form of a matrix binder and/or matrix forming components (matrix precursors). A method of forming the matrix by, for example, coating a composition containing the matrix precursor on the surface of a substrate and then curing it is desirable because it permits the formation of the recording layer without the use of, or using only a small quantity of solvent. Thermosetting compounds and light-curing compounds employing catalysts and the like that cure when irradiated with light may be employed as these curing compounds. Thermosetting compounds are desirable from the perspective of recording characteristics.

The thermosetting compound suitable for use in the optical recording compositions of the present invention is not specifically limited. The matrix contained in the recording layer may be suitably selected based on the objective. Examples are urethane resins formed from isocyanate compounds and alcohol compounds; epoxy compounds formed from oxysilane compounds; melamine compounds; formalin compounds; ester compounds of unsaturated acids such as (meth)acrylic acid and itaconic acid; and polymers obtained by polymerizing amide compounds.

Of these, polyurethane matrices formed from isocyanate compounds and alcohol compounds are preferable. From the perspective of recording retention properties, three-dimensional polyurethane matrices formed from polyfunctional isocyanates and polyfunctional alcohols are particularly preferred.

The details of polyfunctional isocyanates and polyfunctional alcohols capable of forming polyurethane matrices are described below.

Examples of the polyfunctional isocyanates are: biscyclobexylmethane diisocyanate, hexamethylene diisocyanate, phenylene-1,3-diisocyanate, phenylene-1,4-diisocyanate, 1-methoxyphenylene-2,4-diisocyanate, 1-methylphenylene-2,4-diisocyanate, 2,4-tolylene diisocyanate, 2,6-tolylene diisocyanate, 1,3-xylylene diisocyanate, 1,4-xylylene diisocyanate, bipbenylene-4,4'-diisocyanate, 3,3'-dimethoxybiphenylene-4,4'-diisocyanate, 3,3'-dimethylbiphenylene-4,4'-diisocyanate, diphenylmethane-2,4'-diisocyanate, diphenylmethane-4,4'-diisocyanate, 3,3'-dimethoxydiphenylmethane-4,4'-diisocyanate, 3,3'-dimethyldiphenylmethane-4,4'-diisocyanate, naphthylene-1,5-diisocyanate; cyclobutylene-1,3-diisocyanate, cyclopentylene-1,3-diisocyanate, cyclohexylene-1,3-diisocyanate, cyclohexylene-1,4-diisocyanate, 1-methylcyclohexylene-2,4-diisocyanate, 1-methylcyclohexylene-2,6-diisocyanate, 1-isocyanate-3,3,5-trimethyl-5-isocyanate methylcyclohexane, cyclohe-xane-1,3-bis(methylisocyanate), cyrlohexane-1,4-bis(methylisocyanate), isophorone diisocyanate, dicyclohexylmethane-2,4'-diisocyanate, dicyclohexylmethane-4,4'-diisocyanate, ethylene diisocyanate, tetramethylene-1,4-diisocyanate, hexamethylene-1,6-diisocyanate, dodecamethylene-1,12-diisocyanate, phenyl-1 3,5-triisocyanate, diphenylmethane-2,4,4'-triisocyanate, diphenylmethane-2,5,4'-biisocyanate, triphenylmethane-2,4',4"-triisocyarate, triphenylmethane-4,4',4"-triisocyanate, diphenylmethane-2,4,2',4'-tetraisocyanate, diphenylmethane-2,5,2',5'-tetraisocyanate, cyclohexane-1,3,5-triisocyanate, cyclohexane-1,3,5-tris(methylisocyanate), 3,5-dimethylcyclohexane-1,3,5-tris(methylisocyanate), 1,3,5-trimethylcyclohexane-1,3,5-tris(methylisocyanate), dicyclohexylmethane-2,4,2'-triisocyanate; dicyclohexylmethane-2,4,4'-triisocyanate lysine isocyanate methyl ester, and prepolymers having isocyanates on both ends obtained by reacting a stoichiometrically excess quantity of one or more of these organic isocyanate compounds with a polyfunctional active hydrogen-containing compound. Of these, biscyclohexylmethane diisocyanate and hexamethylene diisocyanate are preferred. They may be employed singly or in combinations of two or more.

The polyfunctional alcohols may be in the form of a single polyfunctional alcohol, or in the form of a mixture with two or more polyfunctional alcohols. Examples or these polyfunctional alcohols are: glycols such as ethylene glycol, triethylene glycol, diethylene glycol, polyethylene glycol, propylene glycol, polypropylene glycol, and neopentyl glycol; diols such as butanediol, pentanediol, hexanediol, beptanediol, and tetramethylene glycol; bisphenols; compounds in the form of these polyfunctional alcohols modified by polyethyleneoxy chains or polypropyleneoxy chains; and compounds in the form, of these polyfunctional alcohols modified by polyethyleneoxy chains or polypropyleneoxy chains, such as glycerin, trimethylolpropane, butanetriol, pentanetriol, hexanetriol, decanetriol, and other triols.

The content of the above-described matrix-forming component (or matrix) in the optical recording composition of the present invention is desirably 10 to 95 weight percent, preferably 35 to 90 weight percent. When the content is equal to or greater than 10 weight percent, stable interference images can be readily achieved. At equal to or less than 95 weight percent, desirable properties can be obtained from the perspective of diffraction efficiency.

Other components

Polymerization inhibitors and oxidation inhibitors may be added to the optical recording composition of the present invention to improve the storage stability of the optical recording composition, as needed.

Examples of polymerization inhibitors and oxidation inhibitors are: hydroquinone, p-benxoquinone, hydroquinone monomethyl ether, 2,6-ditert-butyl-p-cresol, 2,2'-methylenebis(4-methyl-6-tert-butylphenol), triphenylphosphite, trisnonylphenylphosphite, phenothiazine, and N-isopropyl-N'-phenyl-p-phenylenediamine.

The quantity of polymerization inhibitor or oxidation inhibitor added is preferably equal to or less than 3 weight percent of the total quantity of recording monomer. When the quantity added exceeds 3 weight percent, polymerization may slow down, and in extreme cases, ceases.

As needed, a sensitizing dye may be added to the optical recording composition of the present invention. Known compounds such as those described in "Research Disclosure, Vol. 200, 1980, December, Item 20036" and "Sensitizers" (pp. 160-163, Kodansha, ed. by K. Tokumaru and M. Okawara, 1987) and the like may be employed as sensitizing dyes. Specific examples of sensitizing dyes are: 3-ketocoumarin compounds described in Japanese Unexamined Patent Publication (KOKAI) Showa No. 58-15603: thiopyrilium salt described in Japanese Unexamined Patent Publication (KOKAI) Showa No. 58-40302; naphthothiazole merocyanine compounds described in Japanese Examined Patent Publications (KOKOKU) Showa Nos. 59-28328 and 60-53300: and merocyanine compounds described in Japanese Examined Patent Publications (KOKOKU) Showa Nos. 61-9621 and 62-3842 and Japanese Unexamined Patent Publications (KOKAI) Showa Nos. 59-89303 and 60-60104.

Further examples are the dyes described in "The Chemistry of Functional Dyes" (1981, CMC Press, pp. 393-416) and "coloring Materials" (60 [4] 212-224 (1987)). Specific examples are cationic methine dyes, cationic carbonium dyes, cationic quinoneimine dyes; cationic indoline dyes, and cationic styryl dyes.

Further, keto dyes such as coumarin (including ketocoumarin and sulfonocoumarin) dyes, merostyryl dyes, oxonol dyes, and hemioxonol dyes; nonketo dyes such as nonketo polymethine dyes, triarylmethane dyes, xanthene dyes, anthracene dyes, rhodamine dyes, acrylidine dyes, aniline dyes, and azo dyes; nonketo polymethine dyes such as azomethine dyes, cyanine dyes, carbocyamine dyes, dicarbocyanine dyes, tricarbocyanine dyes, hemicyanine dyes, and styryl dyes; and quinone imine dyes such as azine dyes, oxazine dyes, thiazine dyes, quinoline dyes, and thiazole dyes are included among the spectral sensitizing dyes.

These sensitizing dyes may be employed singly or in combinations of two or more.

A photo-heat converting material can be incorporated into the optical recording composition of the present invention for enhancing the sensitivity of the recording layer formed with the optical recording compositions.

The photo-heat concerting material is not specifically limited, and may be suitably selected based on the functions and properties desired. For example, for convenience during addition to the recording layer with the photopolymer and so as not to scatter incident light, all organic dye or pigment is desirable. From the perspective of not absorbing and not scattering light from the light source employed in recording, infrared radiation-absorbing dyes are desirable.

Such infrared radiation-absorbing dyes are not specifically limited, and may be suitably selected based on the objective. However, cationic dyes, complex-forming dyes, quinone-based neutral dyes, and the like are suitable. The maximum absorption wavelength of the infrared radiation-absoroing dye preferably falls within a range of 600 to 1,000 nm, more preferably a range of 700 to 900 nm.

The content of infrared radiation-absorbing dye in the optical recording composition of the present invention can be determined based on the absorbance at the wavelength of maximum absorbance in the infrared region in the recording medium formed with the optical recording composition of the present invention. This absorbance preferably falls within a range of 0.1 to 2.5, more preferably a range of 0.2 to 2.0.

As needed, the optical recording composition of the present invention may comprise a component that can diffuse into the inverse direction with that of the polymerizable components in order to reduce the volume change at polymerization, or a compound having an acid cleavage configuration may be added to the holographic recording composition in addition to the polymers.

The optical recording composition of the present invention can be employed as various holographic recording compositions capable of recording information when irradiated with a light containing information. In particular, it is suited to use as a volume holographic recording composition. A recording layer can be formed by coating the optical recording composition of the present invention on a substrate, for example. When the optical recording composition of the present invention contains a thermosetting compound such as those set forth above, a matrix can be formed by promoting the curing reaction by heating following coating. The heating conditions can be determined based on the thermosetting resin employed. The recording layer can be formed by casting when the viscosity of the optical recording composition is adequately low. When the viscosity is so high that casting is difficult, a dispenser can be employed to spread a recording layer on a lower substrate, and an upper substrate pressed onto the recording layer so as to cover it and spread it over the entire surface, thereby forming a recording medium.

HOLOGRAPHIC RECORDING MEDIUM

The holographic recording medium of the present invention comprises a recording layer comprising at least one optical recording compound described above. The recording layer can be formed with the optical recording composition of the present invention. For example, the recording layer comprised of the optical recording composition of the

present invention can be formed by the above-described method.

The holographic recording medium of the present invention comprises the above-described optical recording compound in a recording layer. Since the optical recording compound denoted by general formula (I) can undergo little volumetric shrinkage, a medium for high density recording that permits high-sensitivity recording and reproduction while affording good multiplex recording characteristics can be formed. To confirm that the compound is contained in the recording layer, the recording layer portion can be extracted with tetrahydrofuran (THF) or dioxane and the peak corresponding to the compound detected by gas chromatography (GC).

The holographic recording medium of the present invention comprises the above recording layer (holographic recording layer), and preferably comprises a lower substrate, a filter layer, a holographic recording layer, and an upper substrate. As needed, it may comprise additional layers such as a reflective layer, filter layer, first gap layer, and second gap layer.

The holographic recording medium of the present invention is capable of recording and reproducing information through utilization of the principle of the hologram. This may be a relatively thin planar hologram that records two-dimensional information or the like, or a volumetric hologram that records large quantities of information, such as three-dimensional images. It may be either of the transmitting or reflecting type. Since the holographic recording medium of the present invention is capable of recording high volumes of information, it is suitable for use as a volume holographic recording medium of which high recording density is demanded

The method of recording a hologram on the holographic recording medium of the present invention is not specifically limited; examples are amplitude holograms, phase holograms, blazed holograms, and complex amplitude holograms. Among these, a preferred method is the so-called "collinear method" in which recording of information in volume holographic recording regions is carried out by irradiating an informing light and a reference light onto a volume holographic recording area as coaxial beams to record information by means of interference pattern through interference of the informing light and the preference light.

Details of substrates and various layers that can be incorporated into the holographic recording medium of the present invention will be described below.

- Substrate -

The substrate is not specifically limited in terms of its shape, structure, size, or the like; these may be suitably selected based on the objective. For example, the substrate may be disk-shaped, card-shaped, or the like. A substrate of a material capable of ensuring the mechanical strength of the holographic recording medium can be suitably selected. When the light employed for recording and reproducing enters after passing through the substrate, a substrate that is adequately transparent at the wavelength region of the light employed is desirable.

Normally, glass, ceramic, resin, or the like is employed as the substrate material. From the perspectives of moldability and cost, resin is particularly suitable. Examples of such resins are: polycarbonate resin, acrylic, resin, epoxy resin, polystyrene resin, acrylonitrile - styrene copolymers, polyethylene resin, polypropylene resin, silicone resin, fluorine resin, ABS resin, and urethane resin. Of these, from the perspective of moldability, optical characteristics, and cost, polycarbonate resin and acrylic resin are preferred. Synthesized resins and commercially available resins may both be employed as substrates.

Normally, address servo areas are provided on the substrate at prescribed angular intervals as multiple positioning areas extending linearly in a radial, direction, with the fan-shaped intervals between adjacent address servo areas serving as data areas information for operating focus servos and tracking servos by the sampled servo method, as well as address information, is recorded (preformatted) as pre-embossed pits (servo pits) or the like in address servo areas. Focus servo operation can be conducted using the reflective surface of a reflective film. Wobble pits, for example, can be employed as information for operating a tracking servo. When the holographic recording medium is card-shaped, it is possible not to have a servo pit pattern.

The thickness of the substrate is not specifically limited, and may be suitably selected based on the objective: a thickness of 0.1. to 5 mm is preferable, with 0.3 to 2 mm being preferred. A substrate thickness of equal to or greater than 0.1 mm is capable of preventing shape deformation during disk storage, while a thickness of equal. to or less than 5 mm can avoid an overall disk weight generating, an excessive load on the drive motor.

- Recording Layer -

The recording layer, comprising the above-described optical recording compound, can be formed with the optical recording composition of the present invention and is capable of recording information by holography. The thickness of the recording layer is not specifically limited, and may be suitably selected based on the objective. A recording layer thickness falling within a range of 1 to 1,000 micrometers yields an adequate S/N ratio even when conducting 10 to 300 shift multiplexing, and a thickness falling within a range of 100 to 700 micrometers is advantageous in that it yields

a markedly good S/N ratio.

-Reflective Film -

A reflective film can be formed on the servo pit pattern surface of the substrate.
A material having high reflectance for the informing light and reference light is preferably employed as the material of the reflective film. When the wavelength of the light employed as the informing light and reference light ranges from 400 to 780 nm examples of desirable materials are Al, Al alloys, Ag, and Ag alloys. When the wavelength of the light employed as the informing light and reference light is equal to or greater than 650 nm, examples of desirable materials are AI, Al alloys, Ag, Ag alloys, Au, Cu alloys, and TiN.
By employing an optical recording medium that reflects light as well as can be recorded and/or erased information such as a DVD (digital video disk) as a reflective film, it is possible to record and rewrite directory information, such as the areas in which holograms have been recorded, when rewriting was conducted, and the areas in which errors are present and for which alternate processing has been conducted, without affecting the hologram.
The method of forming the reflective film is not specifically limited and may be suitably selected based on the objective, Various vapor phase growth methods such as vacuum deposition, sputtering, plasma CVD, optical CVD, ion plating, and electron beam vapor deposition may be employed. Of these, sputtering is superior from the perspectives of mass production, film quality, and the like.
The thickness of the reflective film is preferably equal to or greater than 50 nm, more preferably, equal to or greater thin. 100 nm, to obtain adequate reflectance.

- Filter Layer -

A filter layer can be provided on the servo pits of the subside, on the reflective layer, or on the first gap layer, described further below.
The filter layer has a function of reflecting selective wavelengths in which, among multiple light rays, only light of a specific wavelength is selectively reflected, permitting passing one light and reflecting a second light. It also has a function of preventing generation of noise in which irregular reflection of the informing light and the reference light by the reflective film of the recording medium is prevented without a shift in the selectively reflected wavelength even when the angle of incidence varies. Therefore, by stacking filter layers on the recording medium, it is possible to perform optical recording with high resolution and good díffraction efficiency.
The filter layer is not specifically limited and may be suitably selected based on the objective. For example, the filter layer can be comprised of a laminate in which at least one of a dichroic mirror layer, coloring material-containing layer, dielectric vapor deposition layer, single-layer or two- or more layer cholesteric layer and other layers suitably selected as needed is laminated. The thickness of the filter layer is not specifically limited and may be, for example, about 0.5 to 20 micrometers.
The filter layer may be laminated by direct application on the substrate or the like with the recording layer or may be laminated on a base material such as a film to prepare a filter layer which is then laminated on the substrate.

- First Gap Layer -

The first gap layer is formed as needed between the filter layer and the reflective film to flatten the surface of the lower substrate. It is also effective for adjusting the size of the hologram that is formed in the recording layer. That is, since the recording layer should form a certain size of the interference region of the recording-use reference light and the informing light, it is effective to provide a gap between the recording layer and the servo pit pattern.
For example, the first gap layer can be formed by applying a material such as an ultraviolet radiation-curing resin from above the servo pit pattern and curing it. When employing a filter layer formed by application on a transparent base material, the transparent base material can serve as the first gap layer.
The thickness of the first gap layer is not specifically limited, and can be suitably selected based on the objective. A thickness of 1 to 200 micrometers is desirable.

- Second Gap Layer -

The second gap layer is provided as needed between the recording layer and the filter layer.
The material of the second gap layer is not specifically limited, and may be suitably selected based on the objective. Example are transparent resin films such as triacetyl cellulose (IAC), polycarbonate (PC), polyethylene terephthalate (PET), polystyrene (PS), polysulfone (PSF), polyvinylalcohol (PVA), and poly(methyl methacrylate) (PMMA); and norbornene resin films such as a product called ARTON film made by JSR Corporation and a product called Zeonoa made

by Japan Zeon Co. Of these, those that are highly isotropic are desirable, with TAC, PC, the product called ARTON, and the product called Zeonoa being preferred.
The thickness of the second gap layer is not specifically limited and may be suitably selected based on the objective. A thickness of 1 to 200 micrometers is desirable.
Specific embodiments of the holographic recording medium of the present invention will be described in greater detail below. However, the present invention is not limited to these specific embodiments.

<First implementation embodiment>

Fig. 1 is a schematic cross-sectional view of the configuration of the holographic recording medium according to the first implementation embodiment. In holographic recording medium 21 according to the first implementation embodiments, a servo pit pattern 3 is formed on substrate 1 made of polycarbonate resin or glass, and aluminum, gold, platinum, or the like is coated on servo pit pattern 3 to provide reflective film 2. In Fig. 1, servo pit pattern 3 has been formed over the entire surface of lower substrate 1, but the servo pit pattern may be formed cyclically. Servo pit pattern 3 is normally 1,750 Angstroms (175 nm) in height, and is quite small relative to the thickness of the substrate an.d the other layers.
First gap layer 8 is formed by spin coating or the like a material such as an ultraviolet radiation-curing resin on reflective film 2 of lower substrate 1. First gap layer 8 is effective for both the protection of reflective layer 2 and the adjustment of the size of the hologram formed in recording layer 4. That is, providing a gap between recording layer 4 and servo pit pattern 3 is effective for the formation of an interference area for the recording-use reference light and informing light of a certain size in recording layer 4.
Filter layer 6 is provided on first gap layer 8. Recording layer 4 is sandwiched between filter layer 6 and upper substrate 5 (a polycarbonate resin substrate or glass substrate) to form holographic recording medium 21.
Fig. 1 shows a filter layer 6 that passes only infrared radiation and blocks light of all other colors. Accordingly, since the informing light and recording and reproducing-use reference light are blue, they axe blocked by filter layer 6 and do not reach reflective film 2. They return, exiting from entry and exit surface A.
Filter layer 6 is a multilayered vapor deposition film comprised of high refractive index layers and low refractive index layers deposited in alternating fashion.
Filter layer 6, comprised of a multilayered vapor deposition film, may be formed directly on first gap layer 8 by vacuum vapor deposition, or a film comprised of a multilayered vapor deposition film formed on a base material, may be punched into the shape of a holographic recording medium to employed as filter layer 6.
In this embodiments, holographic recording medium 21 may be disk-shaped or card-shaped. When card-shaped, the servo pit pattern may be absent. In holographic recording medium 21, the lower substrate is 0.6 mn, first gap layer 8 is 100 micrometers, filter layer 6 is 2 to 3 micrometers, recording layer 4 is 0.6 mm, and upper substrate 5 is 0.6 mm in thickness, for a total thickness of about 1.9 mm.
An optical system applicable for the recording of information on and the reproduction of information from holographic recording medium 21 will be described with reference to Fig. 3.
First, a light (red light) emitted by a servo laser is nearly 100 percent reflected by dichroic mirror 13, passing through objective lens 12. Objective lens 12 directs the servo light onto holographic recording medium 21 so that it focuses at a point on reflective film 2. That is, dichroic mirror 13 passes light of green and blue wavelengths while reflecting nearly 100 percent of red light. The servo light entering entry and exit surface A to which and from which the light enters and exits of holographic recording medium 21 passes through upper substrate 5, recording layer 4, filter layer 6, and first gap layer 8, is reflected by reflective layer 2, and passes back through first gap layer 8, filter layer 6, recording layer 4, and upper substrate 5, exiting entry and exit surface A. The returning light that exits passes through objective lens 12, is nearly 100 percent reflected by dichroic mirror 13, and the servo information is detected by a servo information detector (not shown in Fig. 3). The servo information, that is detected is employed for focus servo, tracking servo, slide servo, and the like. When the hologram material included in recording layer 4 is not sensitive to red light, the servo light passes through recording layer 4 without affecting recording layer 4, even when the servo light is randomly reflected by reflective film 2. Since the light in the form of the servo light reflected by reflective film 2 is nearly 100 percent reflected by dichroic mirror 13, the servo light is not detected by a CMOS sensor or CCD 14 for reproduction image detection and thus does not constitute noise to the reproduction light.
The informing light and recording-use reference light generated by the recording/reproducing laser passes through polarizing plate 16 and is linearly polarized. It then passes through half mirror 17, becoming circularly polarized light at the point where it passes through 1/4 wavelength plate 15. The light then passes through dichroic mirror 13, and is directed by objective lens 12 onto holographic recording medium 21 so that the informing light and recording-use reference light form an interference pattern in recording layer 4. The informing light and recording-use reference light enter through entry and exit surface A, interfering with each other to form an interference pattern in recording layer 4. Subsequently, the informing light and recording-use reference light pass through recording layer 4, entering filter layer

6. However, they are reflected before reaching the bottom, surface of filter layer 6, returning. That is, nether the informing light nor the recording-use reference light reaches reflective film 2. That is because filter layer 6 is a multilayered vapor deposition layer in which multiple high refractive index and low refractive index layers are alternatively laminated, and has the property of passing only red light.

<Second implementation embodiment>

Fig. 2 is a schematic cross-sectional view of the configuration of the holographic recording medium according to the second implementation embodiment. A servo pit pattern 3 is formed on substrate 1 made of polycarbonate resin or glass in the holographic recording medium 22 accoding to the second implementation embodiment. Reflective film 2 is provided by coating aluminum, gold, platinum, or the like on the surface of servo pit pattern 3. Servo pit pattern 3 is normally 1,750 Angstroms (175 nm) in height in the same manner as in the first implementation embodiment.

The configuration of the second implementation embodiment differs from that of the first implementation embodiment in that second gap layer 7 is provided between filter layer 6 and recording layer 4 in holographic recording medium 22 according to the second implementation embodiment A point at which the informing light and reproduction light are focused is present in second gap layer 7. When this area is embedded in a photopolymer, excessive consumption or monomer occurs due to excess exposure, and multiplexing recording capability diminishes. Accordingly, it is effective to provide a nonreactive transparent second gap layer.

Filter layer 6 in the form of a multilayered vapor deposition film comprised of multiple layers in which multiple high refractive index and low refractive index layers are alternately laminated is formed over first gap layer 8 once first gap layer 8 has been formed, and the same one as employed in the first implementation embodiment can be employed as filter layer 6 in the second implementation embodiment.

In holographic recording medium 22 of the second implementation embodiment, lower substrate 1 is 1.0 mm, first gap 8 is 100 micrometers, filter layer 6 is 3 to 5 micrometers, second gap layer 7 is 70 micrometers, recording layer 4 is 0.6 mm, and upper substrate 5 is 0.4 mm in thickness, for a total thickness of about 2.2 mm.

When recording or reproducing information, a red servo light and a green informing light and recording/reproducing reference light are directed onto holograghic recording medium 22 of the second implementation embodiment having the configuration set forth above. The servo light enters through entry and exit surface A, passing through recording layer 4, second gap layer 7, filter layer 6, and first gap layer 8, and is reflected by reflective film 2, returning. The returning light then passes sequentially back through first gap layer 8, filter layer 6, second gap layer 7, recording layer 4, and upper substrate 5, exiting through entry and exit surface A. The returning light that exits is used or focus servo, tracking servo, and the like. When the hologram material included in recording layer 4 is not sensitive to red light, the servo light passes through recording layer 4 and is randomly reflected by reflective film 2 without affecting recording layer 4. The green informing light and the like enters through entry and exit surface A, passing through recording layer 4 and second gap layer 7, and is reflected by filter layer 6, returning. The returning light then passes sequentially back through second gap layer 7, recording layer 4, and upper substrate 5, exiting through entry and exit layer A. During reproduction, as well, the reproduction-use reference light and the reproduction light generated by irradiating the reproduction-use reference light onto recording layer 4 exit through entry and exit surface A without reaching reflective film 2. The optical action around holographic recording medium 22 (objective lens 12, filter layer 6, and detectors in the forum of CMOS sensors or CCD 14 in Fig. 3) is identical to that in the first implementation embodiment and thus the description thereof is omitted.

METHOD OF RECORDING AND REPRODUCING INFORMATION

The present invention further relates to a method of recording and reproducing information in the holographic recording medium of the present invention. The method of recording and reproducing information of the present invention comprises irradiating the holographic recording medium of the present invention with an informing light and a reference light to form an interference image in the recording layer comprised in the holographic recording medium; and irradiating the holographic recording medium in which the interference image has been formed with a reproduction light. Irradiation of the informing light and reference light to the recording layer formed with the optical recording composition of the present invention can form an interference image in the recording layer. Next, normally, a fixing light is irradiated to the recording layer in which the interference image has been formed, thereby fixing the interference image. Subsequently, a reproduction light is irradiated to the holographic recording medium in which the interference image has been formed to reproduce the information.

A reproduction light (wavelength $\lambda_3$ nm) satisfying equation (1) below with a wavelength $\lambda_1$ at which a molar absorbance coefficient of equal to or greater than 5,000 mole·1·$cm^{-1}$ is exhibited by the optical recording compound contained in the recording layer is preferably employed in the method of recording and reproducing information of the present invention.

$$(\lambda_3 - 100) \leq \lambda_1 < \lambda_3 \qquad (1)$$

The details of the relation between wavelength $\lambda_1$ and the reproduction light wavelength are as set forth above. Further, as described above, the use of a reproduction light having a wavelength $\lambda_2$ at which the molar absorbance coefficient of the optical recording compound contained in the recording layer is equal to or lower than 100 mole·1·cm$^{-1}$ (preferably equal to or lower than 10 mole·1·cm$^{-1}$ and more preferably 0 mole·1·cm$^{-1}$) is preferred.

Normally, the absorption characteristics of the recording monomer depend primarily on main structural portions other than polymerizable groups. Thus, so long as no peculiar assembly is created, the absorption characteristics do not change greatly before and after the recording reaction. Thus, good recording and reproduction characteristics can be achieved by selecting the reproduction light based on the absorption characteristics of the recording monomer prior to the recording reaction, as set forth above.

The method of recording and reproducing information of the present invention will be described in detail below.

A light having coherent properties can be employed as the informing light. By irradiating the informing light and reference light onto the recording medium so that the optical axes of the informing light and reference light are coaxial, it is possible to record in the recording layer an interference image generated by interference of the informing light and reference light. Specifically, an informing light imparted with a two dimensional intensity distribution and a preference light of intensity nearly identical to that of the informing light are superposed in the recording layer and the interference pattern that they form is used to generate an optical characteristic distribution in the recording layer, thereby recording information. The wavelengths of the informing light and reference light are preferably equal to or greater than 400 nm, more preferably 400 to 2,000 nm, and further preferably, 400 to 700 nm.

After recording information (forming an interference image) by irradiating the informing light and reference light, a fixing light can be irradiated to fix the interference image. The wavelength of the fixing light is preferably less than 400 nm, more preferably equal to or greater than 100 nm but less than 400 nm, and further preferably, equal to or greater than 200 nm but less than 400 nm.

Information can be reproduced by irradiating a preference light onto an interference image formed by the above-described method. In the course of reading (reproducing) information that has been written, just a reference light is irradiated onto the recording layer with the same arrangement as during recording, causing a reproduction light having an intensity distribution corresponding to the optical characteristic distribution formed in the recording layer to exit the recording layer.

An optical recording and reproducing device suited to use in the recording and reproducing of information in the holographic recording medium of the present invention will be described with reference to Fig. 4.

The Optical, recording and reproducing device 100 of Fig. 4 is equipped with spindle 81 on which is mounted holographic recording medium 20, spindle motor 82 rotating spindle 81, and spindle servo circuit 83 controlling spindle motor 82 so that it maintains holographic recording medium 20 at a prescribed rpm level.

Recording and reproducing device 100 is further equipped with pickup 31 for recording information, by irradiating a informing light and a recording-use reference light onto holographic recording medium 20, and for reproducing information, that has been recorded on holographic recording medium 20 by irradiating a reproducing-use reference light onto holographic recording medium 20 and detecting the reproduction light; and driving device 84 capable of moving pickup 31 radially with respect to holographic recording medium 20.

Optical recording and reproducing device 100 is equipped with detection circuit 85 for detecting focus error signal FE, tracking error signal TE, and reproduction signal RF based on the output signals of pickup 31, focus servo circuit 86 that operates a focus servo by driving an actuator in pickup 31 to move an objective lens (not shown in Fig. 4) in the direction of thickness of holographic recording medium 20 based on focus error signal FE detected by detection circuit 85; tracking servo circuit 87 that operates a tracking servo by driving an actuator in pickup 31 to move an objective lens in the radial, direction of holographic recording medium 20 based on tracking error signal TE detected by detection circuit 85; and slide servo circuit 88 that operates a slide servo by controlling drive device 84 to move pickup 31 in the radial direction of holographic recording medium 20 based on instructions from a controller, described further below, and tracking error signal TE.

Optical recording and reproducing device 100 is further equipped with signal processing circuit 89 that decodes the output data of a CCD array or CMOS in pickup 31 to reproduce data recorded in the data areas of holographic recording medium 20, reproduces a base clock based on reproduction signal RF from detection circuit 85, and determines addresses; controller 90 that effects overall control of optical recording and reproducing device 100; and operation element 91 providing various instructions to controller 90. Controller 90 inputs the base clock and address information outputted by signal processing circuit 89 and controls pickup 31, spindle servo circuit 83, slide servo circuit 88, and the like. Spindle servo circuit 83 inputs the base clock that is outputted by signal processing circuit 89. Controller 90 comprises a central processing unit (CPU), read only memory (ROM), and random access memory (RAM). The functions of controller

90 can be realized by having the CPU that employs the RAM as a work area and execute programs stored in the ROM.

EXAMPLES

The present invention will be described in detail below based on examples. However, the present invention is not limited to the examples.

(Examples of synthesizing the optical recording compounds)

Example Compounds (M-1), (M-2), (M-49); (M-50), (M-51), (M-52), and (M-53) were synthesized by the scheme below. The compounds were identified by $^1$H NMR. The various optical recording compounds denoted by general formula (I) and having the above-described absorption characteristics can be synthesized by the same or similar method as described in the following scheme.

<Synthesis of M-1>

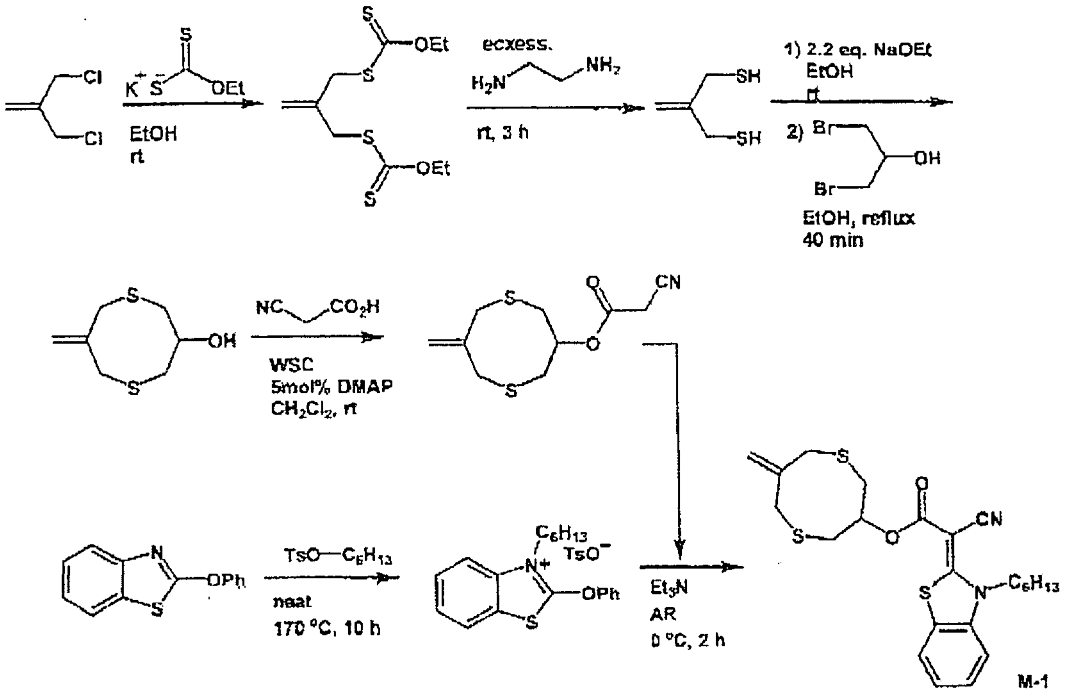


M-1

δ 1.01 (t, 3H), 1.53 (dd, 2H), 1.87-1.99 (m, 2H), 3.07 (dd, 4H), 3.18-3. 33 (m, 4H), 4.62 (dd, 2H), 5.09-5.19 (m, 1H), 5.26 (s, 2H), 7.25-7.34 (m, 2H), 7.47 (t, 1H), 7.68 (d, 1H) [λmax=341.0, ε=40859(in $CH_2$Cl2)]

<Synthesis of M-2>

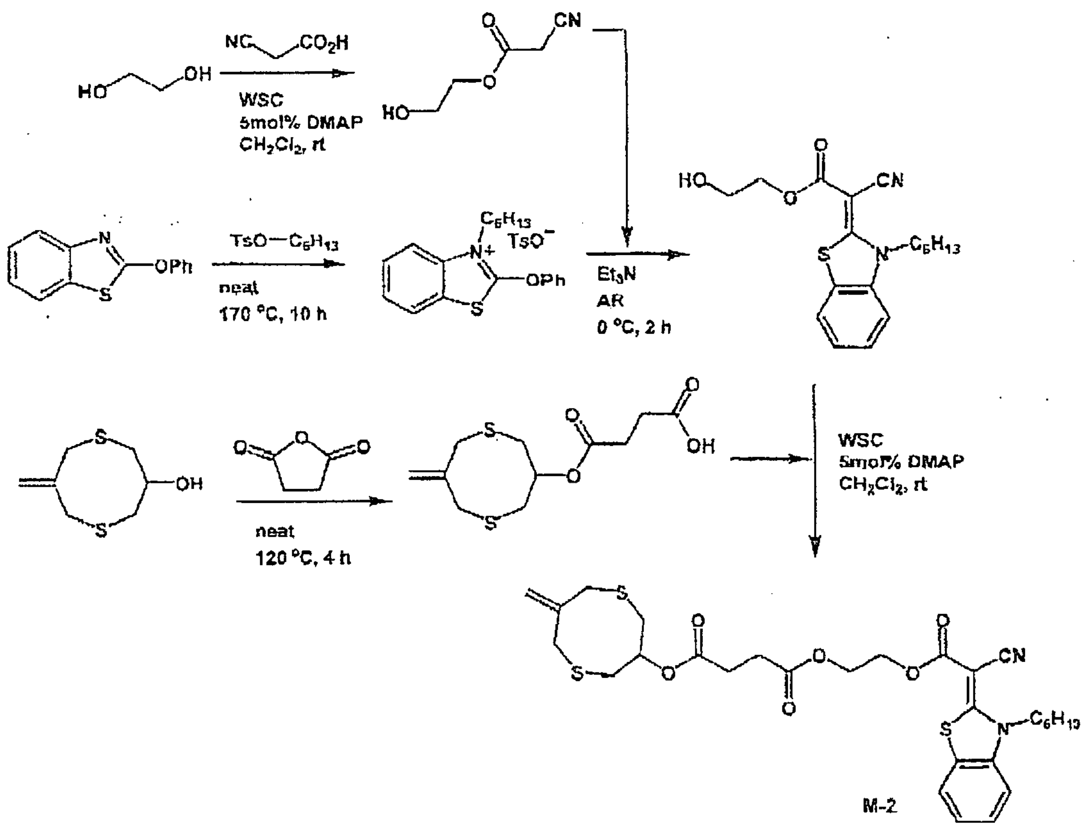


M-2

$^1H$ NMR (300 MHz, $CDCl_3$) $\delta$ 1.02 (t, 3H), 1.56 (dd, 2H), 1.90-2.00 (m, 2H), 2.6.2-2.71 (m,4H), 3.08(dd, 4H), 3.24 (s, 4H), 4.39-4.49 (m, 4H), 4.60 (dd, 2H), 5.01-5.09 (m, 1H), 5.23 (s, 2H), 7.29-7.34 (m, 2H), 7.47 (t, 1H), 7.69 (d, 1H) [$\lambda$max=341.0, $\varepsilon$=41139(in $CH_2Cl_2$)]

<Synthesis of M-49>

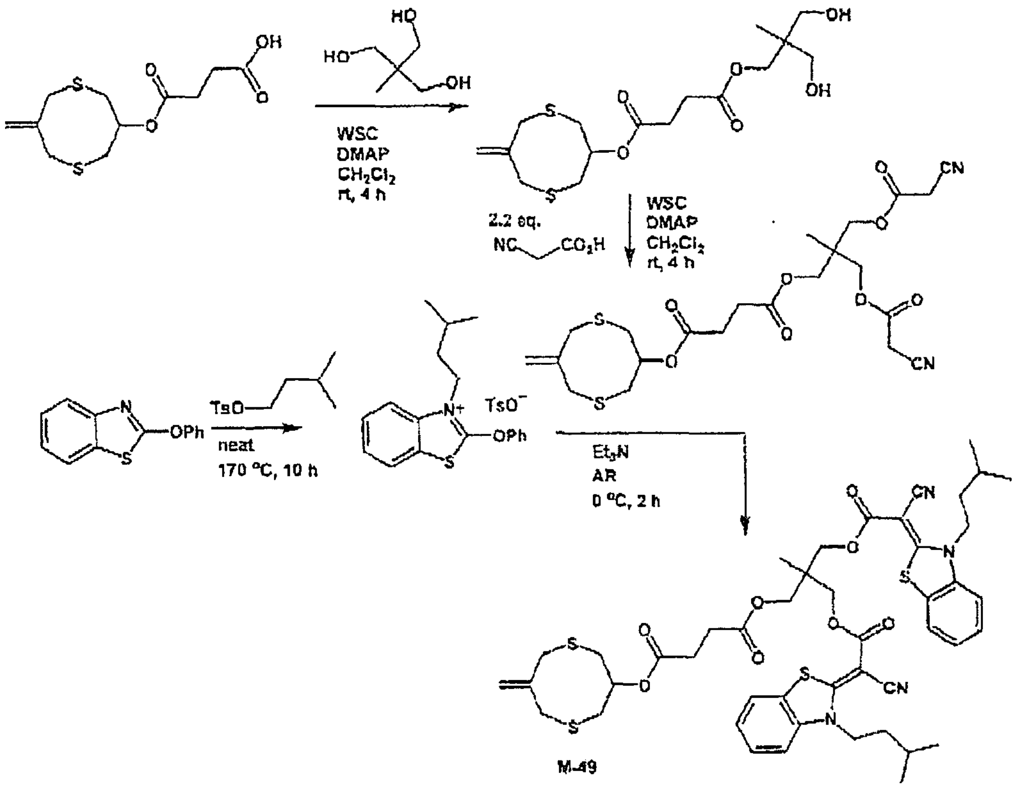


M-49

$^1$H NMR (300 MHz, $CDCl_3$) δ 1.09 (d, 12), 1.70 (s, 4H), 1.79-1.98 (m, 4H), 2.62 (dd, 4H), 3.03 (dd, 4H), 3.23 (s, 3H), 4.21 (s, 2H), 4.28 (s, 4H), 4.6 2 (t, 2H), 5.01-5.05 (m, 1H), 5.21 (s, 2H), 7.23-7.33 (m, 4H), 7.45 (t, 2H), 7.69 (d, 2H) [λmax==341.0, ε=80923(in $CH_2Cl_2$)]:

<Synthesis of M-50>

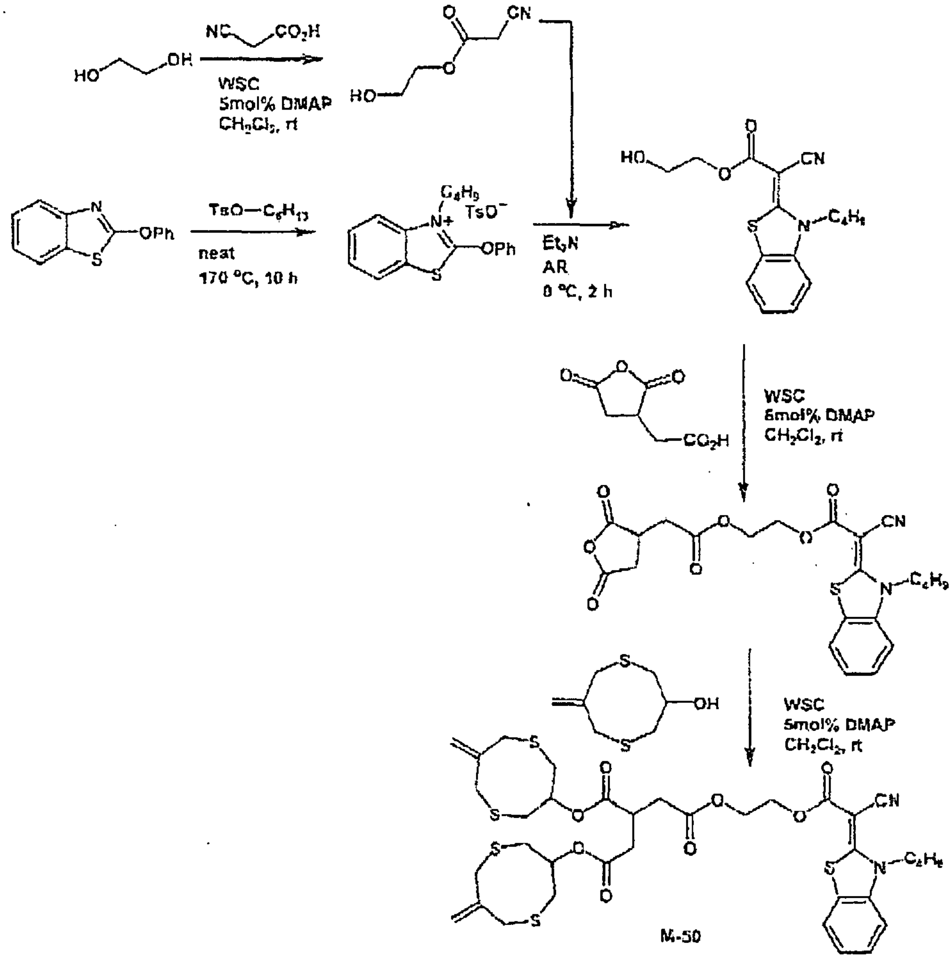


M-50

$^1$H NMR (400 MHz, $CDCl_3$) δ 1.03 (t, 3H), 1.52-1.57 (m, 2H), 1.92-1.9 6 (m, 2H), 2.59-2.79 (m, 4H), 2.99-3.03 (m, 8H), 3.19-3.22 (m, 9H), 4.38-4.46 (m, 4H), 4.61 (t, 2H), 5.00-5.05 (m, 2H), 5.22 (s, 4H), 7.27-7.34 (m, 2H), 7.47 (t, 1H), 7.68 (d, 1H) [λmax=341.5, ε=40002(in $CH_2Cl_2$)]

<synthesis of M-51>

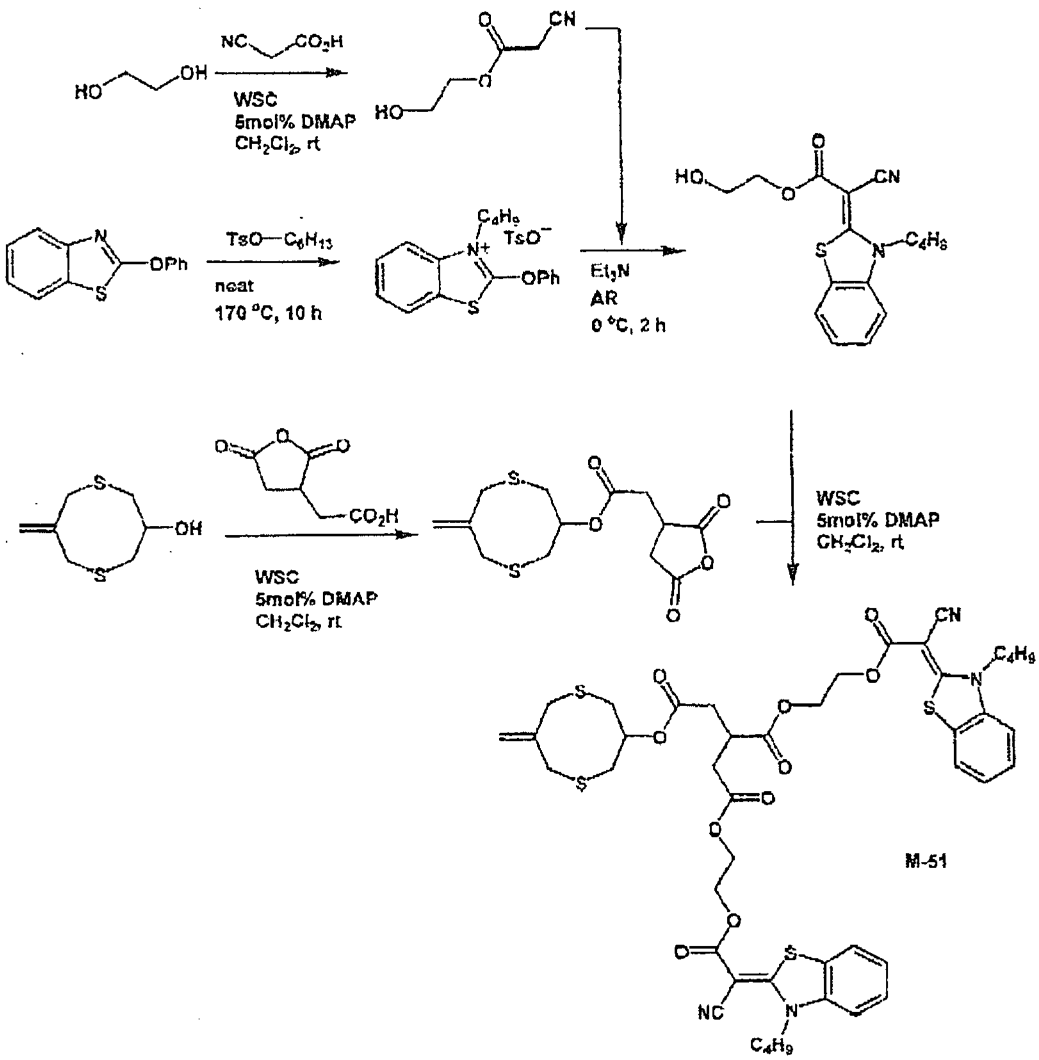


M-51

$^1$H NMR (400 MHz, $CDCl_3$) δ 1.02 (t, 6H), 1.49-1.59 (m, 4H), 1.89-1.97 (m, 4H), 2.64-2.70 (m, 2H), 2.76-2.89 (m, 2H), 2.96-3.06 (m, 4H), 3.15-3.24 (m, 4H), 3-29-3.33 (m, 1H), 4.37-4.67 (m, 8H), 4.60 (t, 4H), 4.99-5.03 (m, 1H), 5.19 (s, 2H), 7.26-7.31 (m, 4H), 7.45 (t. 2H), 7.63 (d, 2H) [λmax=341.5, ε=86873(in $CH_2Cl_2$)]

<synthesis of M-52>

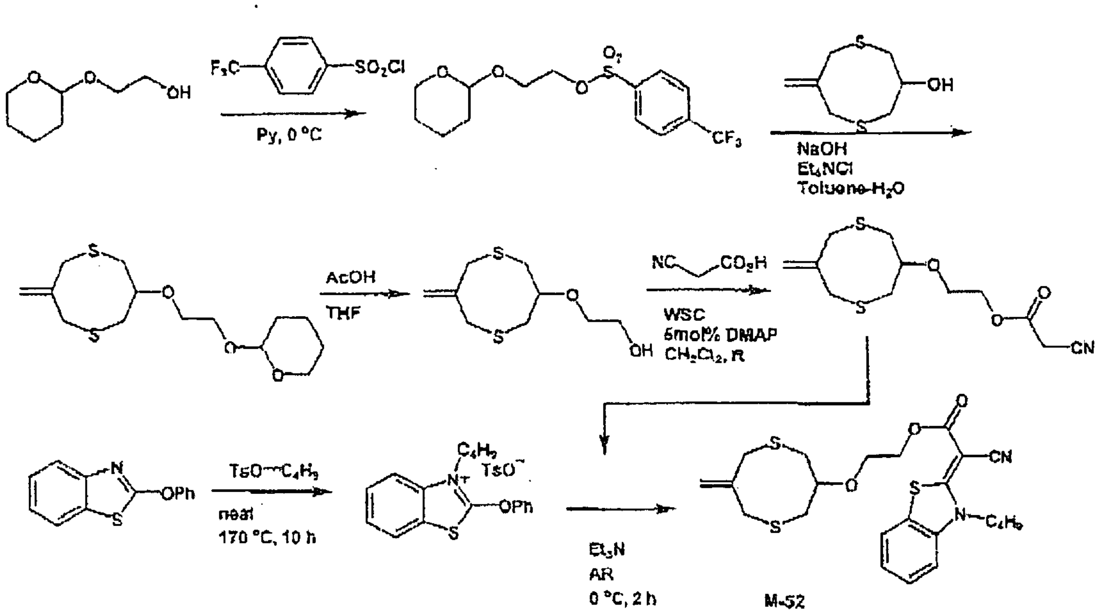


M-52

$^1H$ NMR (300 MHz, $CDCl_3$) δ 1.01 (t, 3H), 1.50-1.59 (m, 2H), 1.89-1.97 (m, 2H), 2.99-3.09 (m, 4H), 3.23 (s, 4H), 3.72-3.80 (m, 3H), 4.35 (t, 2H), 4.61 (t, 2H), 5.20 (s, 2H), 7.24-7.32 (m, 2H), 7.46 (t, 1H), 7.66 (d, 1H) [λmax=341.5, ε=4597(in $CH_2Cl_2$)]

<synthesis of M-53>

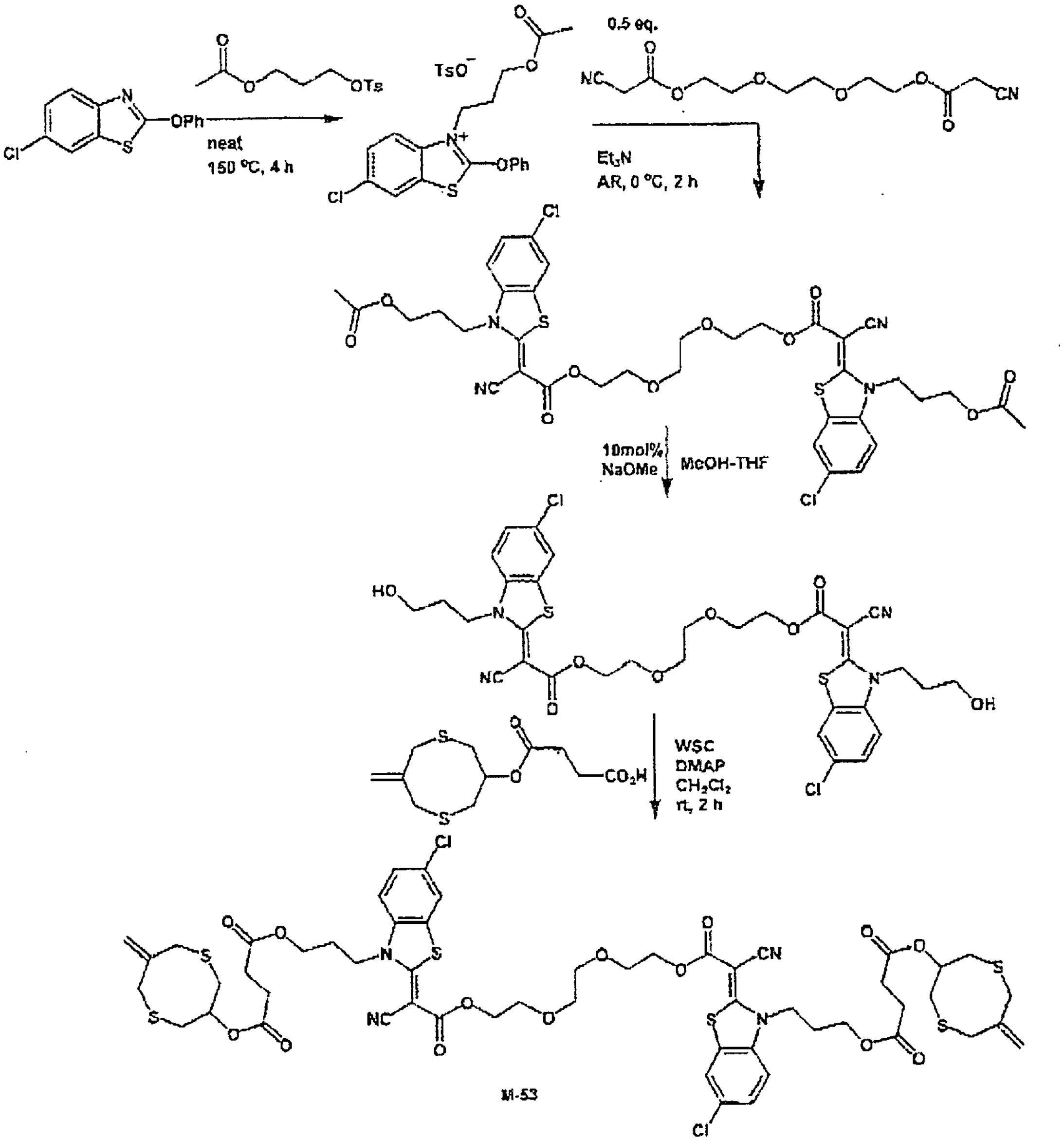


M-53

$^1$H NMR (300 MHz, $CDCl_3$) δ 2.21-2.25 (m, 4), 2.61 (s, 8H), 3.04 (dd, 8H), 3.23 (s, 8H), 3.72 (s, 4), 3.88 (t, 4H), 4.31 (t, 4H), 4.42 (t, 4H), 4.62 (t, 4H), 5.00-5.09 (m, 2H), 5.22 (s, 4H), 7.23-7.31 (m, 2H), 7.51 (dd, 2H), 7.61 (s, 2H) [λmax=345.0, ε=88211 (in $CH_2Cl_2$)]

(Examples of synthesizing photo-induced radical polymerization initiators)

Example Compounds (1-2), (I-3), (I-8), and (I-9) where synthesized by the general scheme given below based on the method described in DE2830927A1. In the following scheme, $R^a$ to $R^c$ have the same definitions as in general formula (IV). Various compounds in which $R^a$ to $R^c$ vary can be synthesized by the following scheme by employing different starting materials in synthesis.

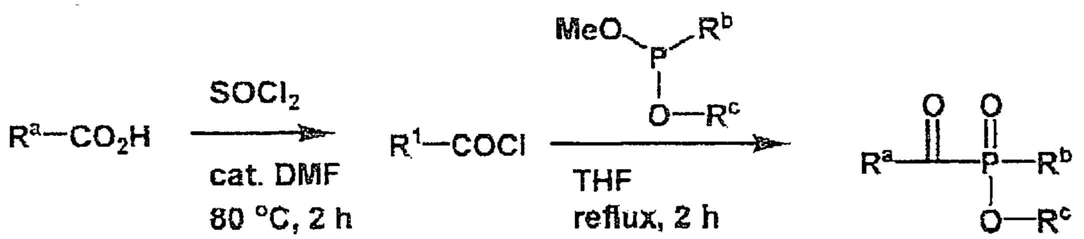


The identification results of Example Compounds (I-2), (I-3), (1-8) and (I-9) thus obtained are given below.

<I-2>
$^1$HNMR (300 MHz, $CDCl_3$) δ 1.32 (t, 3H), 3.62(s, 6H), 4.13-4.26 (m, 2H), 6.49 (d, 2H), 732(t, 1H), 7.40-7.51 (m, 2H), 7.54-7.59(m, 1H), 7.79 (dd, 2H)
<I-3>
$^1$H NMR (300 MHz, $CDCl_3$) δ 1.37 (d, 3H), 1.39 (d, 3H), 4.91-4.98 (m, 1H), 7.29 (s, 3H), 7.47-7.51 (m, 2H), 7.59-7.61 (m 1H), 7.91 (dd, 2H)
<I-8>
$^1$H NMR (300 MHz, $CDCl_3$) δ 1.34 (d, 3H), 1.38 (d, 3H), 3.67(s, 6H), 4.68-4.80 (m, 1H), 7.32 (t, 1H), 7.41-7.50 (m, 2H), 7.52-7.59 (m, 1M, 7.90 (dd, 2H)
<I-9>
$^1$H NMR (300 MHz, $CDCl_3$) δ 1.36 (t, 3H), 4.41 (q, 2H), 7.28 (s, 3H), 7.58-7.64 (m, 1H), 7.93 (dd, 2H)

- Measurement of absorption characteristics -

Each of Example compounds employed in Examples described further below was dissolved in methylene chloride to obtain solutions. A spectrophotometer for the ultraviolet and visible regions was used to measure the absorption spectra of the solutions, and the maximum absorption wavelength $\lambda_{max,}$ molar absorbance coefficient at $\lambda_{max}$, and the molar absorbance coefficient at the reproduction light wavelength (532 nm or 405 nm) in medium evaluation, described further below, were obtained,

Table 1

| | $\lambda_{max}$ (nm) | Molar absorbance coefficient at $\lambda_{max}$ (mole·l·cm$^{-1}$) | Molar absorbance coefficient at the reproduction light wavelength (mole·l·cm$^{-1}$) |
|---|---|---|---|
| M-17 | 412.0 | 30090 | 66 |
| M-18 | 475.5 | 27891 | 50 |
| M-21 | 470.0 | 93466 | 3 |
| M-2 | 341.0 | 41139 | 2 |
| M-15 | 310.5 | 18623 | 1 |
| M-34 | 365.0 | 62188 | 98 |
| M-40 | 367.5 | 29454 | 4 |
| M-50 | 341.5 | 40002 | 2 |
| M-51 | 341.5 | 86873 | 2 |
| M-52 | 341.5 | 45973 | 1 |
| M-53 | 345.0 | 88211 | 4 |

-- Preparation of holographic recording composition --

Example 1

A 31.5 g quantity of biscyclohexylmethane diisocyanate, 61.2 g of polypropylene oxide triol (weight average

molecular weight 1,000), 2.5 g of tetramethylene glycol, 3.72 g of Example Compound (M-17), 0.69 g of the photopolymerization initiator bis(η5-2,4-cyclo-pentanediene-1-yl)bis(2,6-difluoro-3-(1H-pyrrole-1-yl)phenyl)titanium (Irgacure 784, made by Chiba Specialty Chemicals), and 1.01 g of dibutyl tin laurate were mixed under a nitrogen gas flow to prepare a holographic recording composition.

Example 2

-- Preparation of holographic recording composition --

With the exception that 3.93 g of Example Compound (M-18) was employed instead of Example Compound (M-17) in Example 1, a holographic recording composition was prepared in the same manner as in Example 1.

Example 3

-- Preparation of homographic recording composition --

With the exception that 4.7 g of Example Compound (M-21) was employed instead of Example Compound (M-17) in Example 1, a holographic recording composition was prepared in tube same manner as in Example 1.

Example 4

-- Preparation of holographic recording composition --

A 6.4 g quantity of hexamethylene diisocyanate (made by Mitsui Chemicals Polyurethanes, Inc.; product name: Takenate T-700), 5.21 g of polypropylene oxide triol (made by Mitsui Chemicals Polyurethane, Inc.; product name: MN-300), 4.64 g of polyethylene glycol (made by Tokyo Chemical Industry Co., Ltd.), 2.90 g of Example Compound (M-2), 0.16 g of photopolymerization initiator (2,4,6-trimethylbenzoylphenylphosphinic acid ethyl ester; product name: Lucirin TPO-L, made by BASF Japan), and 0.20 g of amine curing catalyst (made by SAN-APRO: product name: U-CAT 410) were mixed under a nitrogen flow to prepare a holographic recording composition.

Example 5

-- Preparation of holographic recording composition --

With the exception that 1.80 g of Example Compound (M-15) was employed instead of Example Compound (M-2) in Example 4, a holographic recording composition was prepared in the same manner as in Example 4.

Example 6

- Preparation of holographic recording composition --

With the exception that 2.20 g of Example Compound (M-34) was employed instead of Example Compound (M-2) in Example 4, a holographic recording composition was prepared in the same manner as in Example 4.

Example 7

-- Preparation of holographic recording composition --

With the exception that 2.05 g of Example Compound (M-40) was employed instead of Example Compound (M-2) in Example 4, a holographic recording composition was prepared in the same manner as in Example 4.

Example 8

-- Preparation of holographic recording composition --

With the exception that 0.16 g of Example Compound (I-8) was employed instead of the 0.16 g of photopolymerization initiator (2,4,6-trimethylbenzoylphenylphosphinic acid ethyl ester; product name: Lucirin TPO-L, made by BASF Japan) employed in Example 4, a holographic recording composition, was prepared in the same manner as in

Example 4.

Example 9

- Preparation of holographic recording composition -

With the exception that 3.80 g of Example Compound (M-50) was employed instead of Example Compound (M-2) in Example 4, a bolographic recording composition was prepared in the same manner as in Example 4.

Example 10

- Preparation of holographic recording composition -

With the exception that 4.48 g of Example Compound (M-51) was employed instead of Example Compound (M-2) in Example 4, a holographic recording composition was prepared in the same manner as in Example 4.

Example 11

- Preparation of holographic recording composition -

With the exception that 2.28 g of Example Compound (M-52) was employed instead of Example Compound (M-2) in Example 4, a holographic recording composition was prepared in the same manner as in Example 4.

Example 12

-- Preparation of holographic recording composition -

With the exception that 5.99 g of Example Compound (M-53) was employed instead of Example Compound (M-2) in Example 4, a holographic recording composition was prepared in the same manner as in Example 4.

Comparative Example 1

- Preparation of holographic recording composition-

A 31.5 g quantity of biscyclohexylmethane diisocyanate, 61.2 g of polypropylene oxide triol (weight average molecular weight 1,000), 2.5 g of tetramethylene glycol, 3.1 g of monomer in the form of Comparative Compound R-1 below (2,4,6-tribromophenyl acrylate) described in Published Japanese Translation of a PCT International Application (TOKUHYO) No. 2005-502918, 0.69 g of photopolymerization initiator (Irgacure 784, made by Chiba Specialty Chemical), and 1.01 g of dibutyl tin laurate were mixed under a nitrogen gas flow to prepare a holographic, recording composition.

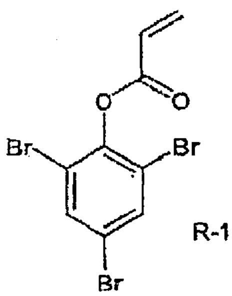

R-1

Comparative Example 2

-- Preparation of holographic recording composition --

With the exception that 3.1 g of monomer in the form of Comparative Compound R-2 below, described in U.S. Patent No. 4,959,284, was employed instead of Comparative Compound R-1 in Comparative Example 1, a holographic

recording composition was prepared in the same manner as in Comparative Example 1.

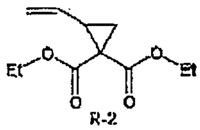

R-2

Comparative Example 3

-- Preparation of homographic recording composition --

A 6.4 g quantity of hexamethylene diisocyanate (made by Mitsui, Chemicals Polyurethanes, Inc., product name: Takenate T-700), 5.21 g of polypropylene oxide triol (made by Mitsui Chemicals Polyurethanes, Inc.; product name: MN-300), 4.64 g of polyethylene glycol (made by Tokyo Chemical Industry Co., Ltd.), 1.85 g of 2,4,6-tribromophenyl acrylate (made by Dai-ichi Kogyo Seiyaku Co., Ltd.; product name: BR-30), 0-16 g of photopolymerization initiator (2,4,6-trimethylbenzoylphenylphosphinic acid ethyl ester; product name: Lucirin TPO-L, made by BASF Japan), and 0.20 g of amine curing catalyst (made by SAN-APRO; product name : U-CAT 410) were mixed under a nitrogen flow to prepare a holographic recording composition.

Examples 13 to 24 and Comparative Examples 4 to 6

- Preparation of optical recording medium --

A first substrate was prepared by subjecting one side of a glass sheet 0.5 mm in thickness to an antireflective treatment to impart a reflectance of 0.1 percent for perpendicularly incident light with the wavelengths of 532 nm and 405 nm.

A second substrate was prepared by subjecting one side of a glass sheet 0.5 mm in thickness to an aluminum vapor deposition treatment to impart a reflectance of 90 percent for perpendicularly incident light with the wavelengths of 532 nm and 405 nm.

A transparent polyethylene terephthalate sheet 500 micrometers in thickness was provided as a spacer on the side of the first substrate that had not been subjected to the antireflective treatment.

The holographic recording compositions of Examples 1 to 12 and Comparative Examples 1 to 3 were each separately placed on first substrates, the aluminum vapor deposited surface of the second substrates were stacked on the holographic recording composition in such a manner that air was not entrained, and the first and second substrates were bonded through the sparer. Subsequently, Examples 13 to 15 and Comparative Examples 4 and 5 were left for 24 hours at 45°C to prepare various optical recording media. Examples 16 to 24 and Comparative Example 6 were placed for 6 hours at 80°C to prepare various optical recording media. The thickness of the recording layers formed was 200 micrometers in all media prepared.

<Recording in the Optical Recording Medium and Evaluation>

- Recording capacity -

The dynamic range of the storage capacity is denoted by an index referred to as "M#". The recording capacity of each of the optical recording media of Example 13 to 24 and Comparative Examples 4 to 6 was measured with a planar wave tester. The measurement is described below.

Adopting a diffraction efficiency of 1 to 3 percent per cycle as standard, in a manner not exceeding 10 percent, 61 multiplexed recordings were conducted at intervals of 1° from -30° to +30° until the sensitivity of the recording material almost disappeared. Fixing was conducted until absorption of the recording light source by the sample almost ceased (fixing light source: High-power UV-LED (UV-400) made by Keyence), the angular selectivity was evaluated at 0.01° intervals from -32° to +32°, and the square roots of the diffraction efficiencies $\eta_i$ of the peaks obtained were summed to calculate M#. Diffraction efficiency $\eta$ was evaluated as set forth below.

$$\eta = \text{diffracted light}/(\text{diffracted light} + \text{transmitted light}) \times 100$$

$$M\# = \Sigma\sqrt{\eta_i}$$

For Examples 13 to 15 and Comparative Examples 4 and 5, the wavelength of the recording light and reference light was 532 nm, and the wavelength of the reproduction light was 532 nm. For Examples 16 to 24 and Comparative Example 6, the wavelength or the recording light and preference light was 405 nm, and the wavelength of the reproduction light was 405 nm.

- Volumetric Shrinkage of Medium -

Calculation from changes in the interference fringe due to planar wave two-beam interference is a known means of analyzing photopolymer shrinkage and expansion. In the fringe plane rotation (FPR) model, it is possible to evaluate shrinkage of the recording layer occurring between recording and reproduction from the difference between the angle during recording of a Bragg grating recorded at an angle on a recording medium and the optimal reproduction angle following recording (or after fixing). Fig. 5 is a conceptual diagram of this model. It is supposed that change in shrinkage before and after recording occurs in just the direction of thickness.
The change in incline of the interference fringe in the FPR model is given by the following equation.
$$\Phi^* = \Phi + \Delta\Phi = \arctan[\tan\Phi/(1-\alpha)] \cdots (1)$$

In the above equation, Φ denotes the incline of the interference fringe during recording and Φ* denotes the incline of the interference fringe during reproduction, and a denotes the rate of change in the recording layer.
For the various recording media, an interference fringe (6 mm in diameter) of weak diffraction efficiency (equal to or less than 1 percent) was recorded at a prescribed angle Φ on a recording medium with a planar wave two-beam interference device with a laser having the recording wavelength (532 nm or 405 nm) indicated in Table 2. Subsequently, the recording medium was either exposed to light or irradiated with a fixing light (365 nm laser, spot diameter 10 mm) to completely consume the photoreactive compounds in the recording medium. Next, the dependence of the diffraction efficiency on the reproduction angle was measured and the angle of the interference fringe was measured again. The shrinkage rate α of the recording medium was estimated based on equation (1) from the change in the incline angle of the interference fringe during recording and after exposure to light or fixation.
Table 2

| | Holographic recording composition | M# | Volumetric Shrinkage % | Recording wavelength |
|---|---|---|---|---|
| Example 13 | Example 1 | 9.8 | 0.1 | 532 nm |
| Example 14 | Example 2 | 11 | 0.08 | |
| Example 15 | Example 3 | 14.3 | 0.05 | |
| Example 16 | Example 4 | 14.2 | 0.07 | 405 nm |
| Example 17 | Example 5 | 9.1 | 0.16 | |
| Example 18 | Example 6 | 12.8 | 0.15 | |
| Example 19 | Example 7 | 12.1 | 0.05 | |
| Example 20 | Example 8 | 16.2 | 0.02 | |
| Example 21 | Example 9 | 11.2 | 0.03 | |
| Example 22 | Example 10 | 17.9 | 0.02 | |
| Example 23 | Example 11 | 10.9 | 0.01 | |

(continued)

| | Holographic recording composition | M# | Volumetric Shrinkage % | Recording wavelength |
|---|---|---|---|---|
| Example 24 | Example 12 | 18.4 | 0.02 | |
| Comp.Ex.4 | Comp.Ex.1 | 10.0 | 0.65 | 532 nm |
| Comp.Ex.5 | Comp.Ex.2 | 0.9 | 0.75 | |
| Comp.Ex.6 | Comp.Ex.3 | 9.0 | 0.6 | 405 nm |

Table 1 reveals that the optical recording media of Examples 13 to 24, in which the holographic recording compositions of Examples 1 to 12 were employed, all exhibited higher recording capacity as well as less volumetric shrinkage than the optical recording media of Comparative Examples 4 to 6, in which the holographic recording compositions of Comparative Examples 1 to 3 were employed.

The optical recording composition of the present invention is capable of high density recording, and is thus suitable for use in the manufacturing of various volume hologram-type optical recording media capable of high-density image recording.

Although the present invention has been described in considerable detail with regard to certain versions thereof, other versions are possible, and alterations, permutations and equivalents of the version shown will become apparent to those skilled in the art upon a reading of the specification and study of the drawings. Also, the various features of the versions herein can be combined in various ways to provide additional versions of the present invention. Furthermore, certain terminology has been used for the purposes of descriptive clarity, and not to limit the present invention. Therefore, any appended claims should not be limited to the description of the preferred versions contained herein and should include all such alterations, permutations, and equivalents as fall within the true spirit and scope of the present invention.

Having now fully described this invention, it will be understood to those of ordinary skill in the art thai the methods of the present invention can be carried out with a wide and equivalent range of conditions, formulations, and other parameters without departing from the scope of the invention or any embodiments thereof.

The citation of any publication is for its disclosure prior to the filing date and should not be construed as an admission that such publication is prior art or that the present invention is not entitled to antedate such publication by virtue of prior invention.

Unless otherwise stated, a reference to a compound or component includes the compound or component by itself, as well as in combination with other compounds or components, such as mixtures of compounds.

As used herein, the singular forms "a," "an," and "the" include the plural reference unless the context clearly dictates otherwise.

Except where otherwise indicated, all numbers expressing quantities of ingredients, reaction conditions, and so forth used in the specification and claims are to be understood as being modified in all instances by the term "about." Accordingly, unless indicated to the contrary, the numerical parameters set forth in the following specification and attached claims are approximations that may vary depending upon the desired properties sought to be obtained by the present invention. At the very least, and not to be considered as an attempt to limit the application of the doctrine of equivalents to the scope of the claims, each numerical parameter should be construed in light of the number of significant digits and ordinary rounding conventions.

Additionally, the recitation of numerical ranges within this specification is considered to be a disclosure of all numerical values and ranges within that range. For example, if a range is from about 1 to about 50, it is deemed to include, for example, 1, 7, 34, 46.1, 23.7, or any other value or range within the range.

## Claims

**1.** An optimal recording composition comprising at least one optical recording compound, wherein the optical recording compound is denoted by general formula (I) and exhibits a molar absorbance coefficient of equal to or greater than 5,000 $\ell\cdot mole^{-1}\cdot cm^{-1}$ at at least one wavelength within an absorption spectrum ranging from 200 to 1,000 nm;

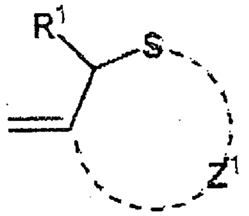

General formula (I)

wherein, in general formula (I), $R^1$ denotes a hydrogen atom or an alkyl group, and $Z^1$ denotes an atom group, the atom group forming a ring structure with a sulfur atom and a carbon atom which are adjacent to the atom group, and a carbon atom bonded to the sulfur atom.

2. The optical recording composition according to claim 1, wherein the wavelength at which the optical recording compound exhibits a molar absorbance coefficient of equal to or greater than 5,000 $\ell \cdot mole^{-1} \cdot cm^{-1}$ is a maximum absorption wavelength of the optical recording compound.

3. The optical recording composition according to claim 1 or 2, wherein the optical recording compound exhibits a molar absorbance coefficient of equal to or smaller than 100 $\ell \cdot mole^{-1} \cdot cm^{-1}$ at at least one wavelength within an absorption spectrum ranging from 350 to 750 nm.

4. The optical recording composition according to any of claims 1 to 3, wherein general formula (I) is general formula (II):

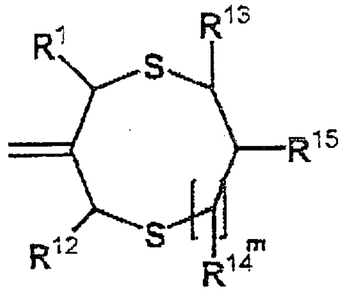

General formula (II)

wherein, in general formula (II), $R^1$ is defined in the same manner as in general formula (I), $R^{12}$ denotes a hydrogen atom or an alkyl group, each of $R^{13}$, $R^{14}$ and $R^{15}$ independently denotes a hydrogen atom, alkyl group, aryl group, heterocyclic group, alkoxy group, aryloxy group, alkylthio group, arylthio group, alkoxycarbonyl group, aryloxycarbonyl group, acyloxy group, acylamino group, sulfonylamino group, amino group, acyl group or halogen group, and m denotes 0 or 1.

5. The optical recording composition according to any of claims 1 to 3, wherein general formula (I) is general formula (III):

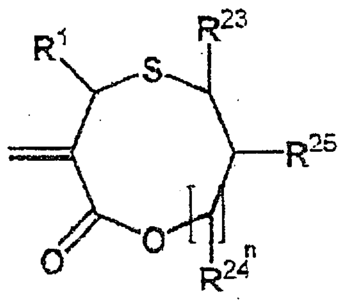

General formula (III)

wherein, in general formula (III), $R^1$ is defined in the same manner as in general formula (I), each of $R^{23}$, $R^{24}$ and $R^{25}$ independently denotes a hydrogen atom, alkyl group, aryl group, heterocyclic group, alkoxy group, aryloxy group, alkylthio group, arylthio group, alkoxycarbonyl group, aryloxycarbonyl group, acyloxy group, acylamino group,

sulfonylamino group, amino group, acyl group or halogen group, and n denotes 0 or 1.

6. The optical recording composition according to any of claims 1 to 5, wherein the optical recording compound comprises at least one partial structure denoted by general formula (C-1), (C-2), (C-3), (C-4), (C-5), or (C-6):

(C-1)

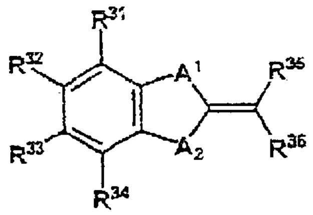

(C-2)

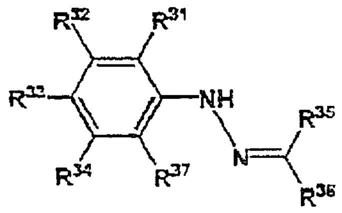

(C-3)

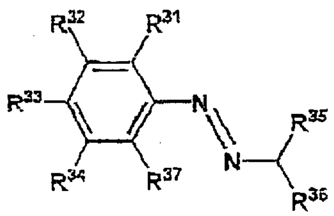

(C-4)

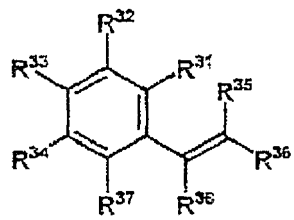

(C-5)

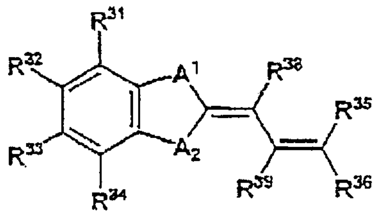

(C-6)

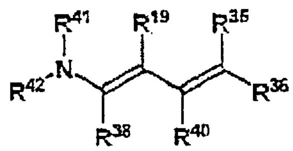

wherein, in the above formulas, each of $R^{31}$, $R^{32}$, $R^{33}$, $R^{34}$, and $R^{37}$ independently denotes a hydrogen atom, alkyl group, aryl goup, heterocyclic group, alkoxy group, aryloxy group, alkoxycarbonyl group, aryloxycarbonyl group, acyl group, sulfonyl group, carbamoyl group, sulfamoyl group, amino group, acyloxy group, acylamino group, hydroxyl group, carboxylic acid group, sulfonic acid group, halogen atom or linking group; each of $A^1$ and $A^2$ independently denotes $-CR^{43}R^{44}-$, -O-, $-NR^{45}-$, -S-, or -C(=O)-; each of $R^{45}$, $R^{44}$, and $R^{45}$ independently denotes a hydrogen atom, alkyl group, aryl group, or linking group; each of $R^{35}$ and $R^{36}$ independently denotes an electron-withdrawing group or linking group, and $R^{35}$ and $R^{36}$ may bond together to form a cyclic structure; each of $R^{38}$, $R^{39}$, and $R^{40}$ independently denotes a hydrogen atom, alkyl group, or linking group; each of $R^{41}$ and $R^{42}$ independently denotes a hydrogen atom, alkyl group, aryl group, heterocyclic group, acyl group, sulfonyl group, or linking group; and each of partial structures (C-1) to (C-6) comprises one or more linking groups.

7. The optical recording composition according to any of claims 1 to .6, which is a holographic recording composition.

8. A holographic recording medium comprising a recording layer comprising at least one optical recording compound, wherein the optical recording compound is denoted by general formula (I) and exhibits a molar absorbance coefficient of equal to or greater than 5,000 $\ell \cdot mole^{-1}cm^{-1}$ at at least one wavelength within an absorption spectrum ranging from 200 to 1,000 nm:

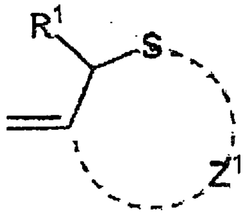

General formula (I)

wherein, in general formula (I), $R^1$ denotes a hydrogen atom or an alkyl group, and $Z^1$ denotes an atom group, the atom group forming a ring structure with a sulfur atom and a carbon atom which are adjacent to the atom group, and a carbon atom bonded to the sulfur atom.

**9.** The holographic recording medium according to claim 8, wherein the wavelength at which the optical recording compound exhibits a molar absorbance coefficient of equal to or greater than 5,000 $\ell \cdot mole^{-1} \cdot cm^{-1}$ is a maximum absorption wavelength of the optical recording compound.

**10.** The holographic recording medium according to claim 8 or 9, wherein the optical recording compound exhibits a molar absorbance coefficient of equal to or smaller than 100 $\ell \cdot mole^{-1} \cdot cm^{-1}$ at at least one wavelength within an absorption spectrum ranging from 350 to 750 nm.

**11.** The holographic recording medium according to any of claims 8 to 10, wherein general formula (I) is general formula (II):

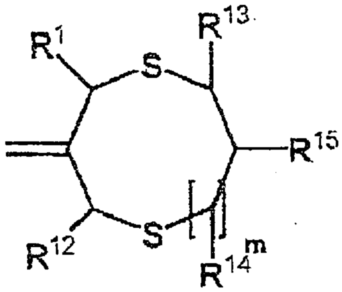

General formula (II)

wherein, in general formula (II), $R^1$ is defined in the same manner as in general formula (I), $R^{12}$ denotes a hydrogen atom or an alkyl group, each of $R^{13}$, $R^{14}$ and $R^{15}$ independently denotes a hydrogen atom, alkyl group, aryl group, heterocyclic group, alkoxy group, aryloxy group, alkylthio group, arylthio group, alkoxycarbonyl group, aryloxycarbonyl group, acyloxy group, acylamino group, sulfonylamino group, amino group, acyl group or halogen group, and m denotes 0 or 1.

**12.** The holographic recording medium according to any of claims 8 to 10, wherein general formula (I) is general formula (III):

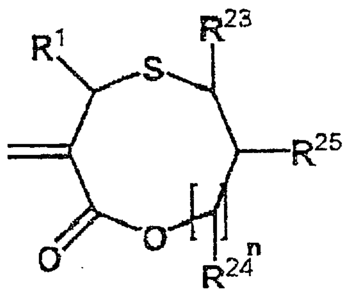

General formula (III)

wherein, in general formula (III), $R^1$ is defined in the same manner as in general formula (I), each of $R^{23}$, $R^{24}$ and

$R^{25}$ independently denotes a hydrogen atom, alkyl group, aryl group, heterocyclic group, alkoxy group, aryloxy group, alkylthio group, arylthio group, alkoxycarbonyl group, aryloxycarbonyl group, acyloxy group, acylamino group, sulfonylamino group, amino group, acyl group or halogen group, and n denotes 0 ur 1.

**13.** The holographic recording medium according to any of claims 8 to 12, wherein the optical recording compound comprises at least one partial structure denoted by general formula (C-1), (C-2), (C-3), (C-4), (C-5), or (C-6):

(C-1) 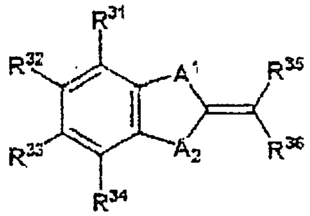 (C-2) 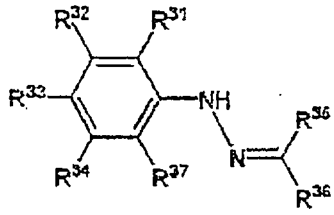

(C-3) 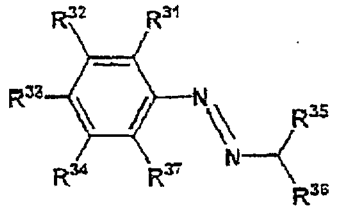 (C-4) 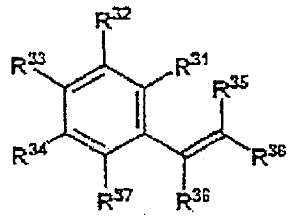

(C-5) 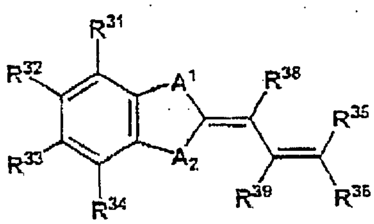 (C-6) 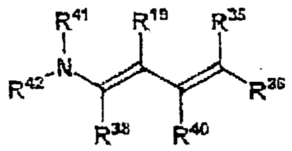

wherein, in the above formulas, each of $R^{31}$, $R^{32}$, $R^{33}$, $R^{34}$, and $R^{37}$ independently denotes a hydrogen atom, alkyl group, aryl group, heterocyclic group, alkoxy group, aryloxy group, alkoxycarbonyl, group, aryloxycarbonyl group, acyl group, sulfonyl group, carbamoyl group, sulfamoyl group, amino group, acyloxy group, acylanimo group, hydroxyl group, carboxylic acid group, sulfonic acid group, halogen atom or linking group; each of $A^1$ and $A^2$ independently denotes $-CR^{43}R^{44}-$, -O-, $-NR^{45}-$, -S-, or -C(=O)-; each of $R^{43}$, $R^{44}$, and $R^{45}$ independently denotes a hydrogen atom, alkyl group, aryl group, or linking group; each of $R^{35}$ and $R^{36}$ independently denotes an electron-withdrawing group or linking group, and $R^{35}$ and $R^{36}$ may bond together to form a cyclic structure; each of $R^{38}$, $R^{39}$, and $R^{40}$ independently denotes a hydrogen atom, alkyl group, or linking group; each of $R^{41}$ and $R^{42}$ independently denotes a hydrogen atom, alkyl group, aryl group, hererocyclic group, acyl group, sulfonyl group, or linking group; and each of partial structures (C-1) to (C-6) comprises one or more línking groups.

**14.** A method of recording and reproducing information comprising:

irradiating the holographic recording medium according to any of claims 8 to 13 with an informing light and a reference light to form an interference image in the recording layer comprised in the holographic recording medium; and

irradiating the holographic recording medium in which the interference image has been formed with a reproduction, light.

**15.** The method of recording and reproducing information according to claim 14, employing a light with a wavelength $\lambda_3$ nm satisfying the following equation (I) as the reproduction light:

$$(\lambda_3 - 100) \leq \lambda_1 < \lambda_3 \cdots (1)$$

wherein $\lambda_1$ is a wavelength present within an absorption spectrum ranging from 200 to 1,000 nm, at which the optical recording compound comprised in the recording layer of the holographic recording medium exhibits a molar absorbance coefficient of equal to or greater than 4,000 $\ell \cdot mole^{-1} \text{-} cm^{-1}$.

**Patentansprüche**

1. Zusammensetzung für die optische Aufzeichnung, umfassend mindestens eine optische Aufzeichnungsverbindung, worin die optische Aufzeichnungsverbindung durch die allgemeine Formel (I) dargestellt ist und einen molaren Absorptionskoeffizienten von gleich oder größer 5.000 $lmol^{-1}cm^{-1}$ bei mindestens einer Wellenlänge innerhalb eines Absorptionsspektrums aufweist, welches von 200 bis 1.000 nm reicht:

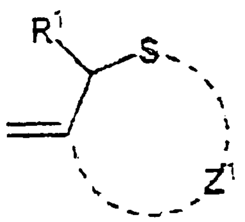

Allgemeine Formel (I)

worin in der allgemeinen Formel (I) $R^1$ ein Wasserstoffatom oder eine Alkylgruppe bezeichnet und $Z^1$ eine Atomgruppe bezeichnet, wobei die Atomgruppe eine Ringstruktur mit einem Schwefelatom und einem Kohlenstoffatom bildet, die an die Atomgruppe angrenzen, und ein Kohlenstoffatom an das Schwefelatom gebunden ist.

2. Zusammensetzung für die optische Aufzeichnung gemäß Anspruch 1, worin die Wellenlänge, bei der die optische Aufzeichnungsverbindung einen molaren Absorptionskoeffizienten von gleich oder größer 5.000 $lmol^{-1}cm^{-1}$ aufweist, eine Wellenlänge der maximalen Absorption der optischen Aufzeichnungsverbindung ist.

3. Zusammensetzung für die optische Aufzeichnung gemäß Anspruch 1 oder 2, worin die optische Aufzeichnungsverbindung einen molaren Absorptionskoeffizienten von gleich oder kleiner 100 $lmol^{-1}cm^{-1}$ bei mindestens einer Wellenlänge innerhalb eines Absorptionsspektrums aufweist, das von 350 bis 750 nm reicht.

4. Zusammensetzung für die optische Aufzeichnung gemäß irgendeinem der Ansprüche 1 bis 3, worin die allgemeine Formel (I) die allgemeine Formel (II) ist:

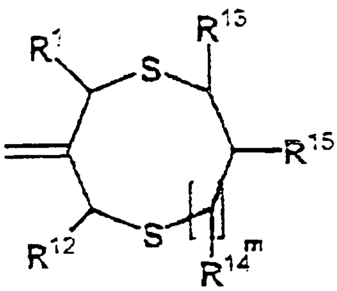

Allgemeiner Formel (II)

worin in der allgemeine Formel (II) $R^1$ auf die gleiche Weise wie in der allgemeinen Formel (I) definiert ist, $R^{12}$ ein Wasserstoffatom oder eine Alkylgruppe bezeichnet, jedes von $R^{13}$, $R^{14}$ und $R^{15}$ unabhängig voneinander ein Wasserstoffatom, eine Alkylgruppe, Arylgruppe, heterocyclische Gruppe, Alkoxygruppe, Aryloxygruppe, Alkylthiogruppe, Arylthiogruppe, Alkoxycarbonylgruppe, Aryloxycarbonylgruppe, Acyloxygruppe, Acylaminogruppe, Sulfonylaminogruppe, Aminogruppe, Acylgruppe oder eine Halogengruppe bezeichnet, und m 0 oder 1 bezeichnet.

**5.** Zusammensetzung für die optische Aufzeichnung gemäß irgendeinem der Ansprüche 1 bis 3, worin die allgemeine Formel (I) die allgemeine Formel (III) ist:

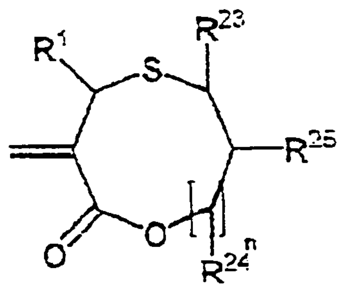

Allgemeiner Formel (III)

worin in der allgemeine Formel (III) $R^1$ auf die gleiche Weise wie in der allgemeinen Formel (I) definiert ist, jedes von $R^{23}$, $R^{24}$ und $R^{25}$ unabhängig voneinander ein Wasserstoffatom, eine Alkylgruppe, Arylgruppe, heterocyclische Gruppe, Alkoxygruppe, Aryloxygruppe, Alkylthiogruppe, Arylthiogruppe, Alkoxycarbonylgruppe, Aryloxycarbonylgruppe, Acyloxygruppe, Acylaminogruppe, Sulfonylaminogruppe, Aminogruppe, Acylgruppe oder eine Halogengruppe bezeichnet, und n 0 oder 1 bezeichnet.

**6.** Zusammensetzung für die optische Aufzeichnung gemäß irgendeinem der Ansprüche 1 bis 5, worin die optische Aufzeichnungsverbindung mindestens eine Teilstruktur umfasst, die durch die allgemeine Formel C-1, C-2, C-3, C-4, C-5 oder C-6 bezeichnet wird:

(C-1)

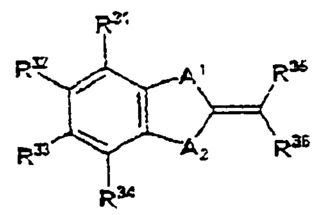

(C-2)

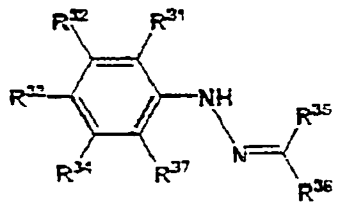

(C-3)

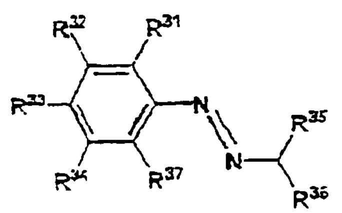

(C-4)

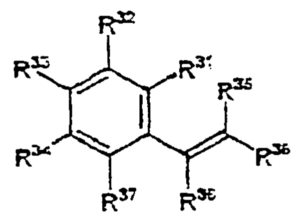

(C-5)

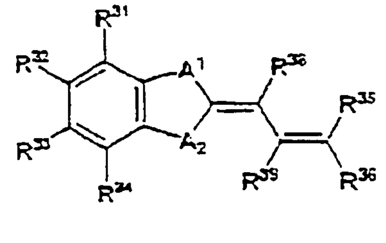

(C-6)

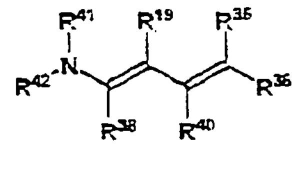

worin in den obigen Formeln jedes von $R^{31}$, $R^{32}$, $R^{33}$, $R^{34}$ und $R^{37}$ unabhängig ein Wasserstoffatom, eine Alkylgruppe, Arylgruppe, heterocyclische Gruppe, Alkoxygruppe, Aryloxygruppe, Alkoxycarbonylgruppe, Aryloxycarbonylgruppe, Acylgruppe, Sulfonylgruppe, Carbamoylgruppe, Sulfamoylgruppe, Aminogruppe, Acyloxygruppe, Acylaminogruppe, Hydroxylgruppe, Carbonsäuregruppe, Sulfonsäuregruppe, ein Halogenatom oder eine Verknüpfungsgruppe dar-

stellt; jedes von $A^1$ und $A^2$ unabhängig voneinander $-CR^{43}R^{44}-$, -O-, $-NR^{45}-$, -S-oder -C(=O)- darstellt; jedes von $R^{43}$, $R^{44}$ und $R^{45}$ unabhängig voneinander ein Wasserstoffatom, eine Alkylgruppe, Arylgruppe oder Verknüpfungsgruppe darstellt; jedes von $R^{35}$ und $R^{36}$ unabhängig voneinander eine elektronenziehende Gruppe oder Verknüpfungsgruppe darstellt, und $R^{35}$ und $R^{36}$ miteinander verbunden sein können, um eine cyclische Struktur zu bilden; jedes von $R^{38}$, $R^{39}$ und $R^{40}$ unabhängig voneinander ein Wasserstoffatom, eine Alkylgruppe oder Verknüpfungsgruppe darstellt; jedes von $R^{41}$ und $R^{42}$ unabhängig voneinander ein Wasserstoffatom, eine Alkylgruppe, Arylgruppe, heterocyclische Gruppe, Acylgruppe, Sulfonylgruppe oder Verknüpfungsgruppe darstellt; und jede der Teilstrukturen (C-1) bis (C-6) eine oder mehrere Verknüpfungsgruppen umfasst.

**7.** Zusammensetzung für die optische Aufzeichnung gemäß irgendeinem der Ansprüche 1 bis 6, welche eine Zusammensetzung für die holografische Aufzeichnung ist.

**8.** Holografisches Aufzeichnungsmedium, umfassend eine Aufzeichnungsschicht, die mindestens eine optische Aufzeichnungsverbindung umfasst, worin die optische Aufzeichnungsverbindung durch die allgemeine Formel (I) bezeichnet wird und einen molaren Absorptionskoeffizienten von gleich oder größer als 5.000 $lmol^{-1}cm^{-1}$ bei mindestens einer Wellenlänge innerhalb eines Absorptionsspektrums aufweist, das von 200 bis 1.000 nm reicht:

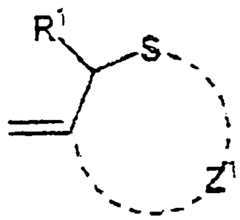

Allgemeine Formel (I)

worin in der allgemeinen Formel (I) $R^1$ ein Wasserstoffatom oder eine Alkylgruppe bezeichnet und $Z^1$ eine Atomgruppe bezeichnet, wobei die Atomgruppe eine Ringstruktur mit einem Schwefelatom und einem Kohlenstoffatom bildet, die an die Atomgruppe angrenzen, und ein Kohlenstoffatom an das Schwefelatom gebunden ist.

**9.** Holografisches Aufzeichnungsmedium gemäß Anspruch 8, worin die Wellenlänge, bei der die optische Aufzeichnungsverbindung einen molaren Absorptionskoeffizienten von gleich oder größer als 5.000 $lmol^{-1}cm^{-1}$ aufweist, eine Wellenlänge der maximalen Absorption der optischen Aufzeichnungsverbindung ist.

**10.** Holografisches Aufzeichnungsmedium gemäß Anspruch 8 oder 9, worin die optische Aufzeichnungsverbindung einen molaren Absorptionskoeffizienten von gleich oder kleiner 100 $lmol^{-1}cm^{-1}$ bei mindestens einer Wellenlänge innerhalb eines Absorptionsspektrums aufweist, das von 350 bis 750 nm reicht.

**11.** Holografisches Aufzeichnungsmedium gemäß irgendeinem der Ansprüche 8 bis 10, worin die allgemeine Formel (I) die allgemeine Formel (II) ist:

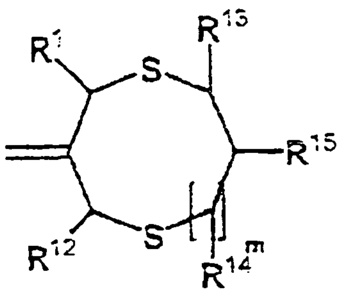

Allgemeiner Formel (II)

worin in der allgemeine Formel (II) $R^1$ auf die gleiche Weise wie in der allgemeinen Formel (I) definiert ist, $R^{12}$ ein Wasserstoffatom oder eine Alkylgruppe bezeichnet, jedes von $R^{13}$, $R^{14}$ und $R^{15}$ unabhängig voneinander ein Was-

serstoffatom, eine Alkylgruppe, Arylgruppe, heterocyclische Gruppe, Alkoxygruppe, Aryloxygruppe, Alkylthiogruppe, Arylthiogruppe, Alkoxycarbonylgruppe, Aryloxycarbonylgruppe, Acyloxygruppe, Acylaminogruppe, Sulfonylaminogruppe, Aminogruppe, Acylgruppe oder eine Halogengruppe bezeichnet, und m 0 oder 1 bezeichnet.

**12.** Holografisches Aufzeichnungsmedium gemäß irgendeinem der Ansprüche 8 bis 10, worin die allgemeine Formel (I) die allgemeine Formel (III) ist:

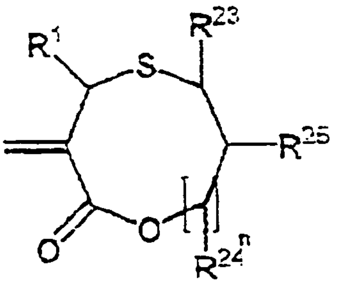

Allgemeiner Formel (III)

worin in der allgemeine Formel (III) $R^1$ auf die gleiche Weise wie in der allgemeinen Formel (I) definiert ist, jedes von $R^{23}$, $R^{24}$ und $R^{25}$ unabhängig voneinander ein Wasserstoffatom, eine Alkylgruppe, Arylgruppe, heterocyclische Gruppe, Alkoxygruppe, Aryloxygruppe, Alkylthiogruppe, Arylthiogruppe, Alkoxycarbonylgruppe, Aryloxycarbonylgruppe, Acyloxygruppe, Acylaminogruppe, Sulfonylaminogruppe, Aminogruppe, Acylgruppe oder eine Halogengruppe bezeichnet, und n 0 oder 1 bezeichnet.

**13.** Holografisches Aufzeichnungsmedium gemäß irgendeinem der Ansprüche 8 bis 12, worin die optische Aufzeichnungsverbindung mindestens eine Teilstruktur umfasst, die durch die allgemeine Formel C-1, C-2, C-3, C-4, C-5 oder C-6 bezeichnet wird:

(C-1)

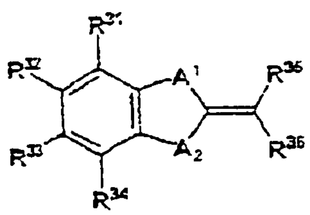

(C-2)

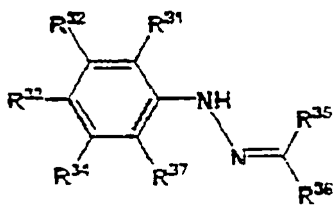

(C-3)

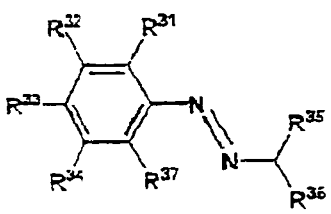

(C-4)

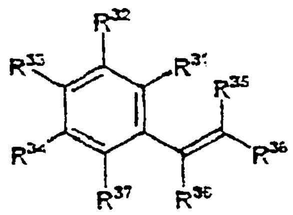

(C-5) 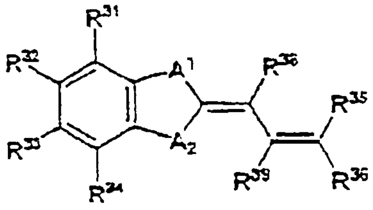 (C-6) 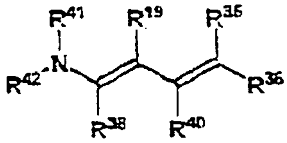

worin in den obigen Formeln jedes von $R^{31}$, $R^{32}$, $R^{33}$, $R^{34}$ und $R^{37}$ unabhängig ein Wasserstoffatom, eine Alkylgruppe, Arylgruppe, heterocyclische Gruppe, Alkoxygruppe, Aryloxygruppe, Alkoxycarbonylgruppe, Aryloxycarbonylgruppe, Acylgruppe, Sulfonylgruppe, Carbamoylgruppe, Sulfamoylgruppe, Aminogruppe, Acyloxygruppe, Acylaminogruppe, Hydroxylgruppe, Carbonsäuregruppe, Sulfonsäuregruppe, ein Halogenatom oder eine Verknüpfungsgruppe darstellt; jedes von $A^1$ und $A^2$ unabhängig voneinander $-CR^{43}R^{44}-$, -O-, $-NR^{45}-$, -S-oder -C(=O)- darstellt; jedes von $R^{43}$, $R^{44}$ und $R^{45}$ unabhängig voneinander ein Wasserstoffatom, eine Alkylgruppe, Arylgruppe oder Verknüpfungsgruppe darstellt; jedes von $R^{35}$ und $R^{36}$ unabhängig voneinander eine elektronenziehende Gruppe oder Verknüpfungsgruppe darstellt, und $R^{35}$ und $R^{36}$ miteinander verbunden sein können, um eine cyclische Struktur zu bilden; jedes von $R^{38}$, $R^{39}$ und $R^{40}$ unabhängig voneinander ein Wasserstoffatom, eine Alkylgruppe oder Verknüpfungsgruppe darstellt; jedes von $R^{41}$ und $R^{42}$ unabhängig voneinander ein Wasserstoffatom, eine Alkylgruppe, Arylgruppe, heterocyclische Gruppe, Acylgruppe, Sulfonylgruppe oder Verknüpfungsgruppe darstellt; und jede der Teilstrukturen (C-1) bis (C-6) eine oder mehrere Verknüpfungsgruppen umfasst.

**14.** Verfahren zum Aufzeichnen und Reproduzieren von Informationen, umfassend:

Bestrahlen des holografischen Aufzeichnungsmediums gemäß irgendeinem der Ansprüche 8 bis 13 mit einem Informationslicht und einem Referenzlicht, um ein Interferenzbild in der Aufzeichnungsschicht, die in dem holografischen Aufzeichnungsmedium enthalten ist, zu bilden; und

Bestrahlen des holografischen Aufzeichnungsmediums, worin das Interferenzbild erzeugt worden ist, mit einem Reproduktionslicht.

**15.** Verfahren zum Aufzeichnen und Reproduzieren von Informationen gemäß Anspruch 14, wobei ein Licht mit einer Wellenlänge $\lambda_3$ nm, das die folgende Gleichung (1) erfüllt, als Reproduktionslicht eingesetzt wird:

$$(\lambda_3 - 100) \leq \lambda_1 < \lambda_3 \quad \ldots \quad (1)$$

worin $\lambda_1$ eine Wellenlänge ist, die innerhalb eines Absorptionsspektrums im Bereich von 200 bis 1.000 nm vorliegt, bei der die optische Aufzeichnungsverbindung, die in der Aufzeichnungsschicht des holografischen Aufzeichnungsmediums enthalten ist, einen molaren Absorptionskoeffizienten von gleich oder größer als 5.000 $lmol^{-1}cm^{-1}$ aufweist.

## Revendications

**1.** Composition d’enregistrement optique comprenant au moins un composé d’enregistrement optique, dans laquelle le composé d’enregistrement optique est représenté par la formule générale (I) et présente un coefficient d’absorbance molaire égal ou supérieur à 5 000 $\ell \cdot mol^{-1} \cdot cm^{-1}$ à au moins une longueur d’onde à l’intérieur d’un spectre d’absorption situé dans la plage allant de 200 à 1 000 nm :

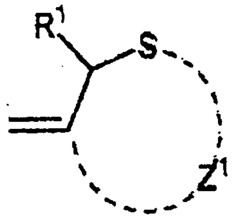

formule générale (I)

et dans laquelle, dans la formule générale (I), $R^1$ désigne un atome d'hydrogène ou un groupe alkyle, et $Z^1$ désigne un groupe d'atomes, le groupe d'atomes formant une structure cyclique avec un atome de soufre et un atome de carbone qui sont adjacents au groupe d'atomes, et un atome de carbone lié à l'atome de soufre.

**2.** Composition d'enregistrement optique selon la revendication 1, dans laquelle la longueur d'onde à laquelle le composé d'enregistrement optique présente un coefficient d'absorbance molaire égal ou supérieur à 5 000 $\ell \cdot mol^{-1} \cdot cm^{-1}$ est une longueur d'onde d'absorption maximale du composé d'enregistrement optique.

**3.** Composition d'enregistrement optique selon la revendication 1 ou 2, dans laquelle le composé d'enregistrement optique présente un coefficient d'absorbance molaire égal ou inférieur à 100 $\ell \cdot mol^{-1} \cdot cm^{-1}$ à au moins une longueur d'onde à l'intérieur d'un spectre d'absorption situé dans la plage allant de 350 à 750 nm.

**4.** Composition d'enregistrement optique selon l'une quelconque des revendications 1 à 3, dans laquelle la formule générale (I) est la formule générale (II) :

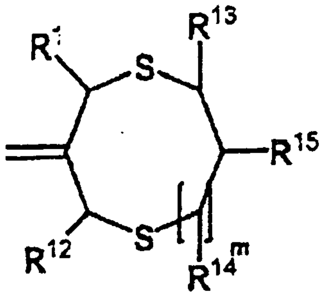

formule générale (II)

et dans laquelle, dans la formule générale (II), $R^1$ est défini de la même manière que dans la formule générale (I), $R^{12}$ désigne un atome d'hydrogène ou un groupe alkyle, chacun de $R^{13}$, $R^{14}$ et $R^{15}$ désigne indépendamment un atome d'hydrogène, un groupe alkyle, un groupe aryle, un groupe hétérocyclique, un groupe alcoxy, un groupe aryloxy, un groupe alkylthio, un groupe arylthio, un groupe alcoxycarbonyle, un groupe aryloxycarbonyle, un groupe acyloxy, un groupe acylamino, un groupe sulfonylamino, un groupe amino, un groupe acyle ou un atome d'halogène, et m vaut 0 ou 1.

**5.** Composition d'enregistrement optique selon l'une quelconque des revendications 1 à 3, dans laquelle la formule générale (I) est la formule générale (III) :

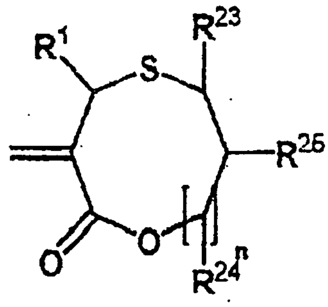

formule générale (III)

et dans laquelle, dans la formule générale (III), $R^1$ est défini de la même manière que dans la formule générale (I), chacun de $R^{23}$, $R^{24}$ et $R^{25}$ désigne indépendamment un atome d'hydrogène, un groupe alkyle, un groupe aryle, un groupe hétérocyclique, un groupe alcoxy, un groupe aryloxy, un groupe alkylthio, un groupe arylthio, un groupe alcoxycarbonyle, un groupe aryloxycarbonyle, un groupe acyloxy, un groupe acylamino, un groupe sulfonylamino, un groupe amino, un groupe acyle ou un atome d'halogène, et n vaut 0 ou 1.

6. Composition d'enregistrement optique selon l'une quelconque des revendications 1 à 5, dans laquelle le composé d'enregistrement optique comprend au moins une structure partielle représentée par la formule générale (C-1), (C-2), (C-3), (C-4), (C-5) ou (C-6) :

(C-1) 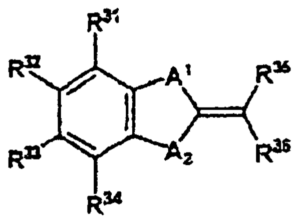 (C-2) 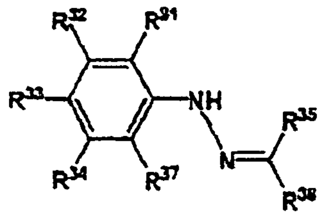

(C-3) 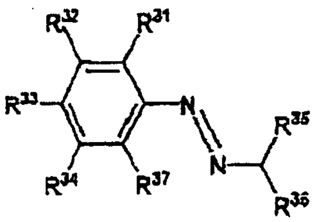 (C-4) 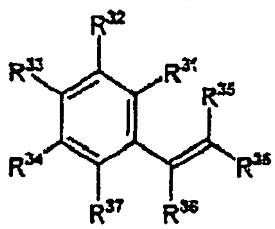

(C-5) 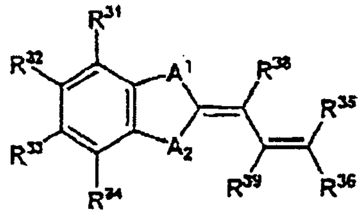 (C-6) 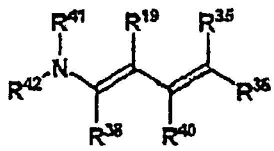

et dans laquelle, dans les formules ci-dessus, chacun de $R^{31}$, $R^{32}$, $R^{33}$, $R^{34}$ et $R^{37}$ désigne indépendamment un atome d'hydrogène, un groupe alkyle, un groupe aryle, un groupe hétérocyclique, un groupe alcoxy, un groupe aryloxy, un groupe alcoxycarbonyle, un groupe aryloxycarbonyle, un groupe acyle, un groupe sulfonyle, un groupe

carbamoyle, un groupe sulfamoyle, un groupe amino, un groupe acyloxy, un groupe acylamino, un groupe hydroxyle, un groupe acide carboxylique, un groupe acide sulfonique, un atome d'halogène ou un groupe de liaison ; chacun de $A^1$ et $A^2$ désigne indépendamment $-CR^{43}R^{44}-$, -O-, $-NR^{45}-$, -S- ou -C(=O)- ; chacun de $R^{43}$, $R^{44}$ et $R^{45}$ désigne indépendamment un atome d'hydrogène, un groupe alkyle, un groupe aryle, ou un groupe de liaison ; chacun de $R^{35}$ et $R^{36}$ désigne indépendamment un groupe extracteur d'électron ou un groupe de liaison, et $R^{35}$ et $R^{36}$ peuvent se lier ensemble pour former une structure cyclique ; chacun de $R^{38}$, $R^{39}$ et $R^{40}$ désigne indépendamment un atome d'hydrogène, un groupe alkyle, ou un groupe de liaison ; chacun de $R^{41}$ et $R^{42}$ désigne indépendamment un atome d'hydrogène, un groupe alkyle, un groupe aryle, un groupe hétérocyclique, un groupe acyle, un groupe sulfonyle, ou un groupe de liaison ; et chacune des structures partielles (C-1) à (C-6) comprend un ou plusieurs groupes de liaison.

**7.** Composition d'enregistrement optique selon l'une quelconque des revendications 1 à 6, qui est une composition d'enregistrement holographique.

**8.** Support d'enregistrement holographique comprenant une couche d'enregistrement comprenant au moins un composé d'enregistrement optique, dans lequel le composé d'enregistrement optique est représenté par la formule générale (I) et présente un coefficient d'absorbance molaire égal ou supérieur à 5 000 $\ell \cdot mol^{-1} \cdot cm^{-1}$ à au moins une longueur d'onde à l'intérieur d'un spectre d'absorption situé dans la plage allant de 200 à 1 000 nm :

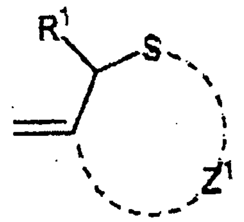

formule générale (I)

et dans lequel, dans la formule générale (I), $R^1$ désigne un atome d'hydrogène ou un groupe alkyle, et $Z^1$ désigne un groupe d'atomes, le groupe d'atomes formant une structure cyclique avec un atome de soufre et un atome de carbone qui sont adjacents au groupe d'atomes, et un atome de carbone lié à l'atome de soufre.

**9.** Support d'enregistrement holographique selon la revendication 8, dans lequel la longueur d'onde à laquelle le composé d'enregistrement optique présente un coefficient d'absorbance molaire égal ou supérieur à 5 000 $\ell \cdot mol^{-1} \cdot cm^{-1}$ est une longueur d'onde d'absorption maximale du composé d'enregistrement optique.

**10.** Support d'enregistrement holographique selon la revendication 8 ou 9, dans lequel le composé d'enregistrement optique présente un coefficient d'absorbance molaire égal ou inférieur à 100 $\ell \cdot mol^{-1} \cdot m^{-1}$ à au moins une longueur d'onde à l'intérieur d'un spectre d'absorption situé dans la plage allant de 350 à 750 nm.

**11.** Support d'enregistrement holographique selon l'une quelconque des revendications 8 à 10, dans lequel la formule générale (I) est la formule générale (II) :

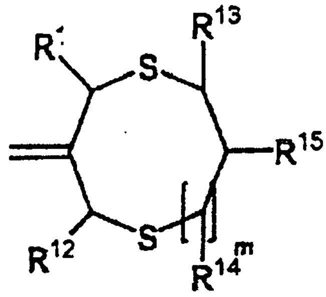

formule générale (II)

et dans lequel, dans la formule générale (II), $R^1$ est défini de la même manière que dans la formule générale (I), $R^{12}$ désigne un atome d'hydrogène ou un groupe alkyle, chacun de $R^{13}$, $R^{14}$ et $R^{15}$ désigne indépendamment un atome d'hydrogène, un groupe alkyle, un groupe aryle, un groupe hétérocyclique, un-groupe alcoxy, un groupe aryloxy, un groupe alkylthio, un groupe arylthio, un groupe alcoxycarbonyle, un groupe aryloxycarbonyle, un groupe acyloxy, un groupe acylamino, un groupe sulfonylamino, un groupe amino, un groupe acyle ou un atome d'halogène, et m vaut 0 ou 1.

**12.** Support d'enregistrement holographique selon l'une quelconque des revendications 8 à 10, dans lequel la formule générale (I) est la formule générale (III) :

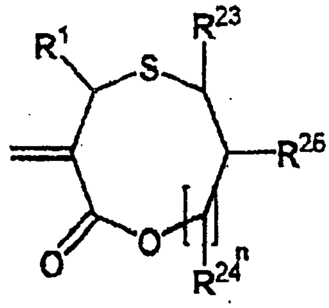

formule générale (III)

et dans lequel, dans la formule générale (III), $R^1$ est défini de la même manière que dans la formule générale (I), chacun de $R^{23}$, $R^{24}$ et $R^{25}$ désigne indépendamment un atome d'hydrogène, un groupe alkyle, un groupe aryle, un groupe hétérocyclique, un groupe alcoxy, un groupe aryloxy, un groupe alkylthio, un groupe arylthio, un groupe alcoxycarbonyle, un groupe aryloxycarbonyle, un groupe acyloxy, un groupe acylamino, un groupe sulfonylamino, un groupe amino, un groupe acyle ou un atome d'halogène, et n vaut 0 ou 1.

**13.** Support d'enregistrement holographique selon l'une quelconque des revendications 8 à 12, dans lequel le composé d'enregistrement optique comprend au moins une structure partielle représentée par la formule générale (C-1), (C-2), (C-3), (C-4), (C-5) ou (C-6) :

(C-1) 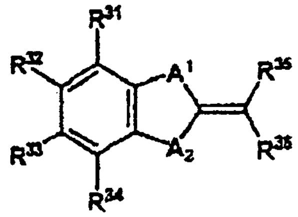

(C-2) 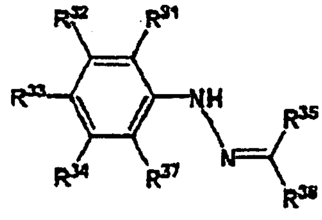

(C-3) 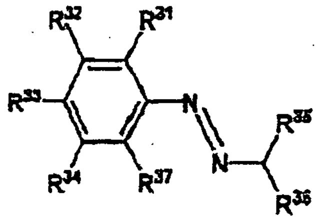 (C-4) 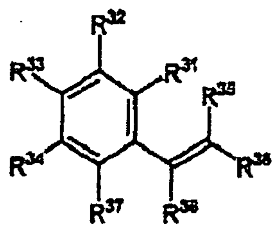

(C-5) 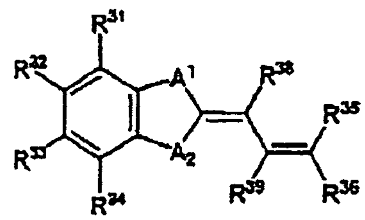 (C-6) 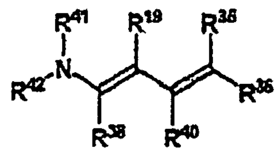

et dans lequel, dans les formules ci-dessus, chacun de $R^{31}$, $R^{32}$, $R^{33}$, $R^{34}$ et $R^{37}$ désigne indépendamment un atome d'hydrogène, un groupe alkyle, un groupe aryle, un groupe hétérocyctique, un groupe alcoxy, un groupe aryloxy, un groupe alcoxycarbonyle, un groupe aryloxycarbonyle, un groupe acyle, un groupe sulfonyle, un groupe carbamoyle, un groupe sulfamoyle, un groupe amino, un groupe acyloxy, un groupe acylamino, un groupe hydroxyle, un groupe acide carboxylique, un groupe acide sulfonique, un atome d'halogène ou un groupe de liaison ; chacun de $A^1$ et $A^2$ désigne indépendamment $-CR^{43}R^{44}-$, -O-, $-NR^{45}-$, -S- ou -C(=O)- ; chacun de $R^{43}$, $R^{44}$ et $R^{45}$ désigne indépendamment un atome d'hydrogène, un groupe alkyle, un groupe aryle, ou un groupe de liaison ; chacun de $R^{35}$ et $R^{36}$ désigne indépendamment un groupe extracteur d'électron ou un groupe de liaison, et $R^{35}$ et $R^{36}$ peuvent se lier ensemble pour former une structure cyclique ; chacun de $R^{38}$, $R^{39}$ et $R^{40}$ désigne indépendamment un atome d'hydrogène, un groupe alkyle, ou un groupe de liaison ; chacun de $R^{41}$ et $R^{42}$ désigne indépendamment un atome d'hydrogène, un groupe alkyle, un groupe aryle, un groupe hétérocyclique, un groupe acyle, un groupe sulfonyle, ou un groupe de liaison ; et chacune des structures partielles (C-1) à (C-6) comprend un ou plusieurs groupes de liaison.

**14.** Procédé d'enregistrement et de reproduction d'informations comprenant:

l'irradiation du support d'enregistrement holographique selon l'une quelconque des revendications 8 à 13 avec une lumière d'informations et une lumière de référence pour former une image d'interférence dans la couche d'enregistrement comprise dans le support d'enregistrement holographique ; et
l'irradiation du support d'enregistrement holographique, dans lequel l'image d'interférence a été formée, avec une lumière de reproduction.

**15.** Procédé d'enregistrement et de reproduction d'informations selon la revendication 14, ayant une lumière ayant une longueur d'onde de $\lambda_3$ nm satisfaisant à l'équation (1) en tant que lumière de reproduction :

$$(\lambda_3 - 100) \leq \lambda_1 \leq \lambda_3 \qquad (1)$$

dans laquelle $\lambda_1$ est une longueur d'onde présente à l'intérieur d'un spectre d'absorption situé dans la plage allant de 200 à 1 000 nm, à laquelle le composé d'enregistrement optique compris dans la couche d'enregistrement du support d'enregistrement holographique présente un coefficient d'absorbance molaire égal ou supérieur à 5 000 $\ell \cdot mol^{-1} \cdot cm^{-1}$.

Fig. 1

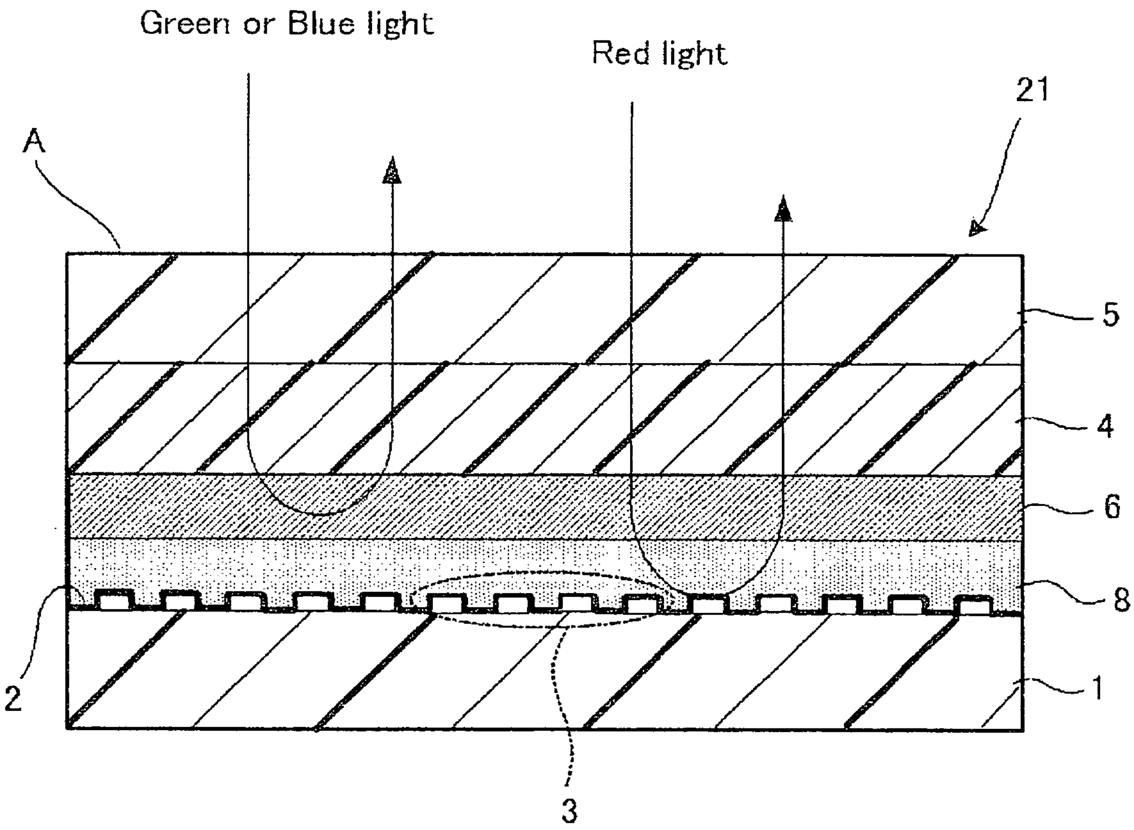

Fig. 2

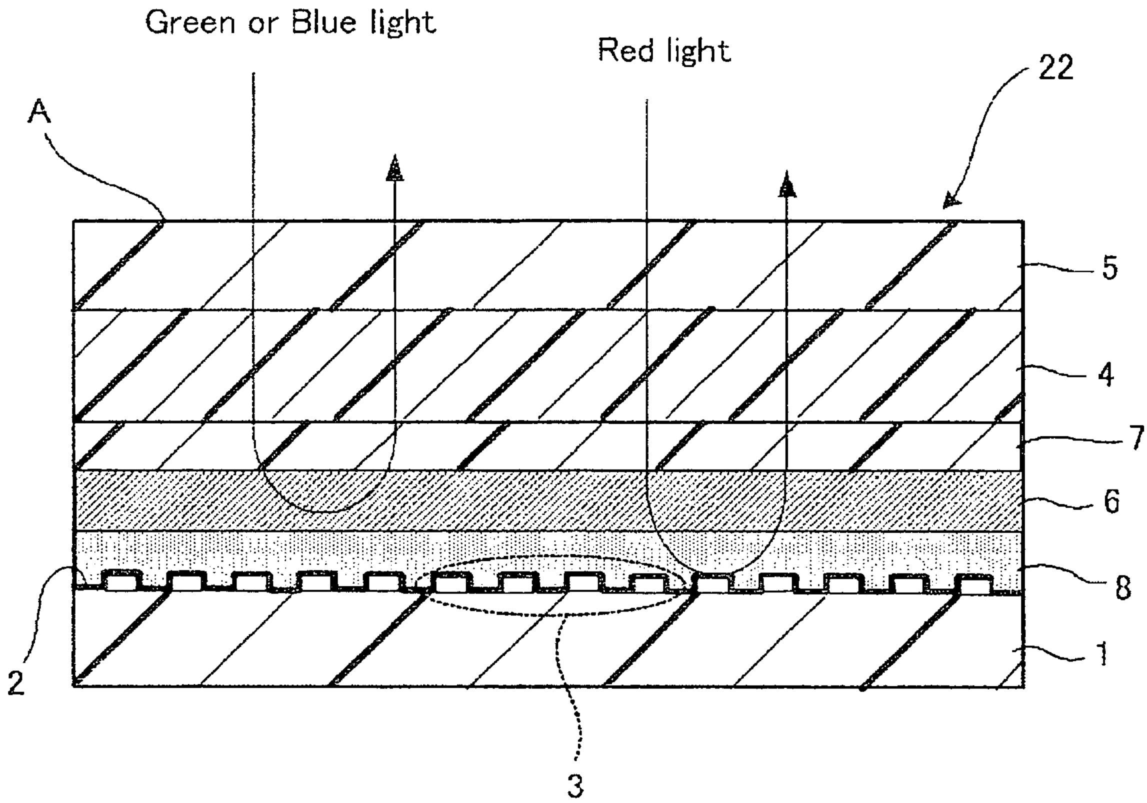

Fig. 3

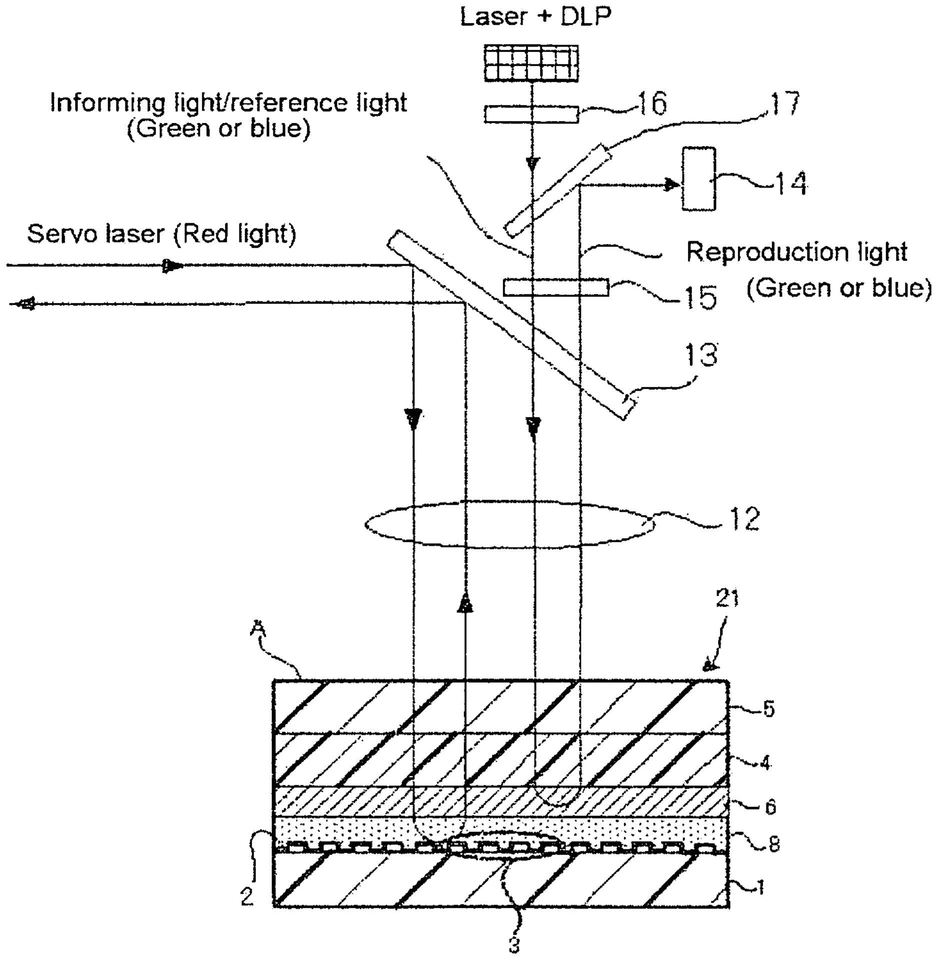
Laser + DLP
Informing light/reference light
(Green or blue)
16
17
14
Servo laser (Red light)
Reproduction light
(Green or blue)
15
13
12
21
A
5
4
6
8
2
1
3

Fig. 4

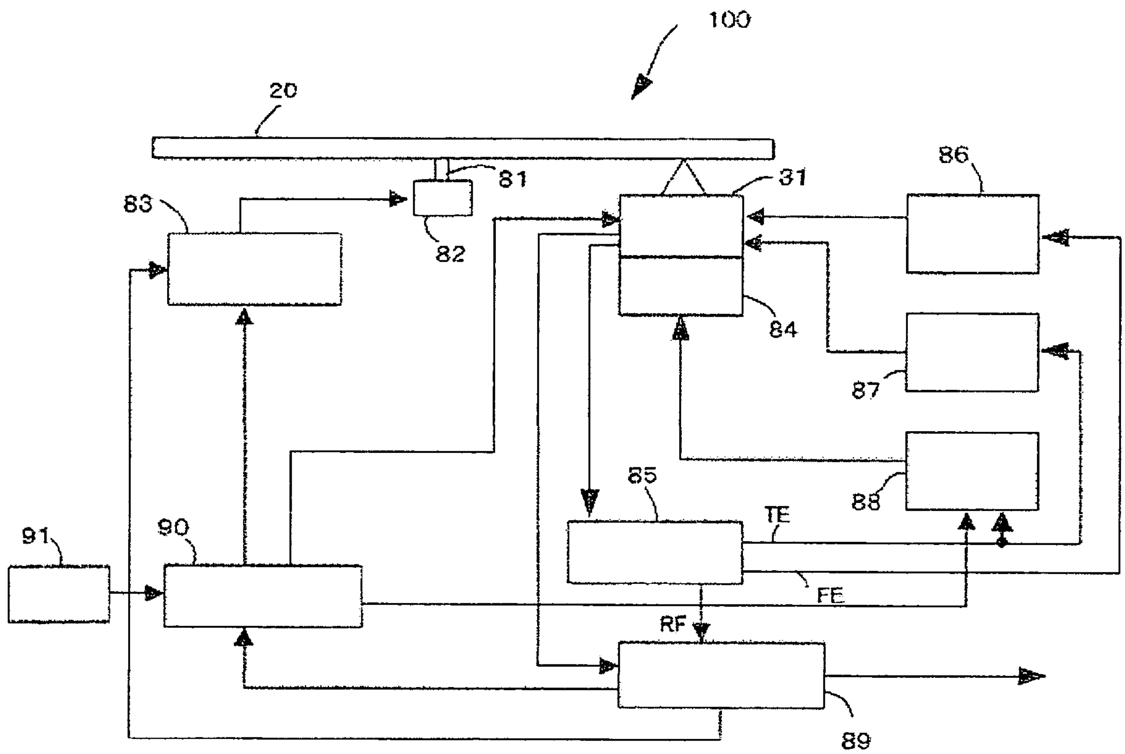
100
20
81
31
86
83
82
84
87
85
88
TE
91
90
FE
RF
89

Fig. 5

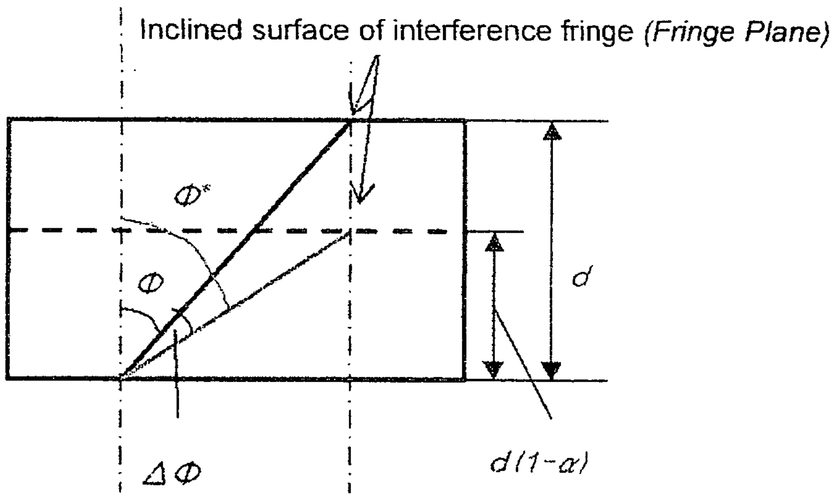
Inclined surface of interference fringe (Fringe Plane)
Φ*
Φ
d
ΔΦ
d(1-α)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11311936 A
- US 20020114027 A1
- JP 2005502918 PCT
- US 20030087104 A1
- US 4959284 A
- DE 2830927 A1
- JP 58015603 A
- JP 58040302 A
- JP 59028328 A
- JP 60053300 A
- JP 61009621 A
- JP 62003842 A
- JP 59089303 A
- JP 60060104 A


### Non-patent literature cited in the description


- **Hansch, C. ; Leo, A. ; Taft, R. W.** *Chem. Rev.,* 1991, vol. 91, 165-195
- *Macromolecules,* 1994, vol. 27, 7935
- *Macromolecules,* 1996, vol. 29, 6983
- *Macromolecules,* 2000, vol. 33, 6722
- *J. Polym. Sci.: Part A Polym. Chem.,* 2001, vol. 39, 202
- *Research Disclosure,* December 1980, vol. 200
- Sensitizers. Kodansha, 1987, 160-163
- The Chemistry of Functional Dyes. CMC Press, 1981, 393-416
- *coloring Materials,* 1987, vol. 60 (4), 212-224